# EUROPEAN PATENT APPLICATION

(11) **EP 1 122 718 A2**
(43) Date of publication of application: **08.08.2001**
(21) Application number: 01102338.9
(22) Date of filing: 01.02.2001
(51) Int. Cl.: G11B 5/00, G11B 5/74, G11B 5/82, G11B 5/596

(54) **Method for forming a magnetic pattern in a magnetic recording medium, method for producing a magnetic recording medium, magnetic pattern forming device, magnetic recording medium and magnetic recording device**

(30) Priority: 03.02.2000 JP 2000025854; 25.02.2000 JP 2000048721; 08.05.2000 JP 2000134611; 25.08.2000 JP 2000255876
(71) Applicant: MITSUBISHI CHEMICAL CORPORATION, Chiyoda-ku, Tokyo 100-0005 (JP)
(72) Inventor: Ikeda, Hiroyuki, Mitsubishi Chemical Corporation, Yokohama-shi, Kanagawa (JP); Arita, Youji, Mitsubishi Chemical Corporation, Yokohama-shi, Kanagawa (JP); Kawashima, Masahiro, Mitsubishi Chemical Corporat., Yokohama-shi, Kanagawa (JP); Kuriwada, Takeshi, Mitsubishi Chemical Corporation, Yokohama-shi, Kanagawa (JP); Seo, Yuzo, Mitsubishi Chemical Corporation, Yokohama-shi, Kanagawa (JP)
(74) Representative: TER MEER STEINMEISTER & PARTNER GbR

(57) **Abstract**

A method for forming a magnetic pattern in a magnetic recording medium (101) having a magnetic layer, a protective layer and a lubricant layer formed on a substrate in this order, wherein the method includes a step of heating locally the magnetic layer and a step of applying an external magnetic field (104) to the magnetic layer. The method can form a magnetic pattern of high density in the magnetic recording medium accurately with the simplest way in a short time. Further, magnetic recording medium and a magnetic recording device capable of recording information at a high density can be provided in a short time and in an economical manner.

## Description

The present invention relates to a method for forming a magnetic pattern in a magnetic recording medium used for a magnetic recording device, a magnetic recording medium or a magnetic recording device. In particular, the present invention relates to a method for forming a magnetic pattern in a magnetic recording medium, a magnetic recording medium or a magnetic recording device wherein the magnetic recording medium has a magnetic layer, a protective layer and a lubricant layer, and a flying type/contact type magnetic head is used for recording or reproducing.

Magnetic recording devices represented by a magnetic disk device (a hard disk drive) have widely been used as external memory devices for information processing devices such as computers, and have recently been used as recording devices for devices for recording dynamic images or set-top boxes.

A typical magnetic disk device comprises a shaft for holding a single or plurality of magnetic disks by penetrating the center of the magnetic disk or disks, a motor for rotating the magnetic disk or disks which is or are connected to the shaft by interposing a bearing or bearings, a magnetic head for recording/reproducing information, an arm for supporting the magnetic head and an actuator for moving the magnetic head via the arm to a desired position on the magnetic recording medium. As the recording/reproducing head, a flying type magnetic head capable of moving above the magnetic recording medium at a constant flying height is generally used.

Other than the flying height magnetic head, a contact type magnetic head is proposed in order to make the distance to the medium closer.

The magnetic recording medium to be placed in the magnetic disk device is prepared generally by forming a NiP layer on the surface of a substrate comprising an aluminum alloy, applying a smoothing treatment, a texturing treatment or the like thereon, and then, forming a metallic underlayer, a magnetic layer (an information recording layer), a protective layer, a lubricant layer and the like in this order thereon. Or, it is prepared by forming a metallic underlayer, a magnetic layer (an information recording layer), a protective layer, a lubricant layer and the like on the surface of a substrate made of glass or the like. The magnetic recording medium includes a longitudinal magnetic recording medium and a perpendicular magnetic recording medium. In the longitudinal magnetic recording medium, longitudinal recording is generally conducted.

The speed of making the density of magnetic recording media higher is increased year by year, and various techniques for increasing the density have been proposed. For example, there are attempts to make the flying height of the magnetic head smaller, to employ a GMR head as the magnetic head, to improve a magnetic material used for the recording layer of the magnetic disk so as to have a strong coercive force, and to reduce the space between tracks for recording information in the magnetic disk. For example, a density of track of 100 ktpi or more is needed in order to realize 100 Gbit/inch².

In each track, a magnetic pattern for controlling the magnetic head is formed. For example, it produces signals used for controlling the position of the magnetic head or signals used for synchronous control. When the space between adjacent information recording tracks is narrowed to increase the number of tracks, it is necessary to make signals for controlling the position of a data-recording/reproducing head (hereinbelow, referred to as "a servo signal") dense in a radial direction of the disk in response to the increased number of tracks, i.e., to generate the signals much more so that a precise control can be performed.

Further, there is an increased demand for widening a data recording area to increase the data recording capacity by reducing the surface area other than the area used for recording data, namely, an area used for the servo signals and gap portions between the servo areas and the data recording areas. For this purpose, it is necessary to increase an output of the servo signals or to increase the accuracy of synchronizing signals.

As a conventional method used widely for manufacture, an opening was formed in the vicinity of the head actuator of the drive (magnetic recording device), a pin with an encoder was inserted to the opening to engage the actuator with the pin whereby servo signals were recorded by moving the head to a correct position. However, such method encountered difficulty in recording correctly the servo signals because the position of the gravity center of the actuator was different from the position of the gravity center of a positioning mechanism, so that highly accurate track position control could not be obtained.

On the other hand, there is a proposal that laser beams are irradiated to a magnetic disk to deform locally the surface of the disk whereby minute projections and recesses are physically formed so that servo signals are produced by the minute projections and recesses. In this technique, however, there were such problems that the formed projections and recesses made the flying type magnetic head unstable to affect adversely recording or reproducing of information; laser beams having a large power was necessary for forming the projections and recesses, thus being costly, and it took much time to form the projections and recesses one by one.

In view of the above, some servo signal forming methods were proposed.

As an example, there is a method that a servo pattern is formed in a master disk having a magnetic layer of high coercive force, and the master disk is brought to close contact with a magnetic recording medium and then, an auxiliary magnetic field is applied to the medium from the outside whereby a magnetic pattern is printed (U.S.P. 5,991,104).

As another example, there is a method that a medium is previously magnetized along a certain direction, a ferromagnetic layer comprising a soft magnetic layer is formed by patterning on a master disk, and the master disk is brought to close contact with the medium and then, an external magnetic field is applied. The soft magnetic layer functions as a shield, and a magnetic pattern is printed to an unshielded area (JP-A-50-60212 (U.S.P. 3,869,711), (JP-A-10-40544 (EP915456), and Digest of InterMag 2000, GT-06).

With respect to forming a shield or using a magnetic recording source, the above-mentioned techniques use a master disk, and a magnetic pattern is formed in the medium by applying a strong magnetic field.

The intensity of a magnetic field generally depends on distances. When a magnetic pattern is recorded by applying a magnetic field, the transition of the magnetic pattern is apt to be unclear due to a leaking magnetic field. Accordingly, it is essential to bring the master disk to close contact with the medium in order to minimize the influence of the leaking magnetic field. As the magnetic pattern is finer, it is necessary to bring them to close contact without any gap. Usually, the both members are press-contacted by using vacuum suction.

Further, the higher the coercive force of the medium is, the larger the magnetic filed used for the transfer is, and accordingly, the leaking magnetic field becomes large. Therefore, perfect close contact is needed.

The above-mentioned techniques are applicable to a magnetic disk having a low coercive force or a flexible floppy disk easy to press contact. However, it is very difficult for these techniques to apply a magnetic disk for high density recording comprising a hard substrate wherein the coercive force is 3,000 Oe or more.

Namely, in the magnetic disk comprising a hard substrate, there was possibility that fine dust deposits thereon at the time of close contact whereby a defect was resulted in the medium or the expensive master disk is damaged. In a case of a glass substrate, in particular, there was a problem that the deposition of dust may cause insufficient close contact, so that it might be impossible to conduct magnetic printing, or a crack was resulted in the magnetic recording medium.

Further, in the technique described in JP-A-50-60212 (U.S.P. 3,869,711), there was such problem that a pattern having an angle oblique to a direction of tracks in a disk, although recording is possible, was limited to a pattern which was weak in signal intensity. For a magnetic recording medium having a high coercive force of 2,000-2,500 Oe or more, it is indispensable that for a ferromagnetic material (for a shielding material) for forming a pattern in the master disk, permalloy or a soft magnetic material having a large saturation magnetic flux density such as sendust is used in order to assure a sufficient magnetic field intensity for printing.

However, in the case of the oblique pattern, a magnetic field formed by reversing magnetization was oriented in a direction perpendicular to the gap produced by the ferromagnetic layer of the master disk, and it was impossible to incline the magnetization in a desired direction. As a result, a part of the magnetic field escapes into the ferromagnetic layer and a sufficient magnetic field could not be applied to a desired position in magnetic printing whereby a sufficient pattern of reversed magnetization could not be obtained, and it was difficult to produce signals of high intensity. The reduction of a reproducing output by using the oblique magnetic pattern was larger than the reduction by an azimuth loss, in comparison with a magnetic pattern perpendicular to the tracks.

It is an object of the present invention to provide a magnetic pattern forming method capable of forming efficiently and accurately various fine magnetic patterns without damaging the medium or the mask and increasing a defect in the medium.

It is an object of the present invention to provide a magnetic recording medium and a magnetic recording device capable of high density recording, which can be produced in a short time in an economical manner.

The inventors of this application have studied extensively on the problems described above and have achieved the present invention by finding the fact that a magnetic pattern can effectively and accurately be formed in a magnetic recording medium by combining a step of heating locally the magnetic layer and a step of applying an external magnetic field to the magnetic layer.

In accordance with a first aspect of the present invention, there is provided a method for forming a magnetic pattern in a magnetic recording medium having a magnetic layer, a protective layer and a lubricant layer formed on a substrate in this order, the method being characterized by comprising a step of heating locally the magnetic layer and a step of applying an external magnetic field to the magnetic layer.

According to a second aspect of the present invention, there is provided a magnetic recording medium in which a magnetic pattern is formed by the magnetic pattern forming method described in the first aspect of the present invention.

According to a third aspect of the present invention, there is provided a magnetic recording device comprising a magnetic recording medium in which a magnetic pattern is formed by the magnetic pattern forming method described in the first aspect, driving means for driving the magnetic recording medium in a recording direction, a magnetic head having a recording portion and a reproducing portion, means for moving relatively the magnetic head with respect to the magnetic recording medium, and recording/reproducing signal processing means which supplies a recording signal to the magnetic head and receives a reproducing signal from the magnetic head.

According to a fourth aspect of the present invention, there is provided a magnetic pattern forming device wherein a magnetic pattern is formed in a magnetic recording medium having a magnetic layer on a substrate by using a step of irradiating energy beams to the magnetic recording medium to locally heat the magnetic layer, and a step of applying an external magnetic field to the magnetic layer, said magnetic pattern forming device being characterized by comprising medium holding means for holding the magnetic recording medium, external magnetic field applying means for applying the external magnetic field to the magnetic recording medium, an energy beam source for emitting energy beams, energy beam irradiation means for irradiating the energy beams emitted from the energy beam source to the magnetic recording medium, and a mask which is located between the energy beam source and the magnetic recording medium to change the intensity distribution of the energy beams in response to a magnetic pattern to be formed.

According to a fifth aspect of the present invention, there is provided a method for producing a magnetic recording medium having a magnetic layer, a protective layer and a lubricant layer formed on a substrate in this order wherein a magnetic pattern is formed in the magnetic layer, the method being characterized by comprising a step of forming the magnetic layer and the protective layer on the substrate, a step of forming the lubricant layer on the protective layer, and a step of forming the magnetic pattern by heating locally the magnetic layer together with the application of an external magnetic field.

In drawings:
Figure 1 is a diagram for explaining an example of a magnetic pattern forming method of the present invention;
Figures 2(a)-2(c) are diagrams for explaining another example of the magnetic pattern forming method of the present invention;
Figure 3(a) is a diagram vertically sectioned of an example showing a disk holding portion and a portion applied with a magnetic field in the magnetic pattern forming device of the present invention;
Figure 3(b) is a diagram showing the disk holding portion and the portion applied with a magnetic field in the magnetic pattern forming device shown in Figure 3(a);
Figure 4 is a diagram vertically sectioned of an example showing a disk holding portion and a portion applied with a magnetic field in the magnetic pattern forming device of the present invention;
Figure 5 is a diagram of an example of the optical system for irradiating energy beams according to the present invention;
Figure 6 is a diagram showing an energy density distribution of energy beams;
Figure 7 is a diagram vertically sectioned of an example showing a disk holding portion and a portion applied with a magnetic field in the magnetic pattern forming device of the present invention;
Figure 8 is a diagram of an example of the optical system for irradiating energy beams according to the present invention;
Figure 9 is a diagram of another example of the optical system for irradiating energy beams according to the present invention;
Figure 10 is a diagram showing an example of a shading plate used in the present invention;
Figure 11 is a longitudinally cross-sectioned view showing the structure of the main portion of the disk according to the present invention;
Figure 12 is a longitudinally cross-sectioned view showing the structure of the main portion of the disk according to the present invention;
Figure 13 is a longitudinally cross-sectioned view showing the structure of the main portion of the disk according to the present invention;
Figure 14 is a longitudinally cross-sectioned view showing the structure of the main portion of the disk according to the present invention;
Figure 15 is a longitudinally cross-sectioned view showing the structure of the main portion of the disk according to the present invention;
Figure 16 is a longitudinally cross-sectioned view showing the structure of the main portion of the disk according to the present invention;
Figure 17 is a diagram of an example of the mask used in an embodiment of the present invention;
Figure 18 is a diagram of another example of the mask used in an embodiment of the present invention;
Figure 19 is a diagram of another example of the mask used in an embodiment of the present invention;
Figure 20 is a diagram showing an example of the magnetic pattern forming device of the present invention;
Figure 21 is a diagram showing another example of the magnetic pattern forming device;
Figure 22 is a diagram showing another example of the magnetic pattern forming device;
Figure 23 is a diagram of an example of the optical system for irradiating laser according to the present invention;
Figures 24(a) and 24(b) show respectively waveforms of reproducing signals in an embodiment of the present invention;
Figure 24(c) shows a microphotograph of a magnetic pattern obtained in an example;
Figures 25(a) and 25(b) are diagrams showing results of evaluation to missing pulses in an example of the present invention;
Figure 26 shows a microphotograph of a magnetic pattern obtained in an example of the present invention;
Figures 27(a)-27(c) show respectively the waveforms of reproducing signals in an example of the present invention;
Figures 28(a) and 28(b) are diagrams of the mask used in an embodiment of the present invention;
Figure 29 is a diagram for explaining another example of the external magnetic field applying means;
Figure 30 is a diagram showing another example of the external magnetic field applying means; and
Figure 31 is a diagram showing another example of the external magnetic field applying means.

The present invention will be described in detail.

In the first aspect of the present invention, a magnetic pattern is formed on a magnetic recording medium having a magnetic layer, a protective layer and a lubricant layer formed on a substrate in this order by combining a step of heating locally the magnetic layer and a step of applying an external magnetic field to the magnetic layer.

According to the present invention, it is unnecessary to use a strong external magnetic field as by conventional techniques because locally heating and the application of an external magnetic field are combined in forming a magnetic pattern. Further, even when the magnetic field is applied to an area other than the heating area, the area is not magnetized, and accordingly, the patterning area can be limited to the heating area. Accordingly, the boundary of the magnetic domains is clear whereby a pattern wherein the magnetic transition width is small; the magnetic transition at the boundary of the magnetic domains is very steep, and the quality of output signals is high, can be formed.

Further, it is unnecessary to press-contact the medium to the master disk as in the conventional technique. Accordingly, there is no danger of damaging the medium or the mask and increasing a defect in the medium.

Further, the formation of the protective layer on the magnetic layer prevents a damage to the magnetic layer due to the collision of the magnetic head. The formation of the lubricant layer provides lubricating properties between the magnetic head and the medium with the result that a flying type/contact type magnetic head can be used. If the surface of the disk before the formation of a magnetic pattern has a defect such as a projection, dust or the like and energy beams are irradiated to the surface, there causes irregular reflection thereby resulting the disordering of a magnetic pattern to be formed at or around that area. Accordingly, in the present invention, it is important to use a medium of defect-free. Therefore, it is desirable to carry out inspection of defects by a magnetic head prior to the formation of the pattern to remove previously media having a defect. For the inspection by the magnetic head, a lubricant layer has to be previously formed on the medium. Accordingly, in the present invention, the lubricant layer should be formed before forming the magnetic pattern because it is the most efficient in the manufacture. In addition, since the method of the present invention does not create an uneven surface in the medium and a damage to or an increase of defect in the medium can be minimized, the surface roughness of the medium can be controlled to be small, and the operations of the magnetic head flying above or contacting to the medium can be stable. Accordingly, the distance between the magnetic layer and the head can be reduced by using the flying type/contact type head whereby the recording of information of high density can be conducted in comparison with an optical disk or an magneto-optical disk using a magnetic head of another type.

In order not to affect adversely the formation of a magnetic pattern, the lubricant layer is preferable be thin and is preferably 10 nm or less. However, the thickness of the layer is preferably 0.5 nm or more in order to obtain a sufficient lubricating performance.

The protective layer is to prevent a damage to the magnetic layer due to the collision of the head or the invasion of dust between the magnetic layer and the mask. In the present invention, the protective layer is essential in a sense of preventing the oxidation of the magnetic layer heated. The magnetic layer is generally oxidative. When it is heated, it is easily oxidized. In the present invention, since the magnetic layer is heated locally by energy beams, it is necessary to form previously the protective layer as an anti-oxidizing member on the magnetic layer.

It is preferable that the protective layer is thin because when the layer is too thick, thermal conduction in a lateral direction is resulted whereby the magnetic transition area of a magnetic pattern may dull. Further, in the magnetic recording medium, it is necessary to make a hard type protective layer thin in order to bring the distance between the head and the magnetic layer close to the limit. Accordingly, the thickness is preferably 50 nm or less. However, the thickness is preferably 0.1 nm or more in order to obtain sufficient durability.

A carbonic material is preferably used for the protective layer from the viewpoints of impact resistance and lubricating properties. In particular, diamond-like carbon is preferable because such material functions to prevent a damage to the magnetic layer by the application of energy beams and it is very strong to a damage of the magnetic layer by the collision of the head. The magnetic pattern forming method of the present invention can be applied to an opaque protective layer such as a carbonic protective layer.

According to the present invention, an uneven surface is not created in the medium and the master disk is not brought to contact with the medium. Accordingly, the surface roughness of the medium after the formation of a magnetic pattern can be kept in the same level as that before the formation, and there is no risk of causing unstability in running the flying type/contact type head. It is preferable that the surface roughness Ra is 3 nm or less. In this specification, the surface roughness Ra of the medium means the roughness of the medium surface without including the lubricant layer and has a value obtained by measuring a measurement length of 400 µm with a contact finger type surface roughness meter, calculating the obtained value according to JIS B0601.

The present invention is preferably applicable to the formation of a magnetic pattern having information for controlling recording/reproducing means. The information for controlling is to control recording/reproducing means such as a magnetic head. For example, the information for controlling includes a servo information which determines the position of the magnetic head to a data track, an address information showing a position of the magnetic head on the medium, an synchronous information for controlling the recording/reproducing speed of the magnetic head and the like. Further, the information for controlling includes a standard information based on which the servo information is written in later.

The magnetic pattern for controlling should be formed with high accuracy. In particular, the servo pattern is a pattern for controlling the position of data tracks. If the accuracy of the servo pattern is poor, position control to the head becomes rough and a data pattern of higher accuracy than the servo pattern can not be recorded logically. Accordingly, as the recording density of the medium is increased, the servo pattern should be formed with high accuracy. Accordingly, as the recording density of the medium is higher, the servo pattern should be formed highly accurately.

In the present invention, since highly accurate servo pattern or standard pattern can be obtained, the present invention provides a remarkable effect when it is applied to, in particular, a magnetic recording medium of high density recording such as one having a track density of 40 kTPI or more.

Further, since a magnetic pattern extending obliquely with respect to tracks can preferably be formed, it is particularly suitable for an oblique pattern for phase servo signals.

The present invention is advantageous in that a servo pattern can be recorded beyond an area where the head is movable without using a magnetic head. Accordingly, even when the head is out of a data recording area, a servo pattern detectable range is widened, hence, the head can easily be returned.

Further, in accordance with the present invention, it has been found that a fine magnetic pattern having a minimum width of 2 µm or less can be formed accurately.

It has been considered to be difficult to form accurately a pattern in a size of the order of µm in a case that when energy beams are irradiated to a medium through a gap formed between the medium and a mask (mask exposure), diffraction of the energy beams is resulted by the mask whereby the outer configuration of the pattern becomes unclear.

In the present invention, however, the entirety of an energy beam irradiation area is not magnetized by an external magnetic field but only an area heated to a magnetization erasing temperature or more in the irradiating area is magnetized. Namely, when the heating temperature does not exceed the threshold value, there is no influence of the external magnetic field, and the unclearness of the pattern caused by the diffraction light can fairly be reduced whereby a fine pattern in the order of µm can be formed. There is no upper limit in forming patterns, and a fine pattern can theoretically formed to the extent of the limit of the waveform of the energy beams. For example, with use of excimer laser, a pattern in the order of about 100 nm is possible.

In the present invention, the minimum width of a pattern means the smallest length in the pattern. For example, it corresponds to a short side in a rectangular pattern, the diameter in a circular pattern and a short diameter in an elliptic pattern.

According to the method of the present invention, a precise magnetic pattern can easily be formed in a magnetic disk in a short time while a defect can be minimized and the surface roughness is kept to be small. Accordingly, effect in practical use is high in the application of this method to a medium for recording/reproducing information with a flying type/contact type magnetic head.

There has been proposed in a fairly long time ago to apply to a magneto-optical recording medium a technique that light is irradiated to it through a mask to thereby form magnetic domains (e.g., "High density magnetic holography using non-crystal thin TbFc film (1983, November), the 7th Japan applied magnetism academy lecture summaries, 9pA-11"), JP-A-60-64376, JP-A-63-166050, JP-A-60-35336 (EP125535A)). The magneto-optical recording medium means a medium to be reproduced by employing Kerr effect or Faraday effect.

However, the proposed technique has not been practiced since in the magneto-optical recording medium, projections and recesses for a control information or guide grooves for tracking are formed in the resinous substrate. In the magneto-optical recording medium, the distance between the recording layer and the optical head is about 1 mm, and accordingly, no problem is caused even though there are projections and recesses in the recording layer. It is unnecessary to form magnetic patterns for the control information because injection molding which is inexpensive and convenient can be used for forming the projections and recesses in the resinous substrate.

On the other hand, recording and reproducing are conducted to the magnetic recording medium with use of a flying type magnetic head. Accordingly, it has a unique structure that the protective layer and the lubricant layer are provided to protect the magnetic layer, and the formation of projections and recesses in the substrate is not possible. In the present invention, a magnetic pattern can be formed even in such magnetic recording medium by combining a heating treatment and an external magnetic filed applying treatment.

In the following, description will be made as to a magnetic disk which is representative of the magnetic recording medium.

In the present invention, there are the following 4 methods in the combination of a step of heating locally the magnetic layer and a step of applying an external magnetic field to the magnetic layer.

Method 1: Before heating, a strong external magnetic field is applied to a magnetic layer to magnetize it uniformly in a desired direction, then, a desired area of the magnetic layer is heated to a magnetization erasing temperature, e.g., around Curie temperature to erase magnetism whereby magnetic pattern is formed. In this method, the magnetic pattern can be formed by the easiest way. Further, since the magnetic layer is magnetized uniformly, magnetic recording can be conducted as usual after the formation of the magnetic pattern by this method.

Method 2: Before heating, a strong external magnetic field is applied to a magnetic layer to magnetize it uniformly in a desired direction, then, a desired area of the magnetic layer is heated to a magnetization erasing temperature, e.g., around Curie temperature, and at the same time, a weak magnetic field is applied to that area in a direction different from the direction of uniform magnetization to thereby erase magnetism whereby a magnetic pattern is formed. In this method, the perfect erasing is obtainable, and therefore, a magnetic pattern capable of producing strong signals can be obtained.

Method 3: Heating and the application of a weak external magnetic field are conducted simultaneously to thereby magnetize only the heated area in a direction along the external magnetic field whereby a magnetic pattern is formed. In this method, the magnetic pattern can be formed by the easiest way. Further, the external magnetic field to be used may be weak.

Method 4: Before heating, a strong external magnetic field is applied to a magnetic layer to magnetize it uniformly in a desired direction, and then, a desired area of the magnetic layer is heated and at the same time, a weak magnetic field is applied to it in a direction opposite to the direction before the heating to thereby magnetize the area whereby a magnetic pattern is formed. In this method, a magnetic pattern capable of producing the strongest signals and excellent C/N and S/N is obtainable.

First, the Method 1 will be described in more detail.

A strong external magnetic field is applied to the magnetic disk to magnetize uniformly the magnetic layer entirely in a desired magnetization direction. Means for applying the external magnetic field may be a magnetic head. Or a plurality of electromagnets or permanent magnets may be arranged so that magnetic fields are produced in desired magnetization directions. Further, a combination of such member with other means may be used.

The desired magnetization direction means the same or the opposite direction to the direction of moving the data recording/reproducing head (the direction of relative movement between the medium and the head) in a case of using a medium in which the easily magnetizable axis extends in a longitudinal direction. Further, the desired magnetization direction means a perpendicular direction (an upward direction or a downward direction) in a case of using a medium in which the easily magnetizable axis extends vertically with respect to the longitudinal direction. Accordingly, the external magnetic field is applied so as to magnetize the magnetic layer in a desired magnetization direction among the above-mentioned.

The uniform magnetization of the magnetic layer in its entirely in a desired direction means that the entirety of the magnetic layer is magnetized in substantially the same direction. In a strict sense, however, it is not always necessary to magnetize the entirety of the magnetic layer but only an area where a magnetic pattern is formed may be magnetized in the same direction.

The intensity of the magnetic field varies depending on the characteristics of the magnetic layer of the magnetic recording medium. It is preferable that the magnetic layer is magnetized by a magnetic field having a coercive force twice as much as the coercive force of the magnetic layer at room temperature. When it is weaker than that value, magnetization may be insufficient. However, the magnetization should be carried out with a coercive force of about 5 times or less than the coercive force of the magnetic layer at room temperature.

Then, the surface of the magnetic layer of the magnetic disk is heated partially to a magnetization erasing temperature of the magnetic layer, e.g., around Curie temperature to thereby erase magnetism. In this case, the magnetized area can not perfectly be erased, and a state that the magnetic layer is magnetized weaker than the uniformly magnetized area in the desired magnetization direction may result.

In the Method 2, the direction and the intensity of the external magnetic field before the heating are the same as those in Method 1. The direction of the magnetic field applied at the same time of the heating is a direction perpendicular to the longitudinal direction in a case of a medium in which the easily magnetizable axis extends in the longitudinal direction, or a longitudinal direction of the medium in a case that the easily magnetizable axis extends perpendicular to the longitudinal direction. The magnetization can be erased by applying such magnetic field.

Further, the intensity of the magnetic field varies depending on the characteristics of the magnetic layer of the magnetic recording medium. The higher the intensity of the magnetic field is, the easier the magnetic pattern is formed. However, the intensity of the applicable magnetic field should be smaller than the coercive force of the magnetic layer at room temperature. It is preferable to apply a magnetic field having a coercive force of 1/8 or more of the coercive force of the magnetic layer at room temperature. When it is lower than that value, the heated area may be magnetized again in the same direction as its circumferential area by the influence of magnetic domains in the circumferential area at a cooling time.

However, the applicable magnetic field is preferably 2/3 times or less of the coercive force of the magnetic layer at room temperature. When it has a greater value, the magnetic domains in the circumferential areas of the heated area may be influenced. More preferably, it is 1/2 times or less of the coercive force of the magnetic layer at room temperature.

Heating should be conducted to the extent that the coercive force of the magnetic layer is decreased. For example, the temperature for heating is the magnetization erasing temperature or around Curie temperature. The heating is preferably at 100°C or more. The magnetic layer, which suffers easily the influence of an external magnetic field at 100°C or less, shows a low stability of magnetic domains at room temperature. Further, heating temperature is preferably 700°C or less. When the heating temperature exceed that temperature, there is a possibility that the magnetic layer is deformed.

In the method 3, the direction of the external magnetic field applied at the same time of the heating varies depending on the kind of the magnetic layer of the magnetic recording medium. When a medium in which the easily magnetizable axis extends in a longitudinal direction is used, the external magnetic field should be applied to the magnetic layer so that the magnetic layer is magnetized in the same or the opposite direction to the direction of moving the data writing/reproducing head (the direction of relative movement of the medium and the magnetic head). When a medium in which the easily magnetizable axis extends perpendicular to the longitudinal direction is used, the magnetic field should be applied to the magnetic layer so that it is magnetized in the perpendicular direction (an upward direction or a downward direction).

The intensity of the magnetic field is the same as the intensity of the external magnetic field applied together with the heating in Method 2. Further, the heating temperature is also the same as that in Method 2.

In Method 4, the direction and the intensity of the external magnetic field applied before the heating are the same as those in Method 1.

Although, the intensity of the magnetic field applied together with the heating is the same as that in Method 2, the direction of the magnetic field is opposite to that before the heating, so that the magnetic layer is magnetized locally in the opposite direction. The heating temperature is the same as in Method 2.

According to Method 4, a magnetic pattern is preferably formed by applying the external magnetic field to the magnetic layer to magnetize it uniformly in a desired direction, and heating locally the magnetic layer and at the same time, applying the external magnetic field to thereby magnetize the heated area in the direction opposite to the desired direction. According to this method, magnetic domains having a magnetic direction of one direction and magnetic domains having the opposite direction can clearly be formed, and a magnetic pattern having a strong signal intensity and excellent C/N and S/N is obtainable.

Or, according to Method 1, it is possible to produce a magnetic recording medium wherein the magnetic layer having a pattern without having a magnetized area in its local area, or a pattern having a weakly magnetized area in its local area in the desired direction, is formed in the area magnetized uniformly in the desired direction. Such medium can be produced easily in a very short time by magnetizing uniformly the entire surface of the medium in a lump, followed by exposing to light through a mask to erase magnetism.

In the next, explanation will be made as to the method of heating locally the magnetic layer in the present invention.

It is sufficient for heating means to have the function of heating locally the surface of the magnetic layer. However, in consideration of a problem of the diffusion of heat to undesired portions and controllability, it is preferable to use energy beams such as laser because of being easy for controlling the power and the size of an area to be heated.

In this case, use of a mask is preferable because a plurality of magnetic patterns can be formed at once by irradiating the energy beams through the mask. This technique can reduce a time for a magnetic pattern forming step and is easy in use.

Further, it is preferable to form the energy beams into pulsed energy beams rather than a continuous irradiation, in order to control the position of a heated area and heating temperature.

In particular, use of a pulsed laser light source is desirable. The pulsed laser source is to oscillate intermittently laser in a state of pulse. Use of the pulsed laser source is very preferable because laser having a high peak value of power can be irradiated in a very short time and the storage of heat is minimized, in comparison with the case that continuous laser is changed to pulsed laser by an optical device such as an acoustic optical device (AO) or an electro-optical device (EO).

When the continuous laser is changed to pulsed laser by such optical device, the magnitude of power in a pulse is substantially equal over its pulse width. On the other hand, in the pulsed laser source, for example, energy is stored by resonance in the pulsed laser source, and laser beams as a pulse are emitted at a time. Accordingly, the power of a pulse is very large at its peak, and decreases after then. In the present invention, use of the pulsed laser source is suitable because in the formation of a magnetic pattern having a high contrast and high accuracy, it is preferred to heat quickly and to cool quickly.

The medium surface in which a magnetic pattern is formed should have a large difference of temperature between an irradiation time and a non-irradiation time of pulsed energy beams in order to increase the contrast ratio of the pattern or increase the recording density. Accordingly, the substrate is preferably kept at room temperature or lower in a non-irradiation time of pulsed energy beams. The room temperature is about 25°C. When the medium is heated locally by the pulsed energy beams and at the same time, an external magnetic field is applied thereto, the external magnetic field may be applied continuously or in a pulse form in synchronism with the pulsed energy beams.

It is preferred that the wavelength of the energy beams is 1,100 nm or less. When the wavelength is within such range, a fine magnetic pattern is easily formed because a diffraction effect is small and the resolution is increased. More preferably, the wavelength is 600 nm or less. Such wavelength gives not only a high resolution but also a small diffraction whereby the space between the mask and the magnetic recording medium can be relatively wide, hence, handling is easy, and the assembling of a magnetic pattern forming device is easy. Further, the wavelength is preferably 150 nm or more. When it is less than 150 nm, the absorption of heat by synthesized quartz used for the mask is large, and insufficient heating may be caused. When the wavelength is 350 nm or more, optical glass can be used for the mask.

Specifically, excimer laser (248 nm), a second harmonic wave (532 nm), a 3rd harmonic wave (355 nm) or a 4th harmonic wave (266 nm) of Q-switch laser of YAG (1,064 nm), Ar laser (488 nm, 514 nm) or ruby laser (694 nm) can be used.

Although the power of the energy beams can be chosen with the optimum value in consideration of the magnitude of the external magnetic field, it is preferable that the power of the pulsed energy beams per pulse is 1,000 mJ/cm² or less. The application of a larger power than that of the above value may damage the surface of the magnetic recording medium by the pulsed energy beams to cause deformation. When the surface roughness Ra is increased to 3 nm or more, or the degree of undulation Wa is increased to 5 nm or more by the deformation, a trouble may be caused in the movement of the flying type/contact type head.

Therefore, the power is preferably 500 mJ/cm² or less, more preferably, 100 mJ/cm² or less. In this range, a magnetic pattern having a high resolution is easily formed even in a case of using a substrate having relatively large thermal diffusion properties. Further, the power is preferably 10 mJ/cm² or more. When smaller than that value, temperature rise in the magnetic layer is suppressed and it is difficult to perform magnetic printing.

When the substrate used in the present invention is composed of metal such as Al or an alloy thereof, the substrate has a large thermal conductivity. In this case, the power is preferably in a range of 30-120 mJ/cm² so as not to cause the deformation of a magnetic pattern by the spreading of heat to a local area to an undesired area, or not to cause a physical damage to the substrate by an excessive energy.

In a case that the substrate is made of ceramics such as glass, the power is preferably in a range of 10-100 mJ/cm² because the thermal conduction is small in comparison with Al or the like and the storage of heat at the position where the pulsed energy beams are irradiated is large.

In a case that the substrate is made of resin such as polycarbonate, the power is preferably in a range of 10-80 mJ/cm² because the storage of heat at the position where the pulsed energy beams are irradiated, is large and the melting point is low in comparison with glass.

Further, when a damage to the magnetic layer, the protective layer or the lubricant layer by the energy beams is anxious, it is possible to take a way to increase the intensity of a magnetic field applied at the same time of the application of the pulsed energy beams provided that the power is made small. For example, a possibly large intensity of 25-75% of the coercive force at room temperature is applied to a medium of longitudinal recording type to thereby reduce the energy of energy beams. In a case of a medium of perpendicular recording type, a possibly large intensity of 1-50% of the coercive force at room temperature should be applied to reduce the energy.

When the pulsed energy beams are irradiated to the magnetic layer through the protective layer and the lubricant layer, there is a case that the lubricant layer is coated on again after the irradiation in consideration of a damage (decomposition, polymerization) to the lubricant.

It is desirable that the pulse width of the pulsed energy beams is 1 µsec or less. When the pulse width is wider than the value, heat by the energy of the pulsed energy beams disperses in the magnetic recording medium whereby the resolution is apt to decrease. When the power per 1 pulse is equal, the pulse width should be made short so as to generate a strong energy at a time whereby the dispersion of heat is small and the resolution of a magnetic pattern tends to increase. More preferably, the pulse width is 100 nsec or less. By using the pulse width in that range, it is easy to form a magnetic pattern having a high resolution even when a substrate made of metal such as Al having a relatively large thermal dispersion is used. In forming a pattern having the minimum width of 2 µm or less, it is preferred to determine the pulse width to be 25 nsec or less. Namely, in considering the resolution significantly, the pulse width should be short as possible. Further, the pulse width is preferably 1 nsec or more because generated heat can be kept until the transition of magnetization in the magnetic layer is completed.

As a kind of pulse-like laser, there is laser capable of generating at a high frequency ultra-short pulses in a level of pico sec or femto sec such as mode-locked laser. In a period in which ultra-short pulses of high frequency are applied, the laser is not irradiated in a very short time between each ultra-short pulse. However, since the non-irradiation time is very short, the portion to be heated is not substantially cooled. Namely, an area which is once elevated in temperature to more than Curie temperature can be kept at a temperature higher than the Curie temperature.

In such case, accordingly, a continuous irradiation period (a continuous irradiation period including a time in which laser between each ultra-short pulse is not irradiated) is determined as 1 pulse. Further, the integration value of irradiation energy quantity in the continuous irradiation period is determined as power (mJ/cm²) per pulse.

Preferably, the intensity distribution of energy beams in an energy irradiation area is within 15% whereby the distribution of heat in the irradiated area can be suppressed to be small and the intensity distribution of magnetism of a magnetic pattern can be suppressed to be small. Accordingly, a magnetic pattern having a highly uniform intensity of signal can be formed when the signal intensity is read by using a magnetic head.

The intensity distribution of energy beams being within 15% means that the maximum value and the minimum value of the energy beams in an energy irradiation area are within ±7.5% of a mean value (a weighted mean value) respectively.

Energy beams such as laser generally have an intensity distribution (a density distribution of energy) in a beam spot. Even when the energy beams are irradiated to heat locally, there arises a different of temperature rise due to differences of energy density. Therefore, there occurs locally a difference of intensity in transferring due to uneven heating. When pulsed laser such as excimer laser or YAG-Q-switch laser is used, the intensity distribution at a beam spot is generally within about 30%.

Accordingly, the intensity distribution of energy beams at a beam spot should be suppressed to be within 15% by, for example, using an energy beam source having a small intensity distribution, by passing only an energy portion having a small intensity distribution of energy beams through a shade plate or the like wherein the transmitted portion may be expanded thereafter according to requirement, or by using a homogenizer or other optical elements.

Preferably, energy beams are previously subjected to an intensity distribution equalizing treatment whereby the distribution of heat in the irradiated area can be suppressed to be small and the distribution of the magnetic intensity of a magnetic pattern can be suppressed to be small. Accordingly, a magnetic pattern having a highly uniform intensity of signal can be formed when the signal intensity is read by using a magnetic head.

The intensity distribution equalizing treatment may be such a treatment of equalizing with use of a homogenizer or other optical elements, or a treatment of transmitting only a portion having a small intensity distribution of energy beams through a shade plate or a slit wherein the transmitted portion is expanded thereafter according to requirement.

Preferably, the energy beams are subjected to an equalizing treatment by optically dividing the energy beams into a plurality of portions and then, overlaying the divided portions. In this case, the energy beams can be utilized thoroughly and efficiently. In the present invention, it is desirable to irradiate energy beams of high intensity in a short time to heat the magnetic layer, and for this purpose, it is preferable to use energy without loss.

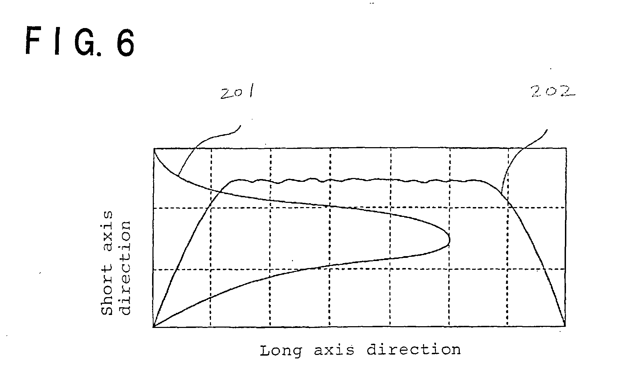

Figure 6 is a diagram for explaining an example of the intensity distribution of energy beams and a method for dividing energy beams. -Supposing that energy beams having an elliptic beam shape have a distribution 201 in a short axis direction and a distribution 202 in a long axis direction. In this case, the difference of intensity can be dispersed by dividing the length of beam in a short axis direction into, for example, three portions by a prism array (cylindrical lens) or the like and overlaying the three-divided portions, thus, the intensity distribution in a short axis direction can be equalized to a certain extent. Further, the intensity distribution in a long axis direction can be equalized to a certain extent by dividing the length of the beams in a long axis direction into 7 portions by the prism array (cylindrical lens) or the like, and then, overlaying the 7-divided portions. By combining both, beams having good uniformity as a whole and a small intensity distribution is obtainable. According to requirements, the division may be conducted for only one axis direction. When the intensity distribution is large, the number of division should be increased to increase uniformity.

When energy beams are passed through two or more prism arrays having the same axial direction, the same effect as a case of increasing the number of division can be obtained. Or, the intensity distributions in two axial directions may be divided at a time by using a fly eye lens having a number of lenses in two axial directions.

Alternatively, the intensity distribution can easily be equalized by passing the energy beams through an aspheric lens such as a cylindrical lens. In particular, when the energy beams have a small diameter of beam, a sufficient equalization can be performed even by using the above-mentioned technique, and also, the optical system can be simplified. The small diameter means a diameter of about 0.05-1 mm.

When the equalization by the above-mentioned treatment is insufficient, a shade plate may be additionally used to cut a peripheral portion of the beams, or choke the beams so as to provide a further equalization.

In the present invention, energy beams are preferably irradiated through a mask to heat a desired area locally. The use of a mask allows to form on the medium a magnetic pattern of desired shape. Accordingly, a complicated pattern or a unique pattern which is difficult to form in the conventional techniques can easily be formed.

In a phase servo system for a magnetic disk, for example, a magnetic pattern which extends, from an inner periphery to an outer periphery, obliquely or linearly to the diameter of tracks, is used. It was difficult to form a pattern continuous to the radial direction or a pattern oblique to the radial direction by the conventional servo pattern forming method wherein servo signals are recorded for each track while the disk is rotated. In the present invention, however, complicated calculation or complicated device structure are unnecessary, and such magnetic pattern can be formed easily and in a short time by irradiating the beams at a time.

The mask is not always necessary to cover the whole surface area of the magnetic disk but may be of a size having a repetition unit for forming a magnetic pattern. Such mask can be used by successively moving it to complete a desired pattern. Therefore, the mask can be simple and inexpensive.

The mask can be such one capable of changing the intensity distribution of energy beams so as to correspond to a magnetic pattern to be formed so that a density (intensity distribution) of energy beams is formed on the surface of the magnetic disk. As an example, there is a photomask having a transmitting portion for transmitting energy beams according to a pattern, or a holograms mask in which a hologram for imaging a specified pattern on the medium is recorded. Since such mask permits to form a plurality of magnetic pattern or a pattern of large surface area at a time, the magnetic pattern forming step can easily be performed in a short time. Although a sharp, clear pattern can be formed with use of the hologram mask even when the mask is separated far from the medium, the photomask is advantageous from the viewpoint of easiness and cost.

Material for the mask is not limited. However, when the mask is made of a non-magnetic material, a clear magnetic pattern can be formed uniformly even though it is in any shape of pattern, and uniform and strong reproducing signals can be obtained.

A mask of a material containing a ferromagnetic material is not desirable because the distribution of magnetic field is disturbed by magnetization. In a case of a pattern whose shape is oblique to a radial direction of a magnetic disk or a circular pattern extending in a radial direction of a magnetic disk and if a ferromagnetic material is used, it is difficult to obtain signals of high quality because the external magnetic field does not take sufficient opposite positions to each other in a magnetic transition area.

The mask is disposed between the light source for energy beams and the magnetic layer (the magnetic recording medium). When the accuracy of a magnetic pattern is considered to be dominant, it is preferred to contact the entire portion or a part of the mask to the medium whereby influence by the diffraction of laser beams can be minimized and a magnetic pattern having a high resolution can be formed. For example, when the mask is placed on the medium, there are a portion which contacts the medium and a portion which does not contact the medium due to the undulation of several µm resulted in the medium surface. However, a pressure of 100 g/cm² or less should be applied to the mask, hence, to the medium so as not to cause a trace of compression or a damage in the medium.

In order to minimize occurrence of a defect or a damage to the mask or the medium, it is preferable to form a space between the mask and the medium in at least an area for forming a magnetic pattern in the medium. The provision of the space can suppress the occurrence of a damage or a defect in the medium or the mask, which is caused by the deposition or invasion of foreign matters such as dust. Further, when the lubricant layer is formed before the formation of the magnetic pattern, the space is in particular preferably be formed between the mask and the medium so as to prevent the lubricant from depositing on the mask.

As a method for keeping a space between the mask and the magnetic pattern forming area of the magnetic recording medium, there is a method for keeping the both members at a predetermined distance. For example, a specified tool to keep the mask and the medium at a predetermined distance may be used. Further, spacers may be put between them at positions other than the magnetic pattern forming area. Further, the spacers may be formed integrally with the mask. When spacers are provided between the mask and the magnetic recording medium in an outer peripheral portion and/or an inner peripheral portion of the magnetic pattern forming area of the medium, they can correct the undulation of the surface of the magnetic recording medium whereby the accuracy in forming a magnetic pattern can be increased.

Explanation will be made in more detail with reference to drawings.

First, an example of a method for forming a magnetic pattern employing a photomask will be described.

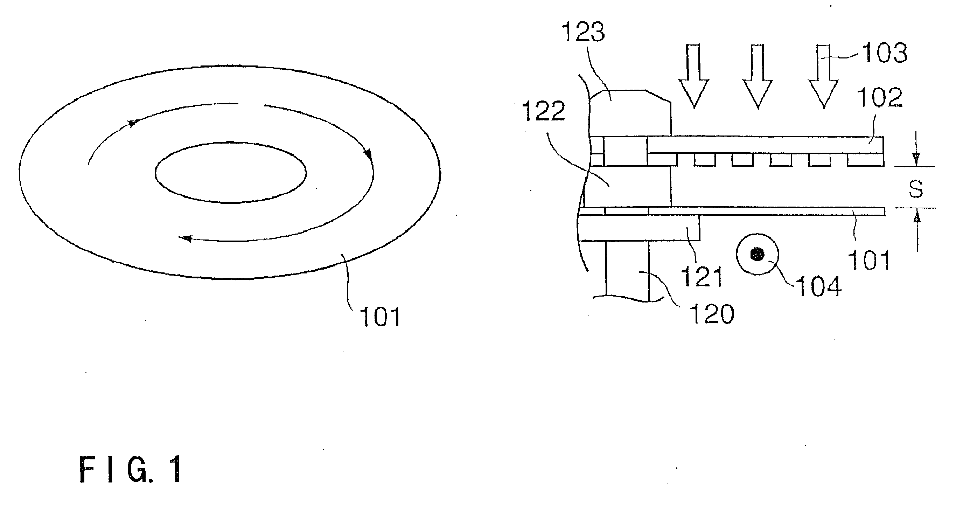

Figure 1 is a diagram showing an example of the magnetic pattern forming method using a photomask.

A magnetic disk 101 is previously magnetized uniformly in a direction along a circumferential direction by applying an external magnetic field. Then, the magnetic disk 101 is attached to a spindle 120. Specifically, the disk is placed on a turntable 101, and a photomask 102 is put on the disk by interposing a spacer 122. Further, a pressing plate 103 put on the photomask 102 is fixed by screws (not shown). Namely, a space S is provided between the magnetic disk 101 and the photomask 102. Then, pulsed laser beams 103 are irradiated, and at the same time, an external magnetic field 104 is applied. The direction of the applied external magnetic field is opposite to the direction of the external magnetic field used previously for the uniform magnetization.

A mask having a plurality of transmitting portions corresponding to a magnetic pattern to be formed, may be used. Through such mask, laser beams are irradiated to the magnetic layer. In this case, it is preferable that the diameter of beam is made large, or the shape of beam is formed in a longitudinally elongated elliptical shape, and the laser beams are irradiated to a plurality of tracks or a plurality of sectors for a magnetic pattern in a lump. Then, efficiency of recording can further be increased. Further, a problem of an increase of servo signal recording time with an increase of the capacity can be improved.

The photomask may be such a mask provided with transmitting portion or portions and a non-transmitting portion or portions according to a desired magnetic pattern. Such mask can be formed by sputtering metal such as Cr or the like on a transparent original disk such as quartz glass or soda lime glass, coating a photoresist thereon, and etching the photoresist. Thus, predetermined transmitting portions and non-transmitting portions can be formed. In this case, the portions having a Cr layer on the original disk correspond to portions which block energy beams, and portions exposing the original disk correspond to transmitting portions.

The mask thus prepared generally has an uneven surface wherein projecting portions do not transmit energy beams. The projecting portions are brought to close to the medium or they are brought to almost contact with the medium. Or, material for transmitting energy beams may be embedded in the recessed portions after the formation of the mask so that the surface area in slight contact with the medium is made flat.

Material for the spacer should be hard. Further, it is preferable that material for the spacer is not magnetized because the external magnetic field is used for forming the pattern. Metal such as stainless steel or copper or resin such as polyimide is preferably used. The height of the spacer is generally several µm or several hundred µm although it is optional.

An example of the magnetic pattern forming method employing a hologram mask will be described.

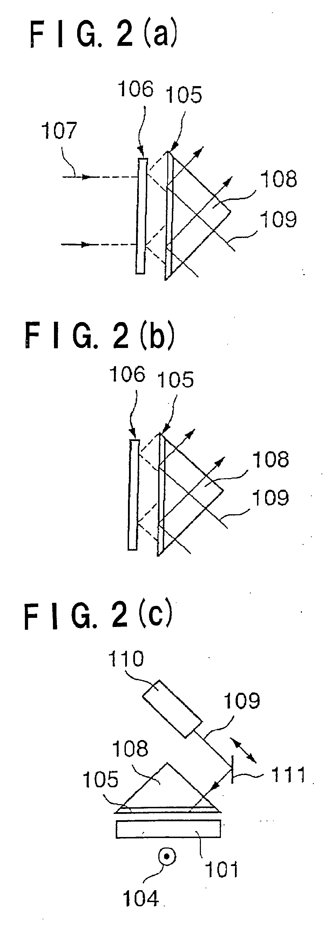

Figure 2 is a diagram showing an example of the magnetic pattern forming method using a hologram mask.

As shown in Figure 2(a), object light 107 is irradiated to a sheet of photopolymer 105 on a prism 108 through a photomask 106 in which transmitting portions and non-transmitting portions are formed according to a magnetic pattern to be formed in the magnetic disk. Reference light 109 is irradiated to the sheet of photopolymer 105 through the prism to record on the photopolymer 105 a hologram obtained by the interference of the object light 107 and the reference light 109.

Instead of using the photomask, a pattern to be exposed to light is obtained by calculation, and according to a result of the calculation, a hologram mask may be produced.

When the reference light 109 is irradiated through the prism as shown in Figure 2(b), a pattern according to a holographic image is formed at a predetermined distance from the photopolymer. By using this principle, laser light (reference light) 109 is irradiated from a laser light source 110 to the photopolymer 105 through the prism 108; a magnetic disk is placed in a plane in which the pattern according to holographic image is formed, and a reflective plate 111 is moved to scan the reference light 109 on the sheet of photopolymer 105, at the same time, an external magnetic field 104 is applied, whereby a magnetic pattern is formed (Figure 2(c)).

In a case that the external magnetic field is applied together with the heating, the external magnetic field should be applied simultaneously to the plurality of transmitting portions of the mask.

The minimum space between the mask and the magnetic recording medium is preferably 0.1 µm or more whereby a damage or a defect in the magnetic recording medium or the mask, which is caused by the deposition or invasion of foreign matters such as dust, can be suppressed. Namely, by determining the space to be 0.1 µm or more, the occurrence of unexpected contact of the magnetic pattern forming area with the mask due to the undulation of the surface of the medium can be prevented. Further, there is no problem that because the thermal conductivity of the medium changes depending on a portion of contact, easy magnetizability changes specifically at that portion of contact, and a magnetic pattern can not be formed as expected. More preferably, the minimum space is 0.2 µm or more. Further, the spacing should be 1 mm or less. When it is larger than that value, the diffraction of energy beams is large, and a magnetic pattern to be formed is apt to be unclear.

For example, when excimer laser (248 nm) is used to transfer a 2 × 2 µm pattern (a pattern having a transmitting portion of 2 µm and a non-transmitting portion of 2 µm alternately) formed in the photomask to the medium, it is necessary to keep the distance between the mask and the medium to be about 25-45 µm or less. When the distance exceeds that value, brightness and darkness in the pattern become unclear due to a diffraction phenomenon. In a case of a 1 × 1 µm pattern (pattern having a transmitting portion of 1 µm and a non-transmitting portion of 1 µm alternately), the distance should be about 10-15 µm or less.

In using the photomask, the distance between the mask and the medium should be short as possible within the above-mentioned range because as the distance is longer, the magnetic pattern becomes unclear due to the deflection of energy beams for irradiation. In order to improve this problem to obtain a more clear pattern, a slender transmitting portion or portions functioning as a diffraction grating should be formed at an outer side of the transmitting portion of the mask or means for functioning as a half-wave plate is provided at an outer side of the transmitting portion of the mask, whereby the deflection light can be canceled by the interference.

On the other hand, in using the hologram mask, the distance to the imaging plane for a pattern according to a holographic image is determinative. Accordingly, a space to the medium is adjusted based on the distance. As shown in Figure 2, the distance between the mask and the medium can be brought to closer by using the prism.

There is a case that magnetic layers are formed on both principal surfaces of the disk of a magnetic disk. In this case, the formation of the magnetic pattern according to the present invention may be conducted for each principal surface sequentially, or for both surfaces simultaneously by arranging masks, energy irradiation systems and means for applying an external magnetic field at both sides of the magnetic disk.

In a case that two or more magnetic layers are formed on a single surface and when each different pattern is to be formed in each magnetic layer, irradiated energy beams should be focused to each layer and heating be conducted to each layer separately whereby individual patterns can be formed.

In forming a magnetic pattern, it is preferred to form a structure for preventing re-irradiation of energy beams by disposing a shading plate capable of blocking selectively energy beams in an area where irradiation is undesirable, between the energy beam source and the mask or between the mask and the medium.

For the shading plate, such one blocking a certain wavelength of used energy beams is sufficient, or it is sufficient to reflect or absorb the energy beams. However, it is preferable that the plate has a good thermal conductivity and a high reflectivity because heat is generated by the absorption of energy beams whereby the heat affects adversely in forming a magnetic pattern. For example, a metallic plate such as Cr, Al, Fe or the like may be used.

Further, a reduced image forming technique is preferably used for the optical system. An image is formed on the medium surface by reducing patterned energy beams having the intensity distribution corresponding to a magnetic pattern to be formed. According to this technique, the accuracy of the magnetic pattern, which depends on the accuracy of patterning or alignment of the mask, is not restricted in comparison with a case that energy beams are throttled by an objective lens and then, the throttled beams are passed through the mask, i.e. a case of proximity exposure of light. Accordingly, a finer magnetic pattern can be formed with good accuracy. Further, there is little possibility of being influenced by dust because the mask is separated from the medium. Hereinbelow, this technique may be referred to as a reduced image forming technology (an imaging optical system).

The intensity distribution of energy beams emitted from a beam source is changed by the mask to form a reduced image on the medium surface through imaging means such as an imaging lens. Hereinbelow, the imaging lens may be referred to as a projection lens, and the reduced image may be referred to as a reduced projection.

The mask may be such one capable of providing a certain degree of intensity (a density) of energy beams on the medium according to a magnetic pattern to be formed. Such mask may be a photomask in which transmitting portions and non-transmitting portions of energy beams according to a pattern to be formed, or a hologram mask in which a hologram is recorded so as to form an image of a specified pattern on the medium, for example.

In the above-mentioned technique, imaging means are provided between the mask and the medium. In the conventional technique, when energy beams are irradiated to the medium to which a photomask contacts, the mask may be heated by the absorption of the energy beams depending on material used, and the temperature of the medium surface in close-contact to the photomask is also increased whereby a clear magnetic pattern may not be provided. According to the present invention, however, such problem can be eliminated.

Namely, the medium surface on which a magnetic pattern is formed should have a large temperature difference between the time of irradiating pulsed energy beams and the time of non-irradiation in order to increase the contrast ratio of the pattern or increase recording density. Accordingly, in the non-irradiation time of pulsed energy beams, the medium surface is preferably at room temperature or lower, wherein the room temperature is about 25°C.

Further, energy beams are introduced to the mask through a condenser lens, the intensity distribution of the energy beams can be equalized, and the energy beams can efficiently be introduced into an image forming lens.

The reduced image forming technique is applicable to form a magnetic pattern of any size or any shape as far as the minimum beam diameter of the energy beams and the maximum intensity of an external magnetic field are usable. A finer magnetic pattern provides a higher effect. When the least width of a magnetic pattern is 2 µm or less, an alignment process to the mask becomes in particular difficult. In this case, the above-mentioned technique is preferably used. The least width is more preferably 1 µm or less. There is no lower limit in size of the pattern to be formed. Theoretically, a fine pattern can be formed by using a nearly limit of wavelength of energy beams. For example, the wavelength of excimer laser is about 100 nm.

Further, according to this technique, a finer magnetic pattern can be formed by forming a reduced image. Accordingly, it provides a large effect in the application to the formation of a controlling pattern used for controlling a data recording/reproducing head.

According to this technique, a reduced image is formed by the imaging means through the mask. Accordingly, when the ratio of reduction is made large, a further fine pattern can be formed. In this case, however, since the beam diameter of energy beams becomes small by throttling the beam, the area where a pattern is formed at a time becomes small. Accordingly, this technique is suitable for a magnetic disk of high density and small diameter, in particular, a magnetic disk having a diameter of 65 mm or less.

Generally, a magnetic disk of small diameter, although it has a small recording surface area, is required to have a large recording capacity, and therefore, it has a very high recording density. This technique is preferably used for a magnetic disk having a diameter of 1.8 inches or less, in particular, a diameter of 1 inch or less.

For example, it is possible to record data at a time in a very small magnetic disk having a diameter of 1 inch or less. In a case of a perpendicular magnetic recording type magnetic disk, an external magnetic field can easily be applied to the entirety of the disk whereby information can instantaneously be recorded in the entire surface.

In spite of the above-mentioned, this technique can be applied to a magnetic recording medium having a large diameter such as one having a diameter of 3.5 in. In this case, the shape of the beam is formed to have a laterally elongated elliptical shape, and a magnetic pattern for a plurality of tracks or a plurality of sectors is irradiated in a lump, whereby recording efficiency is increased, a servo signal recording time can sufficiently be shortened in comparison with the conventional technique wherein servo signals are written by means of a magnetic head, and the accuracy is increased.

In the present invention, irradiation can be conducted by scanning energy beams on the medium whereby a wider area can be irradiated in a short time even when the beams are throttled to have a small diameter. For example, the scanning by the beam may be conducted by placing a part or the whole of an energy beam irradiating optical system on a slider, the slider being moved. Alternatively, a galvanometer or a f-θ lens may be used. The scanning of beams to the medium can be performed by introducing the energy beams into the f-θ lens through the galvanometer while the angle of the galvanometer is changed. In order to scan a wider range in a short time, it is preferable to generate at a high speed energy beams of short pulse.

In the present invention, preferably, pulsed energy beams are irradiated while the energy beam irradiation spot and the mask for the magnetic recording medium are relatively moved, wherein the irradiation of the pulsed energy beams is in synchronism with the relative movement.

An area to which energy beams can be irradiated at a time is limited to about ten to several tens mm, and it is difficult to irradiate the entire surface of a magnetic disk having a diameter of 3.5 in. or 2.5 in. at a time. Accordingly, it can be considered to perform the irradiation of energy beams by scanning continuously the medium surface. According to this method, however, double irradiation of energy beams or irradiation of long time to the same location is apt to occur.

In a method considered, a disk-like mask is fixed coaxially to the disk, the disk is divided into a plurality of sectorial imaginary regions, and pulsed energy beams are irradiated once to each sectorial region through the mask. In this case, the disk and the mask are rotated together at a low speed, and the pulsed energy beams are irradiated in synchronism with the speed of rotation. When the angle of sector of the region is 12°, and the disk is rotated at 2 rpm (one revolution in 30 sec), the irradiation of energy beams is conducted at a frequency of 1 Hz timely, whereby the synchronism of rotation with the irradiation is obtainable. The speed of rotation can be kept constant by using an encoder or the like.

As another method, a sectorial mask is arranged on a disk, and one pulse of pulsed energy beams is applied to a sectorial imaginary region of the disk through the mask. Then, only the mask or disk is rotated, and after it has been rotated by a predetermined angle, one pulse of beams is applied to the adjacent sectorial imaginary region through the mask. When the angle of the sector is 12° and the disk or the mask is rotated at 2 rpm (1 revolution in 30 sec), the synchronism of rotation with the irradiation is obtainable by irradiating timely the energy beams at a frequency of 1 Hz. The speed of rotation can be kept constant by using the encoder or the like.

When the pulse width of the energy beams is sufficiently short, the disk can be rotated continuously during the irradiation of energy beams. However, it is preferred to irradiate the disk by stopping it intermittently so that a degree of clearness of a magnetic pattern can be increased.

According to the present invention, the double irradiation of energy beams to the same location can be prevented. Accordingly, deterioration of signals due to thermo-demagnetization, unclearness of the boundary of a magnetic pattern due to thermal storage or a damage to the medium can be minimized whereby a precise magnetic pattern of defect-free can effectively be formed.

In a preferable magnetic pattern forming method, pulsed energy beams are irradiated while the position of the mask and/or the magnetic recording medium and the energy beam irradiation spot are relatively moved, wherein the irradiation of the pulsed energy beams, the detection of such irradiation, the relative movement and the detection of such relative movement are sequentially performed, whereby the double irradiation of the energy beams to the same location can be prevented.

For example, an oscillation signal (an external trigger signal or the like) is taken as soon as the pulsed energy beams are oscillated, and after the detection of the oscillation signal, a motor for moving the magnetic recording medium is actuated to rotate/move (relatively move) the medium to a desired position. When a signal indicating that the relative movement has been completed is detected, the detected signal is supplied to the energy beam generating source. The detected signal is used as a trigger signal to generate the next pulsed energy beam. The synchronization is obtainable by repeating such operations.

In the present invention, several methods for moving relatively the energy beam irradiation spot and the mask and/or the magnetic recording medium can be considered although the present invention is not limited thereto.

For example, the energy beam irradiation spot is fixed, and the medium is moved independently or together with the mask attached to the spindle, by means of a motor or the like. Or, the medium and the mask are fixed onto a parallel slider which is moved in a parallel direction by a motor or the like. When the medium is in a disk-like form, i.e., a magnetic disk is used, it is recommended to rotate it as the simplest and highly accurate way.

Contrary, there is a way to move the energy beam irradiation spot while the medium and the mask are fixed. For example, a part of or the whole of the energy beam irradiation system may be mounted on the slider to be moved. Or, the energy beam irradiation spot may be moved by using the f-θ lens or the like provided that the angle of the energy beams is changed by a dichroic mirror or a galvanometer installed in the energy beam irradiation system.

Further, the combination of the above-mentioned ways may be employed. There is a case that when the beam diameter of energy beams is small, it is difficult to irradiate the entire region in a radial direction of a magnetic disk at a time. In such case, the magnetic disk and the mask are fixed onto the parallel slider, and the magnetic disk is relatively moved in its radial direction so as to perform irradiation of several times whereby the entire region can be irradiated.

For example, the disk and the mask are rotated, and at the same time, the energy beam irradiation system mounted on the slider is moved gradually in a radial direction to perform the irradiation. Or, the disk and the mask are rotated, and at the same time, the energy beam irradiation spot may be moved for irradiation in the radial direction provided that the angle of the energy beams is gradually changed by the dichroic mirror or the galvanometer.

Alternatively, the following steps may be repeated: the energy beam irradiation spot is moved in the radial direction to irradiate the disk thoroughly, and the disk and the mask are rotated a little, and at the same time, the energy beam irradiation spot is moved in the radial direction to irradiate the disk thoroughly.

In order to scan a broad region in a time as short as possible, it is preferable to generate energy beams of short pulse at a high speed. Thus, a magnetic pattern can be formed by the irradiation of the pulsed energy beams to the entire surface of the magnetic recording medium while the medium is relatively moved.

In a case that a pattern to be formed in the medium is written in a single mask, the mask is fixed to the medium, the mask and the medium are moved together, and pulsed energy beams are irradiated to the medium during the movement. The single mask is suitable for a magnetic disk in forming a pattern without having periodicity in a circumferential direction or a radial direction of the disk.

When a pattern formed in the medium is the repetition of a unit pattern, the irradiation of the pulsed energy beams is conducted by moving only the magnetic recording medium without moving the mask in which a unit pattern is formed, or by moving only the mask without moving the medium. This method is suitable for the magnetic disk in forming a pattern having periodicity in a circumferential direction or a radial direction of the disk. More preferably, the relative movement includes the rotation of the medium or the mask.

In order to make the direction of magnetization in a so-called longitudinal magnetic recording type disk coincident with a circumferential direction of the magnetic recording medium, the rotation is more suitable than the parallel movement.

In order to obtain the synchronization of the mask and/or the magnetic recording medium with the energy beams, the number of times of irradiation necessary to print a pattern in the entire surface of the magnetic recording medium, is first obtained by calculating based on the surface area to which energy beams are irradiated; the optimum repetitive frequency is selected on the basis of a repetitive oscillation frequency applicable to the energy beams and a time for forming the pattern, and a revolution number free from the double irradiation and a speed of parallel movement are determined.

The energy beam irradiation system means the entirety or a part of an optical system such as a lens and/or a mirror which introduces energy beams emitted from an energy beam source into the magnetic recording medium. For example, it includes an objective lens, a projection lens, a galvanomirror, a dichroic mirror and so on for irradiating laser emitted from a light source to the magnetic recording medium.

It is preferable that the shape of irradiated energy beams emitted from a light source is changed into a desired shape by an optical treatment. In the application to a magnetic disk, the shape of the beams is preferably in a sectorial shape. Further, it is desirable to uniform, expand, reduce or change optically energy beams to meet the shape of the substrate. The optical uniformity of energy beams can be achieved by a homogenizer by which an energy distribution in the beam pot is equalized. The optical expansion of energy beams can be achieved by a beam expander by which the beams are elongated in a direction.

In the present invention, since energy beams are absorbed into the mask in the irradiation of the energy beams to the medium through the mask, the temperature of the mask increases to cause thermal expansion depending on conditions whereby an amount of error per unit area becomes large. Therefore, it is preferable to cool the mask when the energy beams are irradiated to the medium through the mask. With such measures, the thermal expansion of the mask can be prevented, and a desired magnetic pattern can be formed accurately with a minimum dimensional error.

Means for cooling the mask may be a system for supplying an air stream to the mask (air cooling system), a system for circulating cooling water (water cooling system), a system using another refrigerant and so on. It is enough to remove sufficiently heat generated by the irradiation of energy beams, in the mask. For example, an air gun may be disposed in the vicinity of the mask, air may be supplied to the surface of the mask to which energy beams are irradiated, or a pipe may be arranged so that cooling water is circulated around the mask.

Further, the cooling may be conducted to the mask from any side of surface such as the surface to which the energy beams are irradiated, the back surface or a side surface, and the position for cooling is not limited. However, the cooling to the region where the energy beams are directly irradiated or the vicinity thereof (adjacent region) is in particular effective because a temperature rise in that region is large.

When the pulsed energy is irradiated, an irradiation time and a non-irradiation time are repeated alternately. The cooling may be conducted only in an irradiation time, only in a non-irradiation time, or for the both according to requirements. When the cooling is conducted in the irradiation time, it is necessary to use the cooling means which does not shield the mask. However, no consideration is needed when the cooling is conducted only in the non-irradiation time.

Further, the temperature of the mask may be monitored by a temperature sensor or the like so that conditions for cooling are controlled depending on a detected temperature whereby the temperature can be kept constant. For example, in the water cooling system, a cooling time, a water temperature and so on can be controlled, and in the air cooling system, a cooling time, an air quantity, an air temperature and so on can be controlled.

Gas used for the air cooling system may be any gas as far as the mask is not damaged. For example, inert gas such as N, Ar or air is usable. Air is preferable from the viewpoint of cost. More preferably, clean air or air subjected to a treatment of removing fine particles, dust and so on with a filter, is used from the viewpoint of minimizing error at the time of printing. The mask is cooled by blowing clean air from an air gun.

In the water cooling system, it is preferable to contact water, which has been subjected to temperature control, to the entire region or a part of the mask by interposing a water bag or a metallic member having high thermal conductivity.

In a case of using the water cooling system or another refrigerant, care should be taken so as not to cause condensation on the mask in order to transmit energy beams without reducing the function of the mask. For this, it is preferred to reduce ambient temperature.

By keeping the temperature of the mask within a predetermined range by using such cooling means, it is possible to prevent the thermal expansion of the mask and to form a magnetic pattern more precisely. The temperature of the mask is preferably kept to not less than 0°C and not more than 30°C. However, when pulsed energy beams having a high peak value are irradiated, the temperature of the mask sharply rises at the moment. Accordingly, there is a case that the temperature can not be kept in the above-mentioned range at the time of irradiating energy beams.

This method is preferably conducted in environment such as in a clean room in which fine particles, dust, temperature and humidity are controlled. The ambient temperature is preferably 0°C-30°C.

In a case that the magnetic recording medium is held by medium holding means such as a spindle, a guide, a pressing plate and so on, energy beams may be irradiated to the medium holding means with the result that the medium holding means absorbs the energy beams to cause thermal expansion due to temperature rise, whereby the measuring error becomes large with respect to an expected dimension. For example, the eccentricity of the medium becomes large when thermal expansion is resulted in the spindle or the pressing plate.

Accordingly, the medium holding means should be cooled to minimize the eccentricity, and an accurate magnetic pattern can be formed with less error. Preferably, the accuracy is increased by removing heat generated in both the mask and the medium holding means.

The medium holding means indicates the entirety of the mechanism for holding the medium. Specifically, it includes a spacer(s) and a turntable other than the above-mentioned members. The region to be cooled may be the entire or a part of the holding means but it should include the region which receives the irradiation of energy beams or a region susceptible to heat by the irradiation.

Materials used for the medium holding means may be any as far as it has a strength to support sufficiently the magnetic recording medium. However, materials which are thermally stable in dimension, such as metal, an alloy, resin, ceramics, glass and so on are preferably used. In particular, metal or an alloy are preferable from the viewpoint that they can disperse heat generated by energy beams in a short time. In particular, metal or an alloy having large thermal dispersion properties are preferred.

Means for cooling the medium holding means and conditions for cooling are the same as those for cooling the mask. However, the method and the conditions for cooling the medium holding means may be different from those for the mask cooling means. It is enough to cool directly the area where the energy beams are directly irradiated, or to cool the vicinity thereof by the conduction of heat. The degree of accuracy of a pattern can be increased by supplying continuously clean air of about 20°C at a rate of 2 kgf/cm² by an air gun directly to both a rear surface of the mask and the medium holding means, in comparison with a case without such. For example, there is found an improvement in pattern accuracy of about 0.1 µm with a pattern of 1 µm in width.

Next, explanation will be made as to the external magnetic field.

When a circular disk-like medium is used, it is preferable that the direction of applying an external magnetic field is any one among a circumferential direction, a radial direction and a direction perpendicular to the medium surface.

When the external magnetic field is applied together with the heating, the application of the external magnetic field may be carried out over a wide area as heated. By this, a plurality of magnetic patterns can be formed at a time.

As means for applying the external magnetic field to the magnetic layer, a magnetic head may be used, or a plurality of electromagnets or permanent magnets may be arranged so as to generate a magnetic field in a predetermined magnetization direction. Further, a combination of different means as mentioned above may be used. In order to magnetize efficiently a medium having a high coercive force which is suitable for high density recording, a permanent magnet such as a magnet of ferrite, a magnet of neodymium type rare earth, a magnet of samarium-cobalt type rare earth or the like is preferable.

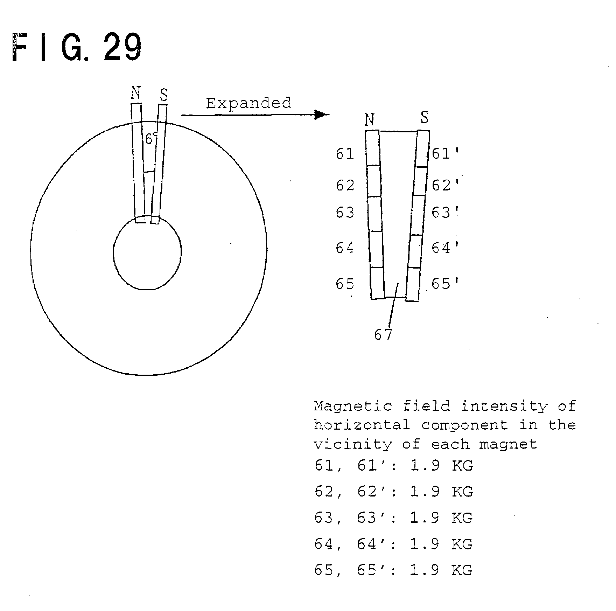

Figure 29 shows an example of the arrangement of permanent magnets used for applying an external magnetic field to a circumferential direction of a 2.5 in. magnetic disk.

A number of NdFe magnets each having a magnetic field intensity of 1.9k Gauss are arranged in two lines in an opposing state with their magnetic poles being opposite to each other on a magnetic yoke 67 as shown in Figure 29. The dimension of each of the magnets is 6.0 mm × 6.0 mm × 6.0 mm. The end portion of the magnet located at the innermost periphery is positioned 10 mm apart from the center of the disk, and the other magnets are successively arranged adjacent thereto in a radial direction so that the lined magnets are extended radially at an angle of 6°. The distance of the disk and the magnets is determined to be about 5 mm so that the magnetic field intensity applied to the disk at the center between opposing magnets 63, 63' is 1.3k Gauss. The measurement of the magnetic field intensity is conducted in the vicinity of each of the magnets on a linear line connecting an N pole and an S pole of opposing magnets.

When a circular disk-like medium is used, it is preferable that the magnetic field intensity of external magnetic field applying means is changed along the radial direction of the medium. In forming a magnetic pattern in the circular disk-like medium by irradiating energy beams together with the application of a magnetic field, it is efficient way to section a recording area into sectorial regions.

In a medium to which recording is conducted by rotating it at a constant angular velocity, the linear recording density is low toward its outer circumference. When recording is conducted by rotating at a constant angular velocity, the length for recording of a magnetic domain becomes long toward its outer periphery. Accordingly, in forming a magnetic pattern in each track of the medium, the pattern is expanded in a sectorial shape toward the outer periphery.

Accordingly, the application of the magnetic field is performed in a radial direction to cover a substantially sectorial area.

When a general magnet, i.e., a magnet having a uniform magnetic field intensity is used to apply a magnetic field to a sectorial area, the magnetic field intensity actually applied to the disk becomes small toward the outer circumferential portion, and it is difficult to form a magnetic pattern clearly because the larger the distance between opposing magnetic poles is, the smaller the magnetic field intensity is.

Therefore, the magnetic field intensity of the external magnetic field applying means should be changed depending on positions on the disk in its radial direction. Thus, the magnetic field intensity actually applied to the disk can be uniform, and a magnetic pattern can clearly and uniformly be formed in the entire surface of the disk.

This method is in particular effective when the irradiation of energy beams and the application of a magnetic field are conducted simultaneously. In a case that the application of a magnetic field is conducted twice, i.e., prior to the irradiation of energy beams and together with the irradiation, this method may be used for either one of two or both.

The magnetic field intensity may be changed linearly, curvilinearly or stepwisely. Further, there is a difference of 5% or more between the maximum value and the minimum value of the magnetic field intensity. Although there is no upper limit in the value, it is preferable that the difference is about 5 times or less in using a 2.5 inch type magnetic disk.

In a case of using an electromagnet, the number of turn and the density of the coil is changed in its radial direction whereby the magnetic field intensity can easily be changed. It is possible to change the magnetic field intensity by changing the number of turn and the density of the coil in a single electromagnet, or by arranging electromagnets having different number of turns and the density of coil in the radial direction. A structure comprising a plurality of permanent magnets is preferred since different magnetic field intensities can easily be provided in inner and outer circumferential portions by changing the magnetic intensity of individual magnets. Further, a variety of arrangement is possible. The kind of usable magnets may be such one capable of providing a desired magnetic field.

It is preferable that the external magnetic field applying means comprise two magnetic field applying means whose magnetic polarity is different from each other, and both the applying means are opposed in the same plane of the magnetic recording medium. Such arrangement can be simple. When the two applying means are arranged radially in a radial direction of the magnetic recording medium, a magnetic pattern can be formed uniformly in the radial direction of the magnetic recording medium without causing a skew loss.

For example, the same permanent magnets are arranged at the innermost peripheral portion of the disk so as to oppose an N pole and an S pole of paired magnets along its circumferential direction. Other permanent magnets having a stronger magnetic intensity are arranged adjacent to these magnets so as to increase the distance between their magnetic poles. Further, other permanent magnets having further stronger intensity are arranged adjacent to the second permanent magnets so as to increase the distance between the magnetic poles. By repeating such operation, final permanent magnets reach the outermost peripheral portion of the disk. Then, lined magnets having its N pole at an outer free end and lined magnets having its S pole at an outer free end are arranged substantially radially.

A U-like permanent magnet having both ends of N pole and S pole may be arranged so that the both ends are opposed to each other.

"Substantially radially" means that the distance between magnetic poles gradually increases in a direction of the outer circumference, and includes a form of linearly radial and curvilinearly radial. In particular, it is effective to meet the shape to the sectorial shape in the magnetic recording medium. For example, a magnetic pattern is formed in a circular disk-like magnetic recording medium over the entire periphery by sectioning with a certain angle, or a magnetic pattern is formed by rotating the medium.

Further, when the magnetic field intensity of the opposing magnetic poles is substantially the same makes arrangement and structure simple.

In the present invention, the magnetic field intensity means the maximum magnetic field intensity of the external magnetic field applying means, which is the value measured at a location very close to that means. For example, measurement is made in the vicinity of either magnetic pole on a linear line connecting the N pole and the S pole.

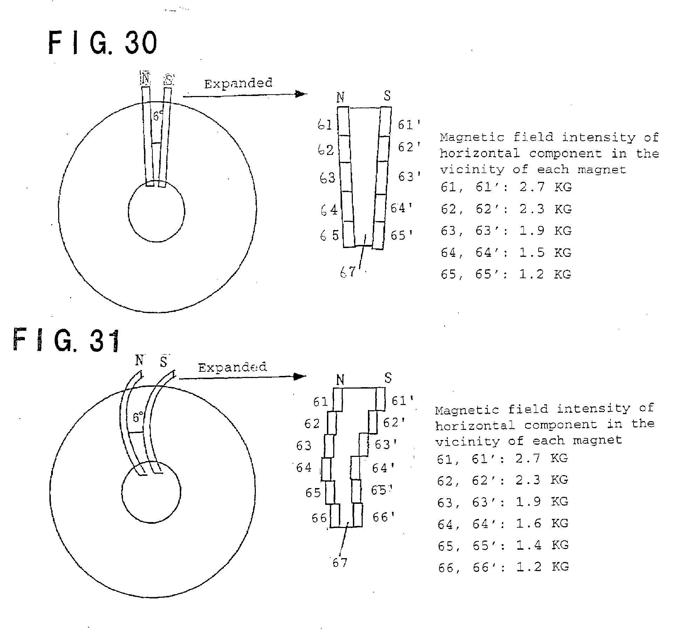

Figures 30 and 31 show examples of the arrangement of permanent magnets in the above-mentioned case.

Two sets of NdFe magnets each set of magnets having magnetic field intensities of 2.7k Gauss, 2.3k Gauss, 1.9k Gauss, 1.5k Gauss and 1.2k Gauss, are arranged in two lines in an opposing state with their polarities being opposite to each other by interposing a magnetic yoke 67 as shown in Figure 30. The dimension of each of the magnets is 6.0 mm × 6.0 mm × 6.0 mm. The end portion of the magnet located at the innermost periphery is positioned 10 mm apart from the center of the disk, and the other magnets are arranged adjacent thereto in a radial direction at an angle of 6°. The distance between the disk and magnets is determined to be about 5 mm so that the magnetic field intensity applied to the disk at the center between magnets 63, 63' is 1.3k Gauss. Thus, the magnetic field distribution at the center on a linear line connecting paired magnets can be kept in a range of 1.2k Gauss-1.6k Gauss. As a result, scattering of an output of the formed pattern can be suppressed.

Alternatively, two sets of NdFe magnets each set of magnets having magnetic field intensities of 2.7k Gauss, 2.3k Gauss, 1.9k Gauss, 1.6k Gauss, 1.4k Gauss and 1.2k Gauss, are arranged in two lines in an opposing state with their magnetic poles being opposing to each other on the magnetic yoke 67. The dimension of each of the magnets is 5.0 mm × 5.0 mm × 5.0 mm. The end portion of the magnet located at the innermost periphery is positioned 10 mm apart from the center of the disk, and the other magnets are arranged in its radial direction at an angle of 6°. The distance between the disk and magnets is determined to be about 4 mm so that the magnetic field intensity applied to the disk at the center between magnets 63, 63' is 1.3k Gauss. Thus, the magnetic field distribution at the center on a line connecting paired magnets can be kept in a range of 1.2k Gauss-1.6k Gauss. As a result, scattering of an output of the formed pattern can be suppressed.

In the magnetic pattern forming method of the present invention, a second lubricant layer is preferably formed after the formation of the magnetic pattern. When a magnetic pattern is formed by combining the heating locally and the application of an external magnetic field, the lubricant on the magnetic recording medium is heated and evaporates partially. Further, the lubricant may be reduced by the adhesion to the mask.

The reduction of the lubricant reduces the impact resistance or the durability to the magnetic head. Accordingly, it is preferable that after a magnetic pattern has been formed by combining the locally heating and the application of an external magnetic field, a lubricant layer is formed again by forming a lubricant layer of sufficient layer thickness whereby high impact resistance and durability to the magnetic head can be accomplished.

As described above, according to the present invention, a precise magnetic pattern can be formed. Accordingly, such method is very effective in applying to the formation of a control pattern used for controlling a data recording/reproducing head. More preferable, the control pattern includes a servo pattern or a standard pattern for recording the servo pattern.

Further, according to the present invention, high signal intensity can be obtained even in a case that the magnetic pattern includes a pattern extending obliquely to the tracks as described above, and accordingly, the present invention is suitable for forming an oblique pattern for phase servo signals and so on.

The obliquely extending pattern is a pattern having a certain inclination with respect to a reference line where the reference line is along a direction perpendicular to the moving direction of the head. The inclination of the reference line is preferably within ± 45° whereby signals usable sufficiently as servo signals can be produced. Or, a signal from a magnetic pattern formed according to the present invention may be used for inspection of defects for the medium directly. A recording step in the inspection of defects can be saved; the time of manufacturing can be shortened to reduce manufacturing cost.

According to the present invention, a magnetic pattern having a high quality of output signal can accurately and effectively be formed by optimizing the above-mentioned conditions. Namely, a pattern having a high quality of output signal, wherein the width of magnetic transition is small and the magnetic transition at the boundary of magnetic domains is very steep, can be formed. By selecting conditions, it is possible to obtain a width of magnetic transition of 1 µm or less, preferably, 0.5 µm or less, more preferably, 0.3 µm or less. In the present invention, the width of magnetic transition means a pulse width (i.e., a half value width) of a reproduced signal waveform in a state of 50% of the maximum magnetization of the reproduced signal waveform of a magnetic pattern, reproduced by a magnetic head.

In particular, when a reduced image forming technique is used, the accuracy of the magnetic pattern is not restricted by the accuracy in patterning or alignment of the mask. Accordingly, a further fine magnetic pattern can be formed accurately.

Further, the magnetic pattern can easily be formed in a very short time, and occurrence of a damage or defect is rare because it does not contact with the master disk unlike the conventional technique.

In particular, as the demand for increasing the density of recording, the writing of servo signals becomes difficult, and the recording of servo signals affects mainly to push up manufacturing cost. Accordingly, the application of the present invention to a medium for recording data with high density provides a large effect. Further, the present invention can easily be applied to a perpendicular magnetic recording medium because it is easy to apply a magnetic field.

Next, the structure of the magnetic recording medium of the present invention will be described.

The substrate of the magnetic recording medium of the present invention should not cause vibrations even in a high speed revolution at the time of reproducing signals at a high speed, and therefore, a hard substrate is usually used. In order to obtain a sufficient rigidity to vibrations, the thickness of the substrate is preferably 0.3 mm or more. However, a thicker substrate is contrary to a demand of reducing the thickness of magnetic recording devices. Accordingly, 3 mm or less is preferable. For example, an Al alloy substrate containing Al as the main component, such as an Al-Mg alloy substrate, a Mg alloy substrate containing Mg as the main component, such as a Mg-Zn alloy substrate, a substrate composed of material such as usual soda glass, aluminosilicate glass, non-crystalline glass, silicon, titanium, ceramics or various resins, or a substrate produced by combining such materials. In particular, it is preferred to use the Al alloy substrate, a substrate made of glass such as crystallized glass from the viewpoint of strength, or a substrate made of resin from the viewpoint of cost.

The present invention provides a remarkable effect in the application to a medium having a hard substrate. In the conventional magnetic transferring method, the medium having a hard substrate contacts insufficiently to the master disk, a flow or a defect may be produced, or the transition of printing magnetic domains is unclear so that PW50 may expand. On the other hand, the present invention does not create such problem because the mask is not brought to press contact to the medium. In particular, the present invention is effectively used for a medium having a glass substrate in which cracks are apt to cause.

In usual manufacturing steps for a magnetic disk, washing and drying are generally conducted to substrates. It is desirable in the present invention that washing and drying are conducted before the formation of layers from the viewpoint of keeping the contact properties of each layer. In manufacturing the magnetic recording medium of the present invention, a metallic layer such as NiP or the like may be formed on the substrate surface.

As the method for forming the metallic layer, a technique for forming a thin film such as an electroless plating method, a sputtering method, a vacuum deposition method, CVD method and so on may be used. When a substrate made of an electric conductive material is used, electrolytic plating may be used. The thickness of the metallic layer is preferably 50 nm or more. However, in consideration of productivity for a magnetic disk medium, the thickness is preferably 500 nm or less, more preferably, 300 nm or less.

Further, it is desirable to form the metallic layer on the entire substrate surface. However, it is possible to form it only a part, for example, only an area where texturing is conducted.

Further, the texturing may be formed concentrically on the substrate surface or on the surface of a non-magnetic metallic layer which is formed on the substrate. In the present invention, "concentrically texturing" indicates a state that a large number of fine grooves are formed in a circumferential direction of the substrate by grinding the substrate in the circumferential direction by employing, for example, mechanical texturing with abrasive grain and a texture tape, texturing utilizing laser beams or by the combination of these techniques.

As the kind of abrasive grain for the mechanical texturing, a diamond grain, in particular, such grain having graphatized surface, is most preferable. As another grain used for the mechanical texturing, an alumina grain is widely used. However, the diamond grain exhibits excellent performance from the viewpoint that a longitudinally oriented medium has its nature to provide the easy magnetization axis oriented along texturing grooves.

To reduce the flying height of head as possible is effective to realize high density recording. Further, flatness or smoothness is one of the features of the substrate. Accordingly, the surface roughness Ra of the substrate surface is preferably 2 nm or less, more preferably, 1 nm or less, particularly preferably, 0.5 nm or less. The surface roughness Ra is a value obtained by the measurement of a length of 400 µm with a contact finger type surface roughness meter and calculating the measured value according to JIS B0601. In this case, the size of the end of the finger used for measuring is about 0.2 µm.

An underlayer may be formed between the magnetic layer and the substrate. The underlayer is to make the crystal fine and to control the orientation of the crystal face. For this purpose, material containing Cr as the main component is preferably used.

For material for the underlayer containing Cr as the main component, in addition to pure Cr, the material includes an alloy composed of at least one element selected from the group consisting of V, Ti, Mo, Zr, Hf, Ta, W, Ge, Nb, Si, Cu and B, or chromium oxide in order to obtain good crystal matching to the recording layer.

Among them, pure Cr or an alloy obtained by adding to Cr one or more than two elements selected from the group consisting of Ti, Mo, W, V, Ta, Si, Nb, Zr and Hf is preferable. The contents of the second and third elements, although the optimum amounts vary depending on elements used, are preferably 1 atomic%-50 atomic% in general, more preferably, 5 atomic%-30 atomic%, further preferably, 5 atomic%-20 atomic%.

The thickness of the underlayer should have such a thickness as to be sufficient to realize the anisotropy, and is preferably 0.1-50 nm, more preferably, 0.3-30 nm, further preferably, 0.5-10 nm. When the underlayer containing Cr as the main component is formed, the substrate may be or may not be heated.

A soft magnetic layer may be formed between the underlayer and the recording layer depending on conditions. The formation of the soft magnetic layer gives a large effect and used preferably for, in particular, a keeper medium which reduces magnetic transition noises or a perpendicular recording type medium wherein magnetic domains orient in a direction perpendicular to a longitudinal direction of the medium.

The soft magnetic layer may be made of material having relatively high magnetic permeability and a small magnetic loss. However, material of NiFe alloy or an alloy added with Mo or the like as the third element is preferably used. The optimum magnetic permeability varies largely depending on the characteristics of the head or the recording layer used for recording data. Generally, the maximum magnetic permeability of about 10-1,000,000 (H/m) is preferred.

Further, a CoCr series interlayer may be formed on the Cr underlayer.

Then, in forming the recording layer (magnetic layer), a layer made the same material as the underlayer or layer made of a non-magnetic material may be interposed between the recording layer and the soft magnetic layer. When the recording layer is formed, the substrate may not be heated. As the recording layer, a Co alloy magnetic alloy, a rare earth type magnetic layer represented by TbFeCo or a multi-layer of a transition metal and a noble metal such as a multi-layer of Co and pd layer is preferably used.

The magnetic layer of Co alloy may be of pure Co or a magnetic material of Co alloy, which is generally used as a magnetic material, such as CoNi, CoSm, CoCrTa, CoNiCr or CoCrPt. Further, an element such as Ni, Cr, Pt, Ta, W or B or a compound such as SiO₂ may be added to the above-mentioned Co alloy. For example, CoCrPtTa, CoCrPtB, CoNiPt, CoNiCrPtB or the like may be mentioned. The thickness of the magnetic layer of Co alloy is preferably 5 nm or more, more preferably, 10 nm or more, although the thickness is optional. Further, two or more recording layers may be formed by interposing an appropriate non-magnetic interlayer or without any interposing layer. In this case, the composition of the magnetic material to be formed may be the same or different.

As a magnetic material for a rare earth type magnetic layer, one which is usually used, may be employed. TbFeCo, GdFeCo, DyFeCO or TbFe may be mentioned, for example, Tb, Dy or Ho may be added to such rare earth alloy. Ti, Al or Pt may be added for the purpose of preventing the deterioration by oxidation. Although the thickness of the rare earth type magnetic layer is optional, a thickness of about 5-100 nm is usually used. Further, two or more recording layers may be formed directly, or by interposing an appropriate non-magnetic interlayer. The composition of the magnetic material to be formed may be the same or different. In particular, the rare earth type magnetic layer is a layer having an amorphous structure and is capable of magnetize vertically with respect to the media surface. Accordingly, the method of the present invention suitable for high density recording and capable of forming a magnetic pattern with high density and high accuracy is effectively applicable.

The multi-layer of transition metal and noble metal, which is capable of perpendicular magnetic recording as well, may be of usual magnetic material, such as Co/Pd, Co/Pt, Fe/Pt, Fe/Au or Fe/Ag. The transition metal and the noble metal for the multi-layer are not always necessary to be pure but may be an alloy containing such material as the main component. The thickness of the laminate layer is usually about 5-1,000 nm although is optional. Further, the multi-layer may be formed of three or more kinds of material according to requirements. In the present invention, the recording layer is preferably thinner because a thick recording layer may cause poor conduction of heat in a layer thickness direction when the recording layer is heated, and a desirable magnetization may not be obtained. Accordingly, the thickness of the recording layer is preferably 200 nm or less. However, the thickness is preferably 5 nm or more in order to maintain good magnetization.

The magnetic layer as the recording layer in the present invention, keeps magnetism in room temperature, and is demagnetized by the application of heat or is magnetized by applying an external magnetic field together with heating.

It is necessary for the coercive force of the magnetic layer at room temperature to keep magnetism at room temperature and to be magnetized uniformly with an appropriate external magnetic field. By rendering the coercive force of the magnetic layer at room temperature to be 2,000 Oe or more, a medium having small magnetic domains and suitable for high density recording is obtainable. More preferably, the coercive force is 3,000 Oe or more.

In the conventional magnetic transferring method, the transfer of a pattern was difficult for a medium having a higher coercive force. However, the present invention is suitably applied to such medium having a large coercive force because a magnetic pattern is formed by heating the magnetic layer to thereby decrease sufficiently the coercive force.

However, the coercive force is preferably 20 kOe or less. When it exceeds 20 kOe, a large external magnetic field is required to magnetize the magnetic layer in a lump. Further, the usual magnetic recording may be difficult.

It is necessary for the magnetic layer to keep magnetism at room temperature and to be magnetized with a weaker external magnetic field at an appropriate heating temperature. Further, magnetic domains of a magnetic pattern can be made clear by increasing the difference between the room temperature and a magnetization erasing temperature. For this, it is preferable that the magnetism erasing temperature is higher, specifically, it is preferred to be 100°C or higher, more preferably, 150°C or higher. For example, the magnetization erasing temperature exists in the vicinity of Curie temperature (slightly lower than Curie temperature) or in the vicinity of compensation temperature.

The Curie temperature is preferably 100°C or higher. When it is lower than 100°C, the stability of the magnetic domains at room temperature tends to be low. More preferably, the temperature is 150°C or higher. On the other hand, the temperature is preferably 700°C or lower because when the magnetic layer is heated excessively, it may be deformed.

When the magnetic recording medium is a longitudinal magnetic recording medium, it is difficult to conduct recording in saturation to the magnetic recording medium for high density recording having a coercive force and the formation of a magnetic pattern having a high magnetic field intensity is difficult in the conventional magnetic printing method. Further, the half value width of reproducing signals is increased. According to the method of the present invention, a desired magnetic pattern can be formed even in a longitudinal recording medium suitable for high density recording. In particular, when the saturation magnetization of the magnetic layer is 50 emu/cc or more, the influence of a diamagnetic field is large. Accordingly, the application of the present invention provides a large effect.

A higher effect is obtainable when 100 emu/cc or more. However, when the saturation magnetization is excessively large, the formation of the magnetic pattern is difficult. Accordingly, 500 emu/cc or less is preferable.

When the magnetic recording medium is a perpendicular magnetic recording medium wherein a magnetic pattern is relatively large and a unit volume of a magnetic domain is large, the saturation magnetization tends to be large and reversed magnetization apt to occur due to a demagnetization effect. This creates noises and deteriorates the half value width. However, the present invention makes it possible to record preferably to such medium by employing the combination of the soft magnetic layer and the underlayer.

Two or more recording layers may be formed in order to increase the capacity of recording. In this case, it is preferred to form another layer therebetween.

In the present invention, the protective layer is formed on the magnetic layer. Specifically, the outermost surface of the medium is covered with a hard protective layer by which a damage to the magnetic layer due to the collision of the magnetic head or the deposition of dust on the layer opposing to the mask is avoidable. The protective layer protects the medium from contact to the mask in the application of the magnetic pattern forming method with use of the mask according to the present invention.

Further, the protective layer is essential in order to prevent the oxidization of the heated magnetic layer, in the present invention. The magnetic layer is generally easily oxidized, and the oxidization is accelerated by heating. In the present invention, since the magnetic layer is locally heated by energy beams, it is necessary to form previously the protective layer on the magnetic layer in order to prevent the oxidization.

When a plurality of magnetic layers are to be formed, the protective layer should be formed on the magnetic layer formed near the front surface. The protective layer may be formed directly on the magnetic layer, or a layer having another function may be interposed according to requirements.

A part of energy beams is absorbed by the protective layer whereby the magnetic layer is locally heated by thermal conduction. When the protective layer is too thick, a magnetic pattern may be unclear by thermal conduction in a lateral direction. Accordingly, the thickness of the protective layer is preferably thin. Further, it is preferred to make the thickness thin for the purpose of reducing the distance between the magnetic layer and the head at the time of reproducing data. Accordingly, the thickness is preferably 50 nm or less, more preferably, 30 nm or less, further preferably, 20 nm or less. However, the thickness is preferably 0.1 nm or more, more preferably, 1 nm or more in order to obtain a sufficient durability.

It is sufficient that a material for the protective layer is hard and durable to oxidization. For the protective layer, a layer of carbon material such as carbon, hydrogenated carbon, nitrided carbon, amorphous carbon, SiC or the like, or of a hard material such as SiO₂, Zr₂O₃, SiN, TiN or the like may be used. Further, the material for the protective layer may have magnetic properties.

In the magnetic disk, it is necessary to form a very hard protective layer to be thin in order to bring the distance between the head and the magnetic layer to the limit. Accordingly, a protective layer of carbonic material, in particular, diamond-like carbon is preferable from the viewpoint of its having impact resistance and lubricating properties. It functions to prevent a damage to the magnetic layer by energy beams and is very strong to a damage to the magnetic layer caused by the magnetic head. The magnetic pattern forming method of the present invention is applicable to an opaque protective layer such as the carbonaceous protective layer.

Further, the protective layer may be formed of two or more layers. When a layer containing Cr as the main component is formed as the protective layer directly on the magnetic layer, it exhibits a remarkable effect to prevent oxygen permeability to the magnetic layer.

On the protective layer, a lubricant layer is formed in order to prevent a damage to the medium caused by the contact of it to the mask or the magnetic head. As lubricant used for the lubricant layer, a fluorine type lubricant, a hydrocarbon type lubricant and a mixture of these materials are mentioned. The lubricant can be coated on by the usual method such as a dip method, a spin coat method or the like. Or, the lubricant layer can be formed by a vapor deposition method. It is preferred that the thickness of the lubricant layer is thin so as not to hinder the formation of a magnetic pattern, and is preferably 10 nm or less, more preferably 4 nm or less. Further, the thickness is preferably 0.5 nm or more, more preferably, 1 nm or more in order to obtain a sufficient lubricating performance.

In a case of irradiating energy beams from a location above the lubricant layer, lubricant may be applied again on the lubricant layer by taking account of a damage (decomposition or polymerization) of the lubricant.

The surface roughness Ra of the medium after the formation of a magnetic pattern is preferably kept to 3 nm or less so as not to lower the stability of moving the flying type/contact type head. The surface roughness Ra of medium is a degree of roughness in the medium surface without having a lubricant layer. The value of the surface roughness is obtained by measuring a measurement length of 400 µm by using the contact finger type surface roughness meter (Model name: Tencor P-12 disk profiler (manufactured by KLA Tencor Company)) and calculating the obtained value according to JIS B0601. The value is preferably 1.5 nm or less.

Desirably, the surface undulation Wa of the medium after the formation of a magnetic pattern is kept to 5 nm or less. Wa is an amount of undulation on the medium surface without having a lubricant layer, and it is obtained by measuring measurement length of 2 mm by using the contact finger type surface roughness meter (Model name: Tencor P-12 disk profiler (manufactured by KLA Tencor Company)), and calculating the obtained value according to the calculation of Ra. The value is preferably 3 nm or less.

Various methods can be considered as a layer forming method for forming each layer of the magnetic recording medium. For example, physically vapor-depositing methods such as a DC (magnetron) sputtering method, a highfrequency (magnetron) sputtering method, a ECR sputtering method, a vacuum deposition method and so on are mentioned.

For conditions for forming layers, an ultimate vacuum degree, a method for heating the substrate, a substrate temperature, a sputtering gas pressure, a bias voltage and so on are appropriately determined depending on the characteristics of a medium to be obtained. For example, in forming a layer by sputtering, an ultimate vacuum degree of 5×10⁻⁶ Torr or less, a substrate temperature of room temperature-400°C, a sputtering gas pressure of 1×10⁻³ to 20×10⁻³ Torr and a bias voltage of 0 to -500V are generally preferable.

When the substrate is heated, it may be heated before the formation of the underlayer. When a transparent substrate having a low thermal absorption coefficient is used, an underlayer having a seed layer containing Cr as the main component or a B2 crystal structure, which increases the thermal absorption coefficient, may be formed, then, substrate is heated, and then, a recording layer and so on may be formed thereon.

When the recording layer is a rear-earth type magnetic layer, it is preferred to prevent corrosion and oxidization to the layer by the following methods. Namely, there is a method that a covered mask is applied to the innermost peripheral portion and the outermost peripheral portion of the disk, layer formation is conducted to the step of forming the recording layer, the covered mask is removed before the formation of the protective layer, and the protective layer is formed to cover entirely the recording layer. When the protective layer comprises double layers, steps until the formation of the recording layer and the first protective layer are conducted by using a covered mask, and the covered mask is removed before the formation of the second protective layer to thereby cover entirely the recording layer by the second protective layer.

In the next, the magnetic pattern forming device according to the present invention will be described.

The magnetic pattern forming device of the present invention is a device for forming a magnetic pattern in a magnetic recording medium having a magnetic layer formed on a substrate, by using a step of irradiating energy beams to the magnetic recording medium to locally heat the magnetic layer, and a step of applying an external magnetic field to the magnetic layer, wherein the device comprises medium holding means for holding the magnetic recording medium, external magnetic field applying means for applying the external magnetic field to the magnetic recording medium, an energy beam source for emitting energy beams, projection means for projecting and irradiating the energy beams from the energy beam source to the magnetic recording medium, and a mask which is located between the energy beams source and the magnetic recording medium to change the intensity distribution of the energy beams in response to a magnetic pattern to be formed.

In the above-mentioned device, a magnetic pattern is formed by the means for heating locally the magnetic layer and the external magnetic field applying means for applying an external magnetic field in combination. Accordingly, the magnetic pattern can be formed without using a strong external magnetic field applying means as in the conventional technique. Further, since the area other than the heated area of the magnetic layer is not magnetized even though the magnetic field is applied to the area, magnetic domains are formed in only the heated area. Accordingly, it is possible to form a pattern in which the transition of magnetic domains is clear, the magnetic transition width is small, the magnetic transition at magnetic domains is very steep, and the quality of output signals is high. By selecting conditions, the magnetic transition width can be formed to be 1 µm or less.

According to this technique, it is unnecessary to bring the medium to close contact with the master disk by a vacuum suction method as in the conventional magnetic printing technique, and therefore, a simple medium holding means can be used. Further, in the conventional technique, it was necessary to repeat attaching/removing treatments to the mask every exchange of medium. According to this technique, however, the mask is not required to remove when once disposed. Further, the mask is located apart from the disk, and accordingly, handling of disposing or removing the disk or the mask can be easy.

Further, since energy beams are used for locally heating, control to a position to be heated or power is easy. It is sufficient that the energy beams source can heat locally the recording layer surface. However, a laser light source is preferable because irradiation of energy beams to an unnecessary portion can be prevented.

In order to obtain a steep magnetic transition width, a pulsed laser is preferred because there is a large temperature difference between an energy beam irradiation time and non-irradiation time, and storage of heat rarely occurs. Although continuous laser can be changed into pulsed laser by means of an optical device, use of a pulsed laser light source is preferred. The pulsed laser light source is to emit intermittently laser in a pulse form. Since it can irradiate such laser having a high power peak value in a very short time, the storage of heat rarely occurs.

When a mask having a transmitting portion which transmits energy beams selectively, e.g. a photomask is used, the preparation is easy and high accuracy of finishing can easily be obtained. Therefore, a highly accurate mask can be formed and a further accurate magnetic pattern can be formed.

In a preferable embodiment, the intensity distribution equalizing means for equalizing the intensity distribution of energy beams emitted from the energy beam source is disposed between the energy beam source and the projection means, and the mask is disposed between the intensity distribution equalizing means and the magnetic recording medium.

According to such embodiment, since the intensity distribution equalizing means previously equalizes the intensity distribution of energy beams, a distribution of heating in the irradiated area can be suppressed to be small, and the distribution of magnetic intensity of a magnetic pattern can be suppressed to be small. Accordingly, in reading the signal intensity by using a magnetic head, a magnetic pattern having a highly uniform signal intensity can be formed.

As the intensity distribution equalizing means, a homogenizer lens using a prism array or a fly-eye lens, a shading plate, a slit and the like are mentioned for example.

Preferably, the intensity distribution equalizing means have such a function that energy beams are divided into a plurality of portions, and the divided portions are overlapped, whereby the energy beams can be used efficiently. In the present invention, the magnetic layer is preferably heated by irradiating energy beams of high intensity in a short time. For this, the energy of the energy beams should be used efficiently.

The medium holding means for the magnetic recording medium includes the mechanism for holding the medium, specifically, a spindle, a guide, a pressing plate, a spacer and a turntable. Materials used for the holding means are such ones which can hold the magnetic recording medium, from the viewpoint of strength. However, materials of thermally stable in dimension are desirable because they receive the irradiation of energy beams. Metal, alloy, resin, ceramics or glass may be used. Among them, metal or alloy is preferred because it can diffuse heat caused by energy beams in a short time. In particular, metal or alloy having large thermal diffusion properties is preferable.

In the following, description will be made in detail with reference to drawings. A magnetic pattern is formed by magnetizing uniformly a magnetic layer by applying an external magnetic field, and then, applying an external magnetic field having an opposite direction while the magnetic layer is heated locally.

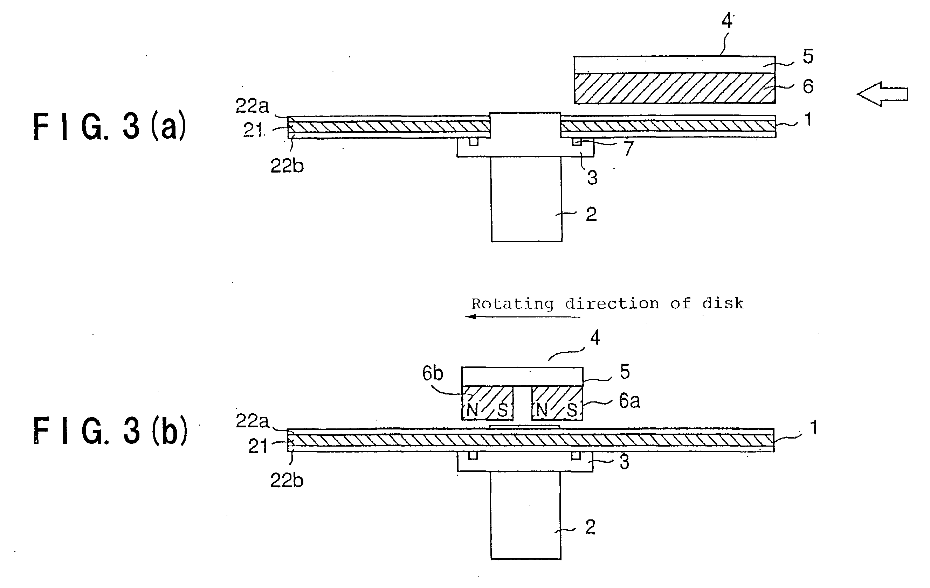

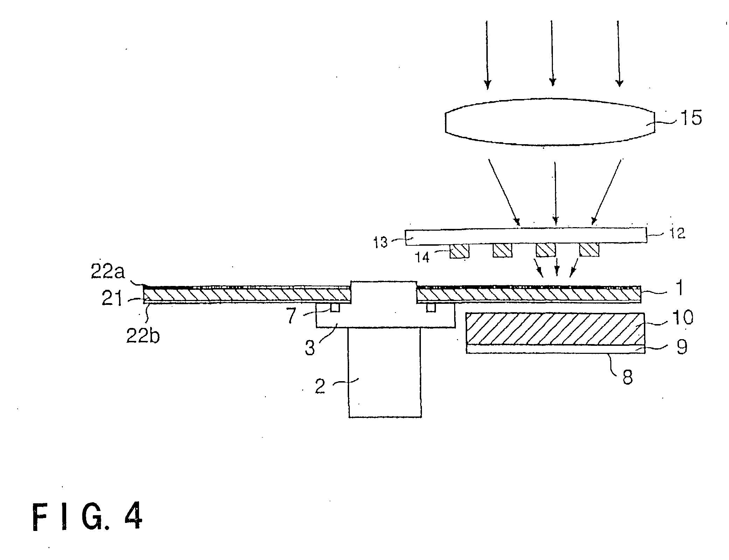

Figures 3 and 4 show an example of disk holding means of the magnetic pattern forming device and a way of applying a magnetic field according to the present invention.

As shown in Figure 3(a) of cross-sectional view, a magnetic disk 1 in which a magnetic pattern is to be formed is placed on a turntable 3 fixed coaxially with a rotatable spindle 2, and the magnetic disk is fixed to the turntable 3 by means of a vacuum groove 7. The magnetic disk 1 comprises a hard substrate 21 and magnetic layers 22a, 22b sandwiching the substrate 21.

Above the disk 1, first magnetic field applying means 4 comprising a yoke 5 and a permanent magnet 6 are disposed. Figure 3(b) is a diagram viewed from an arrow mark direction in Figure 3(a). The first magnetic field applying means 4 has an elongated shape in the radial direction of the disk 1, and it has a pair of permanent magnets 6a, 6b such as NdFe magnets which are fixed onto a yoke 5 with their magnetic poles being opposite to each other whereby a magnetic field is produced between an N pole of the magnet 6a and an S pole of the magnet 6b. By making the magnetic field larger than the coercive force of the disk 1, the magnetic layer 22a on an upper face of the magnetic disk 1 is magnetized in a circumferential direction in a longitudinal direction of the disk.

When the spindle 2 is rotated in such state that the first magnetic field applying means 4 is fixed, the magnetic disk is rotated in the arrow mark direction, and the magnetic field is applied over the magnetic layer 22a whereby it is magnetized in one direction. Then, the first magnetic field applying means 4 is moved away.

Then, an external magnetic field having the opposite magnetic direction is applied to the magnetic disk 1 while the disk 1 is locally heated. As shown in a cross-sectional view of Figure 4, second magnetic field applying means 8 comprising a yoke 9 and a permanent magnet 10 are disposed at the other side of the disk 1. The direction of a magnetic field generated from the second magnetic field applying means 8 is opposite to that of the first magnetic field applying means 1, and the intensity of the magnetic field from the second magnetic field applying means 8 is smaller than the coercive force of the disk 1. The structure and shape of the second magnetic field applying means 8 other than the above-mentioned may be the same as those of the first magnetic field applying means 4.

Laser 11 emitted from a light source (not shown) reaches a projection leans 15, in which the laser beam spot is reduced to a predetermined size, to be introduced into a photomask 12. The photomask 12 comprises a substrate 13 which is transparent to the wavelength of the laser and a layer 14 which is opaque to a magnetic pattern to be formed. By having the laser 11 transmitted through only the transparent portion, the intensity distribution (density) is changed according to the magnetic pattern to thereby produce a spatially patterned laser, which is projected on the magnetic disk 1.

The photomask 12 can be produced by sputtering, on a substrate of a material such as quartz glass, soda lime glass or the like, a material opaque to energy beams, which is represented by metal such as Cr or the like, coating a photoresist thereon, and etching the photoresist and the material opaque to energy beams selectively to thereby form a transmitting portion and a non-transmitting portion desirably.

An irradiation area is heated, and the magnetic layer 22a is heated to a level close to the magnetic erasing temperature. At the same time, an external magnetic field is applied by the second external magnetic field applying means 8 which is smaller in coercive force than the magnetic layer 22a of the magnetic disk 1. Accordingly, only the heated portion is magnetized in the direction of the external magnetic field. Then, the irradiation of the laser is stopped and the heated portion is cooled to room temperature, so that the stable magnetization is obtainable. Since the second external magnetic field is opposite in direction to the first external magnetic field used for uniform magnetization before, a magnetic pattern can be formed in the magnetic layer 22a as described above.

When the magnetic pattern is to be formed in another area of the magnetic layer 22a, the spindle 2 is rotated to rotate the magnetic disk 1 by a predetermined angle while the second magnetic field applying means 8 is kept still, and the photomask 12 is moved to a predetermined position. Then, the heating and the application of a magnetic field are conducted simultaneously.

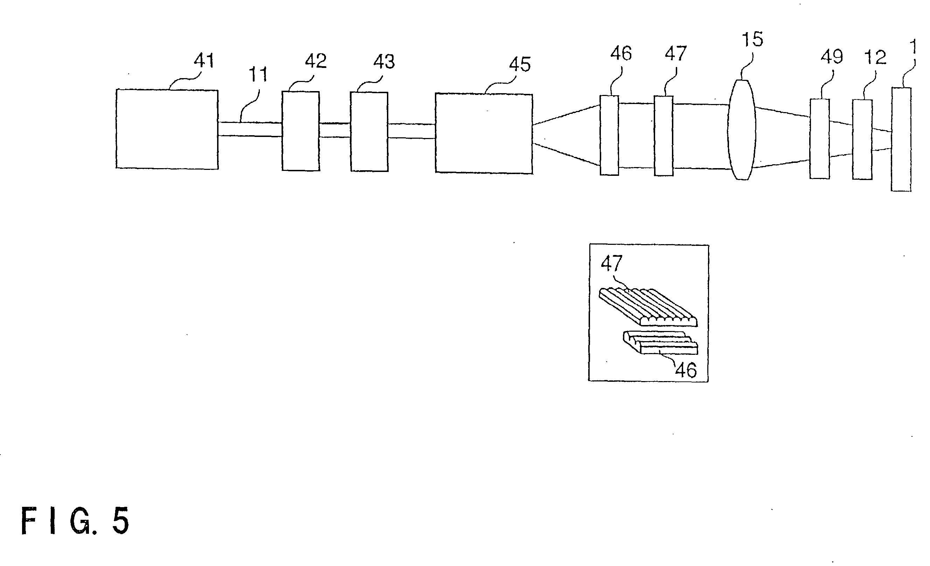

Figure 5 shows an example of the structure of the optical system for irradiating laser used in the present invention. Pulsed laser 11 emitted from a pulse laser light source 41 is passed through a programmable shutter 42 which takes only desired number of pulses. The pulse laser light source 41 may be an excimer laser or a 4th harmonic Q-switch laser of YAG, for example.

The laser 11 selected by the programmable shutter 42 is introduced to an attenuator 43 in which it is transduced to have a predetermined power, and then, is incident into a beam expander 45 which is used to increase once the beam diameter before forming an image in such a case that it is desired to increase the reduction ratio of projection in the mask.

Then, the laser 11 is passed through a prism array 46 which divides the portion in a short axis direction into 3 portions and a prism array 47 which divides the portion in a long axis direction into 7 portions, before reaching a projection lens 15. The prism arrays 46, 47 function to divide the laser into predetermined portions and overlap the divided portions, and to equalize the intensity distribution of energy beams. These members are called sometimes homogenizers.

Further, the laser 11 is rendered to have a predetermined beam shape by passing it through a shading plate 49 if necessary. The intensity distribution of the laser is changed according to the magnetic pattern by means of a photomask 12, and then, the laser is projected on the surface of the disk 1 and the magnetic layer 22a is heated. The shading plate may be such one which does not transmit the wavelength of energy beams used, namely, can reflect or absorb energy beams. However, if it absorbs the heat of energy beams, generated heat affects easily the magnetic pattern. Accordingly, it is preferable to use material having high thermal conductivity and high reflectivity. For example, a metallic plate such as Cr, Al or Fe is preferred.

A cylindrical lens or condenser lens may be used instead of the homogenizer in order to make the intensity distribution of the energy beams uniform. Further, these may be used together. Or, another lens may be interposed if necessary. Or, a slit may be used to cut an energy portion having a low density and to take only an energy portion of good distribution.

As described above, the structure of the optical systems and the order of the systems used in the present invention can be changed depending on requirements.

The application of an external magnetic field by the second external magnetic field applying means may be conducted from either surface side of the disk. However, in the embodiment shown in Figure 4, it is disposed at the position which is opposite to the disk surface to which laser is irradiated. Accordingly, it does not hinder the laser. However, the external magnetic field applying means may be disposed at the surface side to which laser is irradiated by contriving so as not to hinder the laser. In a case that a strong magnetic field is desired, the applying means is preferably disposed at each side of the disk surface.

Further, the projection means are preferably imaging means which form a reduced image on the medium surface by irradiating energy beams whose intensity distribution is changed, the imaging means being located between the mask and the magnetic recording medium.

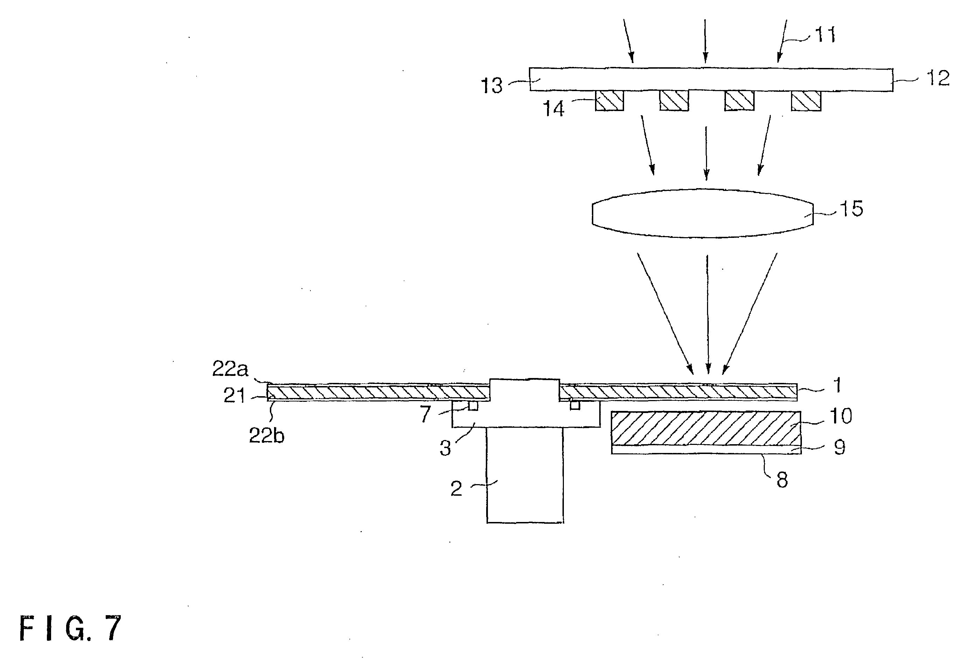

An embodiment shown in Figure 7 will be described in detail wherein the same reference numerals designate the same or corresponding parts.

The magnetic disk 1 is previously magnetized uniformly by the device shown in Figure 3. An external magnetic field having the opposite direction is applied to while the disk 1 is heated locally. As shown in a cross-sectional view of Figure 7, the second magnetic field applying means 8 comprising the yoke 9 and the permanent magenta 10 is disposed at a location opposing the other surface of the disk 1. The direction of the magnetic field generated by the second magnetic field applying means 8 is opposite to that of the first magnetic field applying means 1, and the intensity of the magnetic field is smaller than the coercive force of the disk 1. The structure and the shape of the second magnetic field applying means 8 other than the above-mentioned may be the same as those of the first magnetic field applying means 4.

The pulsed laser 11 emitted from a light source (not shown) is introduced into the photomask 12 through a condenser lens. The photomask 12 comprises a substrate 13 transparent to the laser wavelength and an opaque layer 14 formed on the substrate 13, which is opaque to a magnetic pattern to be formed. By passing the laser 11 through only the transparent portion, the intensity distribution is changed according to the magnetic pattern to provide a spatially patterned laser. The photomask 12 may be such one as usual.

The laser 11 reaches an imaging lens 15 in which the laser beam spot is reduced to have a predetermined size, and the density of the laser analogous to the pattern formed in the photomask 12 is formed as a reduced image on the magnetic disk 1. The portion where the reduced image is formed is heated and the magnetic layer 22a is heated to a level close to the magnetic erasing temperature. At the same time, an external magnetic field is applied to by the second external magnetic field applying means 8, the intensity of which being smaller than the coercive force of the magnetic layer 22a of the magnetic disk 1. Accordingly, only the heated portion is magnetized in the direction of the external magnetic field. Then, the irradiation of laser is stopped, and the heated portion is cooled to room temperature whereby the magnetization becomes stable. Since the direction of the second external magnetic field is opposite to the direction of the first external magnetic field used for uniform magnetization before, a magnetic pattern is formed in the magnetic layer 22a.

In a case that a magnetic pattern is to be formed in another area of the magnetic layer 22a, the spindle 2 is rotated to rotate the magnetic disk 1 by a predetermined angle while the second magnetic field applying means 8 is kept still. Then, the heating and the application of a magnetic field are conducted.

The minimum beam diameter φ reduced by the image lens is determined by an numerical aperture NA of the imaging lens and a wavelength λ of energy beams used, and a relation of φ=1.22×(λ/NA) is established. Namely, when a finer pattern is to be formed in the magnetic recording medium, it is necessary to reduce λ or increase NA.

When the condenser lens is located before the mask, the intensity distribution of the energy beam can be uniform, and the energy beams can efficiently collected to the imaging lens. When the laser beams are reduced by the condenser lens, NA of the imaging lens is determined in the consideration of NA of the condenser lens.

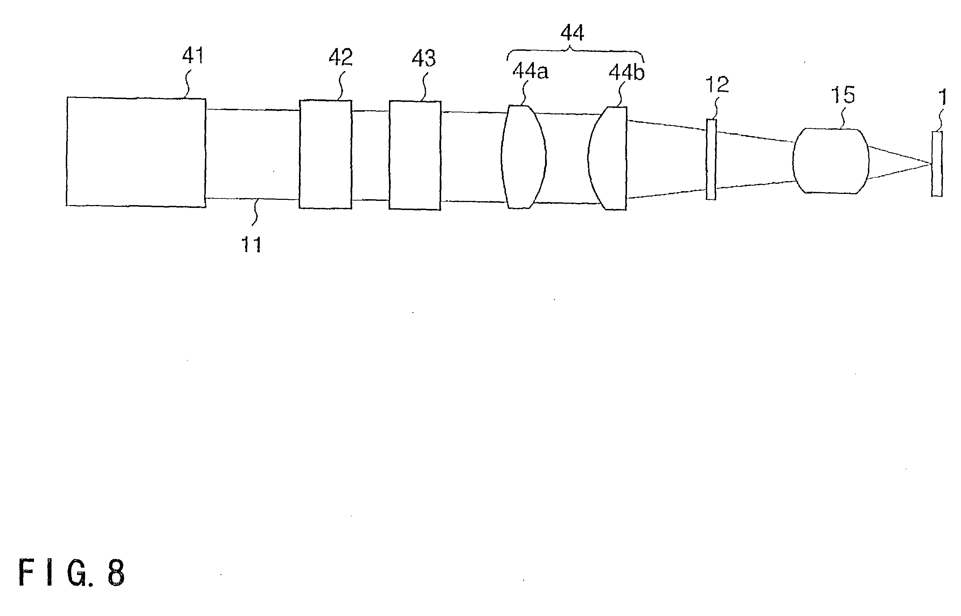

Figure 8 shows an example of the construction of the optical system for irradiating laser used in the present invention wherein the same reference numerals designate the same or corresponding parts.

Pulsed laser 11 emitted from the pulse laser light source 41 is passed through the programmable shutter 42 which can take only a predetermined number of laser pulses of laser from the light source. As the pulse laser light source 41, a excimer laser or a 4th harmonic wave Q-switch laser of YAG may be used, for example.

The laser 11 selected in the programmable shutter 42 is introduced into the attenuator 43 in which the power of the laser is transduced to have a predetermined power. Then, the laser is reaches the photomask 12 through a condenser lens 44. The condenser lens 44 generally comprises an aspheric lens 44a and a plano-convex lens 44b, and functions to equalize the intensity distribution of energy at the mask surface, and in addition, to introduce effectively the energy beam flux into the imaging lens 15.

Then, the intensity distribution of the laser 11 is changed according to the magnetic pattern by the photomask 12, and is passed through the imaging lens 15 whereby a reduced image is formed on the surface of the disk 1.

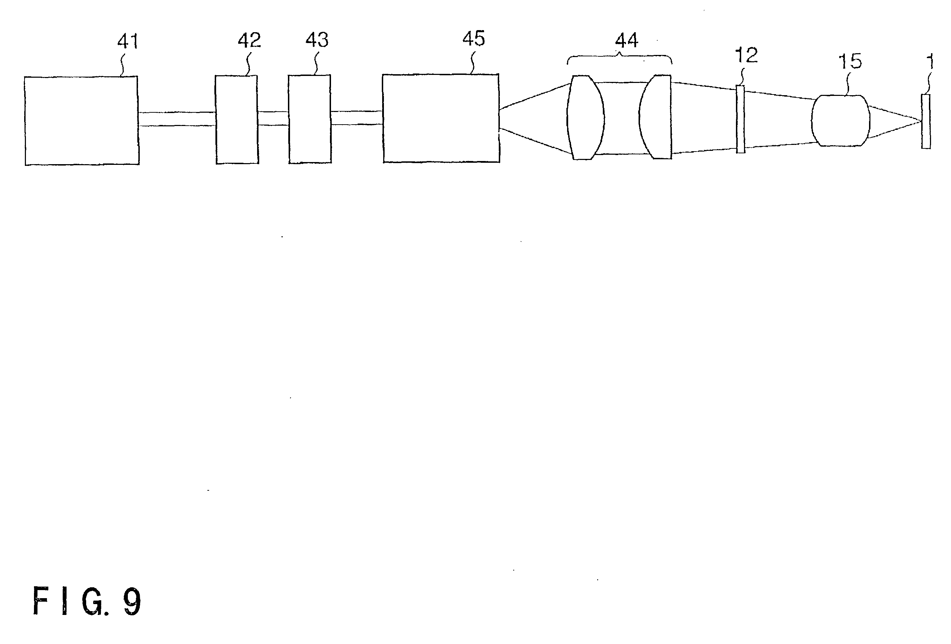

Figure 9 shows another example of the construction of the optical system for irradiating laser used in the present invention wherein the same reference numerals designate the same or corresponding parts.

Pulsed laser 11 emitted from the pulse laser light source 41 reaches the beam expander 45 through the programmable shutter 42 and the attenuator 43. The beam expander 45 is used to increase once the beam diameter before the image formation in such a case that the reduction ratio of projection of the mask is increased.

Then, the laser 11 is passed through the condenser lens 44 to reach the photomask 12 in which the intensity distribution of the laser is changed according to the magnetic pattern, and then, is passed through the imaging lens 15 whereby a reduced image is formed on the surface of the disk 1.

In order to equalize the intensity distribution of energy, a homogenizer may be used instead of the condenser lens. Or, the condenser lens and the homogenizer may be used together.

Or, when such equalizing means is not used, a slit or the like may be used to shield a weak energy portion and to take only an energy portion having a good distribution of energy.

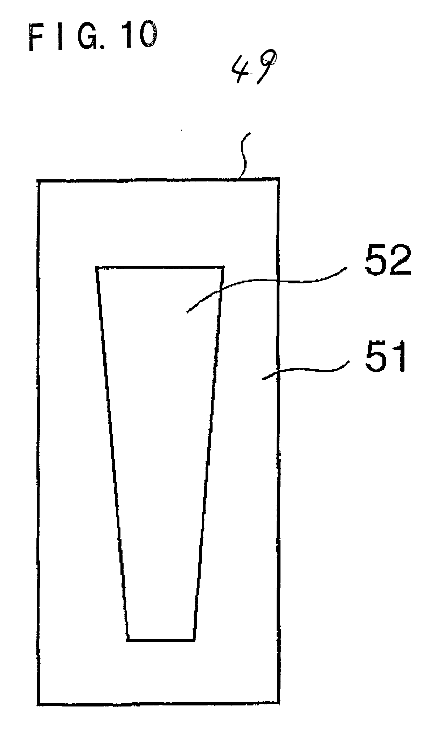

Further, the energy beams may be shaped into a desired beam shape by using a shading plate. Figure 10 is a diagram showing an example of the shading plate 49. The shading plate 49 comprises a substrate 51 which hinders laser 11 to pass therethrough wherein a laser transmitting portion 52 having a shape corresponding to a desired beam shape is formed. In Figure 10, a substantially sectorial shape is shown as an example. However, another shape such as a substantially rectangular shape may be used.

The shading plate prevents the irradiation of laser to an undesired area or prevents re-irradiation of laser to an area where a magnetic pattern has already been formed. However, the shading plate is provided according to need. Although the position to be located is not limited, it is desirable to locate it just before or just after the mask.

As described above, the structure and the order of the optical system used in the present invention may be changed according to demand.

The second external magnetic field applying means may be positioned at either side with respect to the disk surface. In the above-mentioned embodiment, however, the second external magnetic field applying means is positioned at a disk surface side to which the irradiation of laser is conducted, whereby there is no possibility to shield the laser. However, the external magnetic field applying means may be disposed at the surface side to which laser is irradiated by contriving so as not to hinder the laser. In a case that a strong magnetic field is desired, the applying means is preferably disposed at each side of the disk surface.

Next, explanations will be made as to the method for producing a magnetic recording medium according to the present invention.

The method for producing a magnetic recording medium of the present invention comprises a step of forming a magnetic layer and a protective layer on a substrate, a step of forming a lubricant layer and the above-mentioned magnetic pattern forming step. Accordingly, a fine pattern can precisely and easily be formed in a short time. When the surface roughness Ra after the formation of a magnetic pattern is 3 nm or less, there are almost no projections and recesses, and therefore, there is no possibility that the movement of flying type/contact type head becomes unstable. The formation of the magnetic layer, the protective layer and the lubricant layer can be conducted according to usual methods. For example, the magnetic layer and the protective layer can be formed by a sputtering method or CVD method, and the lubricant layer can be formed by a dip coating method.

The magnetic pattern forming method may be used for recording data. However, it is preferably used for forming a control pattern for controlling a recording/reproducing magnetic head because a magnetic recording medium permitting highly accurate control such as position control or synchronizing control for the head which can be kept stably.

In the producing method of the present invention, the lubricant layer may be formed after the formation of a magnetic pattern, more preferably, both before and after the formation of the pattern.

When a magnetic pattern is formed in the combination of the heating of a local area and the application of an external magnetic field, a partial reduction of the lubricant on the magnetic recording medium may occur by the heating. Further, the contact of the lubricant layer to the mask may occur whereby the lubricant decreases.

The reduction of the lubricant layer decreases the impact resistance and the durability to the magnetic head. Accordingly, it is preferred that an additional lubricant layer is formed after the formation of the magnetic pattern in the combination of the locally heating and the application of an external magnetic field to thereby provide a sufficient layer thickness, whereby a high impact resistance and durability to the magnetic head can be achieved.

In this case, two embodiments can be considered.

Embodiment A: There is no lubricant layer formed before the formation of a magnetic pattern, and a lubricant layer is formed after the formation of the magnetic pattern.

Embodiment B: A first lubricant layer is formed before the formation of a magnetic pattern, and a second lubricant layer is formed after the formation of the magnetic pattern.

Each of the embodiments will be described in detail.

### (1) Embodiment A

A magnetic disk is produced by forming a NiAl underlayer, a CrMo underlayer, a Co type alloy magnetic layer, a diamond-like carbon protective layer and so on by sputtering, on a glass substrate or an aluminum alloy substrate, for example.

Then, inspection of defects (certify) is carried out with, for example, a non-contact optical surface testing device. The lubricant layer is unnecessary because high speed testing can be conducted, and the magnetic head is not used.

A magnetic pattern is formed according to the above-mentioned method. For example, a strong external magnetic field is applied to the magnetic disk to magnetize uniformly the magnetic layer in a desired direction before heating, and then, a desired portion is heated to a level close to the Curie temperature, and at the same time, that portion is magnetized by applying an external magnetic field having an opposite direction whereby the magnetic pattern can be obtained. Then, the lubricant layer is formed by coating lubricant.

In Embodiment A, since no lubricant layer is formed before the formation of the magnetic pattern, there is no danger of causing scattering, diffraction, interference of the energy beams for heating due to the presence of the lubricant layer. Further, the magnetic recording medium can be brought to close contact with the mask, and therefore, the deposition of lubricant onto the mask is avoidable. Accordingly, the diffraction of the energy beams can be minimized, and a magnetic pattern of clear shape and high signal output can accurately be formed.

Further, since a lubricant layer having a sufficient thickness can be provided after the formation of the pattern, the impact resistance and the durability to the magnetic head are high.

At the final step of the production, the magnetic disk is usually subjected to a burnishing process with use of burnishing head by which projections having a predetermined height or more are removed. Then, the presence or absence of the projections is inspected, and inspection of defects (certify) is conducted wherein the position and the number of defects are detected by recording/reproducing a specified pattern with a magnetic head.

This embodiment is preferably applied to cases that the recording/reproducing of data are carried out by the magnetic head before the formation of the magnetic pattern, and tests and evaluation are not conducted. For example, it is possible to conduct tests without using a magnetic head such as the non-contact type optical surface testing device before the formation of the pattern. Tests by the magnetic head may be conducted after the lubricant layer has been formed after the formation of the pattern. Or, it is considered that tests by the magnetic head is not conducted at all.

Generally, the formation of the lubricant layer is performed by coating lubricant by, for example, a spin coat method, a pull-up coating method, a spray coating method or an optional coating step. The pull-up coating method is appropriate in order to form uniformly a lubricant layer on a large number of media in a short time.

The lubricant preferably includes perfluropolyether, dialkylamidecarboxylate, perchloropolyether, stearic acid, sodium stearate, phosphoric acid ester or the like, having an ester linkage. The ester linkage may be in any site in the molecules. However, when it has a functional group of the ester linkage at a terminal, a movable part in the molecules is elongated and lubricating properties are easily obtainable.

In particular, perfluoropolyether having -CₐF₂ₐO-unit (where a is an integer of 1-4) at the may chain and a functional group of ester linkage at a terminal is preferable. More preferably, there is a perfluoroether represented by the following general formula (I):

R-O-(A¹-O-A²-O)_{X}-R (I)

where each end of A¹ and A² is CF₂ and/or C₂F₄; the proportion of CF₂ to C₂F₄ as A¹ and A² (CF₂/C₂F₄) is 5/1-1/5; X represents 10-500 and R represents an alkyl group having a carbon number of 1-20 containing a hetero atom or a fluorinated alkyl group).

For example, Fomblin-Z-DOL manufactured by Ausimont Company is a copolymer of CF₂CF₂O and CF₂O having a linear chain structure and having ester group-COOR (R represents an alkyl group which may be substituted by fluorine) at both terminals. Further, Demnum type (SP or SY) manufactured by Daikin Company is a homopolymer of hexafluoropropylene oxide having an ester group-COOR at one terminal (where R represents an alkyl group which may be substituted by fluorine).

The number average molecular weight of the lubricant is preferably 100-10,000, more preferably, 2,000-6,000. When the molecular weight is low, vapor pressure will be high, whereby evaporation results little by little after coating. As a result, the layer thickness which is originally expected changes with a lapse of time. On the contrary, when the molecular weight is high, the viscosity will increase whereby there is a case that desired lubricating properties can not be obtained.

Preferably, Fomblin-Z-DOL (tradename) or Fomblin-Z-Tetraol (tradename) manufactured by Ausimont Company may be used.

Solvent for dissolving such material may be a flon type, an alcohol type, a hydrocarbon type, a ketone type, an ether type, a fluorine type, an aromatic type or the like.

It is preferred to conduct a heating treatment after the formation of the lubricant layer in order to enhance the chemical bonding of the lubricant and the medium.

The heating temperature is generally 50°C or higher. However, the temperature is properly selected in a temperature range lower than the decomposition temperature of the lubricant. The heating temperature is usually 100°C or lower.

The thickness of the layer formed by coating the lubricant is preferably 10 nm or less. When the thickness is excessively large, expected lubricating properties can not be obtained, and an excessive amount of lubricant moves to an outer portion with the rotation of the disk whereby there is apt to takes place a layer thickness distribution between inner and outer portions. However, when the thickness is too small, expected lubricating properties can not be obtained. Therefore, the thickness is preferably 0.5 nm or more, more preferably, 1 nm or more, particularly preferably, 1.5 nm or more.

### (2) Embodiment B

A magnetic disk is produced by providing a NiAl underlayer, a CrMo underlayer, a Co type alloy magnetic layer, a diamond-like carbon protective layer and so on by sputtering, on a glass substrate or a substrate of aluminum alloy or the like, and then, forming a first lubricant layer thereon, for example.

Then, the magnetic disk is subjected to a burnishing step with a burnishing head to remove projections having a predetermined height or more. The presence or absence of the projections is inspected. Further, inspection of defects (certify) wherein the position and the number of defects are detected by recording or reproducing a specified pattern with a magnetic head, is conducted.

Then, a magnetic pattern is formed in the same manner as Embodiment A.

According to Embodiment B, since the first lubricant layer is already formed, the recording or reproducing data with use of the magnetic head can be conducted before the formation of the magnetic pattern as well as various tests and evaluation. For example, the position and the number of defects can be inspected by recording or reproducing a specified pattern by using the magnetic head. The test conducted before the formation of the magnetic pattern dispenses with erasing the specified pattern used for the test because the specified pattern is overwritten with a desired magnetic pattern. The presence of a projection or dust causes irregular reflection of energy beams whereby the magnetic pattern is disordered. Accordingly, it is desirable to conduct previously inspection to select media free from projections or dust. Further, since the magnetic pattern is formed in media which pass the test, waste steps can be reduced and it is advantageous in cost.

Further, the lubricant layer should be formed as early as possible after the formation of the protective layer because stable bonding of the lubricant layer is easily obtainable.

Usually, the lubricant layer has a fixed portion and a free portion. The lubricant on the magnetic recording medium (i.e., a protective layer because it is generally formed on the outermost plane of the medium) is bonded to the medium surface and is fixed. Namely, it is chemically bonded firmly to the protective layer or the magnetic layer. In addition to this, there is unfixed, free lubricant. It is necessary that both the fixed portion and the free portion exist properly in order to assure the magnetic recording medium of sufficient durability.

According to studies by the inventors of this application, it is supposed that a portion of the lubricant layer which causes a loss of weight by the heating is mainly the free portion, and the loss of weight in the fixed portion is little.

Accordingly, it is ideal that the first lubricant layer comprises mainly the fixed portion which is difficult to volatile even by the heating. For this, the first lubricant layer should be thin as possible, preferably, 2.0 nm or less. The provision of a thin layer thickness minimizes the scattering, diffraction and interference of energy beams. Further, since the free portion of lubricant is small and an amount of vaporization is small even by the heating the local area of the medium, the contact of the first lubricant layer to the mask can be prevented. With such measures, a magnetic pattern having a clear shape and high signal output ability can be formed with good accuracy. The thickness is more preferably, 1.0 nm or less.

On the other hand, it is necessary for the lubricant layer to be thick in order to maintain the durability and the impact resistance to the magnetic head for a long term. For example, the thickness is preferably 1.5 nm or more. However, for the purpose of only test or evaluation, the lubricant layer is sufficiently durable even though the thickness is thin. Accordingly, the thickness of the first lubricant layer is preferably 0.1 nm or more, more preferably, 0.5 nm or more in order to withstand during short-time recording or reproducing by the magnetic head.

Or, the first lubricant layer may be removed prior to the formation of the magnetic pattern after the magnetic recording medium has been subjected to a test with use of the magnetic head. In this case, such problems that energy beams used for heating are hindered by the lubricant layer in forming a magnetic pattern, and the accuracy of the magnetic pattern decreases by the deflection of the energy beams in irradiating the energy beams through a mask, due to a space corresponding to the thickness of the lubricant layer if that layer exists between the mask and the magnetic recording medium, can be reduced. Further, the vaporization of the lubricant by the heating can be minimized, and accordingly, there is no fear of causing contamination of the mask. For example, the lubricant forming the first lubricant layer can be removed by washing it by a soluble cleaning agent.

Then, the second lubricant layer having a sufficient thickness can be provided after the formation of the pattern in order to compensate a decrease of the lubricant layer in the heating step, or to re-constitute the removed lubricant layer, whereby it gives high impact resistance and durability to the magnetic head. Since the second lubricant layer is to compensate the free portion of the lubricant layer, the thickness can be thin in comparison with the case that the lubricant layer is formed only once. When the lubricant layer is too thick, there is apt to occur a problem that the head sticks to the medium and it is difficult to fly.

The lubricant layer is generally conducted by coating lubricant by, for example, a spin coat method, a pull-up coating method, a spray coating method or another appropriate coating step. Among them, the pull-up coating method is suitable in order to form the lubricant layer uniformly on a large number of media in a short time. However, for the purpose of forming a thin film, the spin coat method wherein the lubricant is scattered by the centrifugal force is also suitable.

Further, it is preferred to make the concentration of the lubricant, in forming the second lubricant layer, lower than the concentration of the lubricant in forming the first lubricant layer. Preferably, it is about 50% or lower of the concentration of the lubricant applied at the first time, and more preferably, about 10-20% of the concentration of the lubricant applied at the first time.

The lubricant for forming the second lubricant layer may be different from the lubricant for the first lubricant layer. However, the same lubricant is preferably used in order to simplify the steps. When the same lubricant is used for the first and second lubricant layers, the lubricant layers constitutes a single layer as a whole.

Applicable lubricant and solvent can be the same as those used in Embodiment A.

The thickness of the layer in the fixed portion in which it chemically bonds to the medium varies more or less depending on the kinds of lubricant. The thickness is in a range of about 0.5-1.0 nm. The lubricant having a polar group at a terminal is generally thick. For example, in the lubricant of Fomblin-Z-DOL (tradename) manufactured by Ausimont Company has no polar group at a terminal. Accordingly, the fixed portion is relatively thin. Since such one having a high molecular weight exhibits a high viscosity and poor flow properties, so that it is difficult to flow, and it tends to be thick. The above-mentioned DOL series shows the tendency of increasing the thickness as the molecular weight becomes higher.

Or, in order to control the layer thickness of the lubricant accurately, the lubricant may be removed by washing it by an appropriate solvent before the formation of a magnetic pattern, and then, the lubricant may be coated again after the formation of the magnetic pattern.

The solvent for cleaning may be such one having a high solubility to the lubricant and non-corrosive properties to the medium, such as flon type, alcohol type, hydrocarbon type, ketone type, ether type, fluorine type, aromatic type and the like.

It is preferred to conduct a heating treatment after the formation of the lubricant layer in order to enhance the chemical bonding of the lubricant to the medium. The temperature of heating is 50°C or higher. However, it may be properly selected in a temperature range which is lower than the decomposition temperature of the lubricant. Generally, the temperature is 100°C or lower.

The total layer thickness of the lubricant is preferably 10 nm or less. If the thickness is too large, expected lubricating properties can not be obtained, and an excessive amount of the lubricant is moved to the outer portion with the rotation of the disk whereby there is apt to occur a distribution of film thickness between the inner and outer portions. However, if the thickness is too small, expected lubricating properties can not be obtained. Therefore, the thickness is preferably 0.5 nm, or more, more preferably, 1 nm or more, particularly preferably, 1.5 nm or more.

Next, the magnetic recording device according to the present invention will be described.

The magnetic recording device of the present invention comprises a magnetic recording medium in which a magnetic pattern is formed according to the above-mentioned magnetic pattern forming method, driving means for driving the magnetic recording medium in a recording direction, a magnetic head having a recording portion and a reproducing portion, means for moving relatively the magnetic head with respect to the magnetic recording medium, and recording/reproducing signal treating means which supplies a recording signal to the magnetic head and receives a reproducing signal from the magnetic head. As the magnetic head, a flying type/contact type magnetic head is generally used to perform high density recording.

Such magnetic recording device is capable of high density recording because the magnetic recording medium in which a magnetic pattern such as fine, highly precise servo pattern and so on is formed, is used. Further, use of the medium of flaw-free and less defect lessens errors in recording.

Precise servo signals can easily be obtained by using the magnetic recording device in which after the magnetic recording medium has been assembled in the device, the above-mentioned magnetic pattern is reproduced by the magnetic head to obtain signals, and the servo burst signals produced based on such signals are recorded by the magnetic head.

Further, it is preferable that signals recorded as the magnetic pattern formed by the present invention remain in an area which is not used as a user's data area, after the servo burst signals have been recorded by the magnetic head. In this case, the magnetic head can easily be moved to a desired position even when a positional deviation of the magnetic head takes place due to any disturbance. Accordingly, such a magnetic recording device having signals produced by the both recording methods is highly reliable.

A magnetic disk device as a typical example of the magnetic recording device will be described.

The magnetic disk device comprises generally a shaft for holding a single or a plurality of magnetic disks by penetrating it or them, a motor for rotating the magnetic disk or disks connected to the shaft by interposing a bearing or bearings, a magnetic head for recording and/or reproducing information, an arm attached with the head and an actuator for moving the head via the arm to a desired position on the magnetic recording medium, wherein the head for recording/reproducing is moved above the magnetic recording medium at a constant flying height. Data or information is recorded by the magnetic head after it has been converted into recording signals via signal treating means. Further, reproducing signals taken by the magnetic head are converted inversely by means of the signal treating means whereby a reproducing information is obtainable.

Information signals are recorded for each sector of the disk along tracks formed concentrically in the disk. A servo pattern is generally recorded between sectors. The magnetic head takes the servo signals from the servo pattern whereby the head performs correctly tracking along the center of a track to read the information signals in the sectors. In the recording, the tracking is performed as well.

As described above, since the servo pattern generating servo signals is used for the tracking in recording information, high accuracy is in particular required. Further, since a servo pattern widely used at present is comprised of two sets of patterns per track, wherein the patterns are shifted mutually by 1/2 pitch, it is necessary to form the servo pattern for each 1/2 pitch of information signals, and accuracy is required twice.

However, in the conventional servo pattern forming method, vibrations are resulted in the magnetic recording device because the center of gravity of the outer pin is different from that of the actuator. Accordingly, the width of the track was considered to be about 0.2-0.3 µm as the minimum value. Therefore, the accuracy of the servo pattern can not follow an increase of track density, and it is difficult to improve recording density and to reduce cost for the magnetic recording device.

According to the present invention, since a magnetic pattern of high accuracy can effectively be formed by using the reduced image forming technique, the servo pattern can be formed accurately at a very low cost in a short time in comparison with the conventional servo pattern forming method. For example, the track density of the medium can be increased to 40 kTPI or more. Accordingly, the magnetic recording device using the medium according to the present invention permits high density recording.

Further, use of a phase servo system provides continuously changing servo signals whereby the track density can be increased. Since the tracking under the condition of a width of 0.1 µm or less is possible, further high density recording can be performed.

As described before, a magnetic pattern extending linearly in a oblique direction with respect to the radius of the disk from its inner circumferential portion to an outer circumferential portion is used in the phase servo system. A pattern continuous to the radial direction or a pattern oblique to the radius was difficult to form by the conventional servo pattern forming method wherein the servo signal was recorded for each track while the disk was rotated, and complicated calculation or a complicated system structure were needed.

According to the present invention, however, since it is enough to prepare once a mask corresponding to the shape, and to irradiate energy beams to the mask, the pattern can easily be formed, whereby the medium for the phase servo system can easily and economically formed in a short time. Further, a magnetic recording device capable of high density recording and using the phase servo system can be provided.

In the conventional servo pattern forming method widely used, a medium is assembled in a magnetic recording device (drive), and then, a servo pattern is formed with a servo writer for exclusive use in a clean room.

Each drive is mounted on the servo writer. The pin of the writer is inserted into the opening formed in either a front surface or a rear surface of the drive, and recoding is conducted for each pattern along a track while the magnetic head is moved mechanically. Accordingly, it takes much time as about 15-20 min per drive. Since the servo writer of exclusive use and the opening is formed in the drive, these operations have to be conducted in the clean room, and the processes are complicated so that manufacturing cost increases.

In the present invention, by irradiating energy beams through the mask in which the pattern is previously recorded, the servo pattern or the standard pattern for recording the servo pattern can be recorded in a lump, and accordingly, the servo pattern can be formed in the medium in a short time by a very simple manner. The magnetic recording device with the medium in which the servo pattern is formed dispenses with the above-mentioned servo pattern writing step.

The magnetic recording device with the medium in which the standard pattern for recording the servo pattern is formed permits to write in a desired servo pattern on the basis of the standard pattern. Therefore, the above-mentioned servo writer is unnecessary, and the operations in the clean room is also unnecessary.

Further, since it is unnecessary to form an opening at any side of the magnetic recording device, the device is preferable from the viewpoint of durability and safety.

Further, since the mask does not contact the medium, a damage of the magnetic recording medium by the coming to contact with another structural member or a damage of the medium due to the interposition of a fine dust or foreign matter can be prevented to thereby prevent occurrence of defects.

As described above, according to the present invention, the magnetic recording device capable of high density recording is obtainable by simple steps at a low cost.

Various kinds of magnetic head such as thin film head, a MR head, a GMR head, a TMR head and so on may be used. By constituting the reproducing portion of the magnetic head by the MR head, a sufficient signal intensity can be obtained even in high density recording, and a magnetic recording device of higher recording density can be realized.

When the magnetic head is moved at a flying height of not less than 0.001 µm but not more than 0.05 µm, an output of signal is improved to provide a high S/N and a magnetic recording device of large capacity and being highly reliable can be provided.

Further, when such technique is combined with a signal treating circuit according to a special decoding method, the recording density can further be improved. For example, a sufficient S/N can be obtained when recording or reproducing is performed with a track density of 13 kTPI or more, a linear recording density of 250 kFCI or more and a recording density of 3G bits or more per square inch.

Further, the signal intensity can further be increased by constituting the reproducing portion of the magnetic head by a plurality of electrically conductive magnetic layers, which provide a large change of resistance due to a relative change of mutual magnetization directions by the application of an external magnetic field, and a GMR head comprising an electrically conductive non-magnetic layer located between the plurality of electrically conductive magnetic layers, or a GMR head utilizing a spin-valve effect. With use of such magnetic head, a highly reliable magnetic recording device having a recording density of 10G bits or more per square inch and a linear recording density of 350 kFCI or more can be realized.

There may arise a problem when a magnetic disk in which a servo pattern is written (preservo disk) is attached to the rotating shoat (spindle) of a magnetic recording device. Namely, when the disk is assembled in the magnetic recording device, the servo pattern is apt to be eccentric to the rotating shaft because the center of the disk is not precisely in agreement with the axial center. In this case, accordingly, the following correcting means are employed for example. Namely, after the preservo disk is assembled in the magnetic recording medium, a quantity of eccentricity of the servo track of the disk having a some degree of eccentricity with respect to the standard pattern is once measured by a firmware at a side of the magnetic recording device, and then, a eccentricity-free tracking pattern is written anew on the basis of the result of measurement.

However, the provision of such correcting means increases cost. Although the position of the head can be controlled without re-writing the servo pattern, an additional tracing of the head for the amount of eccentricity of the disk has to be done. This causes a problem of difficulty in reducing power consumption rate. With an increase of track density, such problem is further notable.

In view of the above, it is preferable that a hub structure capable of being attached to the rotating shaft of the magnetic recording device without looseness is provided at a central portion of the substrate of the magnetic disk, and a servo pattern is recorded according to the above-mentioned magnetic pattern forming method by taking the center of revolution of the hub structure as standard.

Since the hub structure can be attached to the rotating shaft of the magnetic recording device (for reading the servo pattern) without looseness, the center of revolution of the hub structure, i.e., the center of revolution of the substrate can be in agreement with the axial center of the rotating shaft when the hub structure is attached to the rotating shaft. Further, since the servo pattern is recorded by taking the center of revolution of the hub structure as standard, it is coaxial to the axial center of the rotating shaft in a state that the hub structure is attached to the rotating shaft.

It is preferred that the hub structure has a thickness larger than the thickness of the substrate in order to increase the accuracy of attachment to the rotating shaft of the magnetic recording device. The servo pattern is in fact recorded by taking several positions as standard. Namely, the servo pattern is recorded by taking an inner circumferential surface of a cylindrical central opening, as standard, formed in the hub structure to which the rotating shaft is fitted. Or, the servo pattern is recorded by taking an outer circumferential surface, as standard, formed in the hub structure, the outer circumferential surface being coaxial with the center of revolution.

Explanation will be made in more detail with reference to drawings.

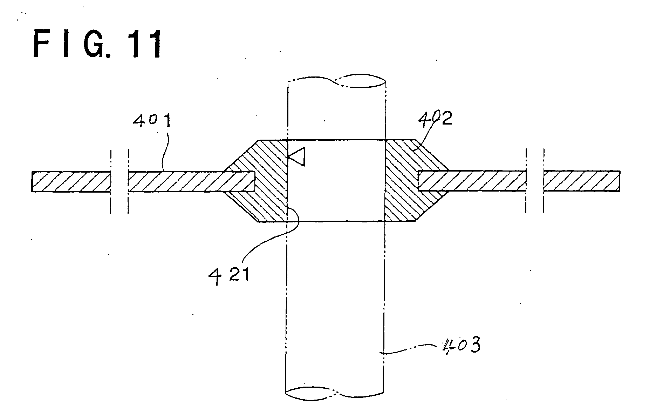

Figures 11-16 are respectively longitudinal cross-sectional views of an important portion of the disk according to the present invention.

The disk comprises a substrate 401 in which a servo pattern for tracking servo is recorded and a hub structure 402. The substrate 401 is a thin plate-like information recording member for recording information. In a recording surface of the disk (a recording surface of the substrate 401), tracks for recording information are formed in a specified format. Further, servo signal recording areas (servo tracks) for generating servo signals are formed in spaces between adjacent tracks extending continuously in a direction perpendicular to the direction of moving the head. A servo pattern for generating control signals for tracking servo in determining the position of the head (a train of codes for generating servo signals) is recorded in the servo signal recording areas. The servo pattern is not limited to a tracking pattern to produce servo signals, but may be a reference pattern for recording the tracking pattern (a train of codes for generating reference signals).

The hub structure 402 whose wall thickness is larger than that of the substrate 401 is provided in the central portion of the disk in order to read the servo pattern without using the above-mentioned correcting means. The hub structure 402 is adapted to be attached without looseness to a rotating shaft (spindle) 403 of a rotating mechanism in a device for reading the servo pattern such as a hard disk device (hereinbelow, referred to as a "magnetic recording device"). The servo pattern is recorded by taking the center of revolution of the hub structure 402 as standard.

As shown in Figure 11, the substrate 401 is a doughnut-like thin plate, and the hub structure 402 is provided at the central opening of the substrate 401. The hub structure 402 is generally made of a metallic material such as aluminum, brass, iron, stainless steel or the like. For the hub structure 402 attached to the substrate 401 before the formation of layers by sputtering, thermal resistance is required as well as formability. Accordingly, an aluminum alloy is preferably used for material for the hub structure 402. Further, the hub structure 402 may be formed of a synthetic resin such as polycarbonate, nylon, ABS resin or the like in a case that it is attached just before the servo pattern is written in.

The disk can be produced by using a step of making the substrate 401 in the same manner as making the conventional disk, a step of attaching the hub structure 402 prepared separately to the substrate 401 and a step of recording a predetermined servo pattern in the substrate 401. In a disk of synthetic resin formed by one-piece molding, it is prepared mainly by a step of producing integrally the substrate 401 and the hub structure 402 and a step of recording a predetermined servo pattern in the substrate 401.

The hub structure 402 made of, for example, metal is generally subjected to a machine work such as grinding. The hub structure 402 is generally formed to have a wall thickness which is about 3-10 times as much as that of the substrate 401. By utilizing the thickness, the accuracy of fitting of the hub structure 402 to the rotating shaft 403 of the magnetic recording device can further be increased. The hub structure 402 is required to be fitted to the rotating shaft 403 without looseness as mentioned above. Specifically, the diameter of a central opening 421, which is used as standard in recording the servo pattern, should have a tolerance of about in a range of 0 to -40 µm, preferably, in a range of -20 to -40 µm to the diameter of the rotating shaft 403, so that the hub structure 402 can be press-fitted to the rotating shaft 403. Regarding the tolerance, a sign of "-" means that the diameter of the central opening 421 is smaller than an outer diameter of the rotating shaft 403.

In a case that the hub structure 402 is made of an aluminum alloy, the hub structure 402 is formed to have a cylindrical deformable portion (not shown) at at least one end side. By inserting the cylindrical deformable portion into the central opening of the substrate 401 and deforming the inserted portion as if caulking is conducted, whereby the hub structure 402 can be attached to the substrate 401 in a state as shown in Figure 11. The hub structure 402 can be attached to in any step between the preparation of the original plate for the substrate 401 and just before the recording of the servo pattern in the substrate 401.

The servo pattern is recorded by taking the revolution center of the hub structure 402 as standard. Specifically, the hub structure 402 is provided with the cylindrical central opening 421 to which the rotating shaft of the magnetic recording device is fitted without looseness as shown in Figure 11, and the servo pattern is recorded by taking the inner circumferential surface of the central opening 421 of the hub structure 402 as standard (the triangle mark indicates the reference point) as shown in Figure 11. Thus, the servo pattern can be recorded concentrically around the revolution center of the hub structure 402, and the eccentricity of the servo pattern which may be caused when the magnetic disk is assembled in the magnetic recording device, can be prevented.

The recording of the servo pattern is conducted according to the above-mentioned magnetic pattern forming method.

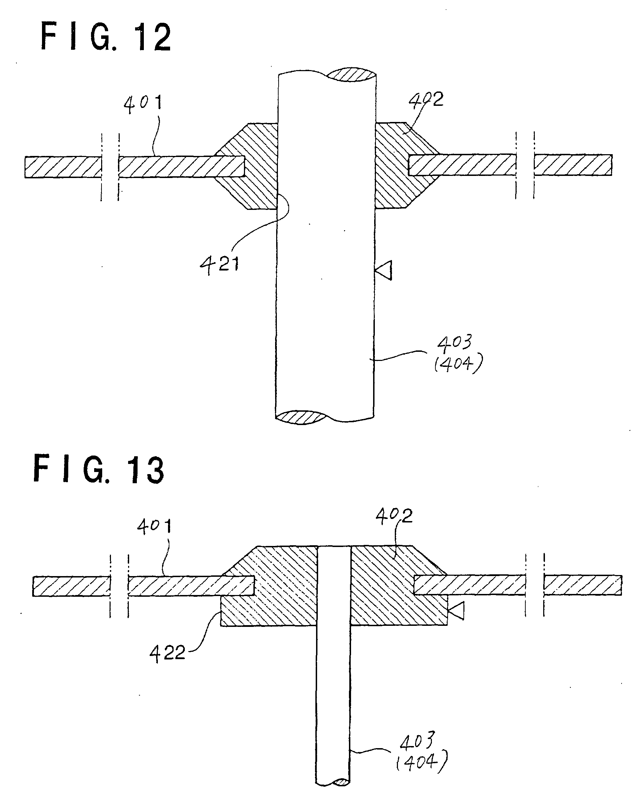

As shown in Figure 12, the tolerance of the central opening 421 of the hub structure 402 to a rotating shaft or shaft 404 (hereinbelow, it may be referred to as "shaft") in a magnetic pattern forming device (hereinbelow, it may be referred to as "a pattern forming device") is a tolerance of a negative sign. By determining, the standard for recording the servo pattern can be given to an outer circumferential surface of the shaft 404 at the side of the pattern forming device instead of the inner circumferential surface of the central opening 421 (a triangle mark indicates a reference point in Figure 12). Before the servo pattern is recorded, the shaft 404 is inserted into the central opening 421 of the hub structure 402 by slightly pushing the hub structure 402 in consideration of the removal of the shaft 404 after the recording. Accordingly, the tolerance of the diameter of the central opening to the diameter of the shaft 404 is in a range of about 0 to -10 µm.

Namely, the mask in which the servo pattern is formed and a disk to which image printing is conducted are arranged coaxially with respect to the axial enter of the pattern forming device. Then, the print of the servo pattern is conducted to the disk by taking the revolution center of the disk as standard, whereby the print is performed without no eccentricity. Namely, according to the method for producing a disk of the present invention, the mask and the disk printed are arranged coaxially whereby precise alignment of the mask to the disk is obtainable. Accordingly, the servo pattern in the mask can be printed to the disk without eccentricity.

The hub structure 402 can be fitted to the shaft 404 of the pattern forming device without looseness by determining the above-mentioned tolerance for fitting. Further, by utilizing the structure of thickened wall, i.e. the length of the central opening 421, the hub structure can be fitted to the shaft 404 with high accuracy in dimension without inclination, whereby the revolution center of the hub structure 402, i.e., the revolution center of the substrate 401 can be in alignment with the axial center of the shaft 404 of the pattern forming device. Accordingly, the servo pattern can be recorded concentrically by taking the revolution center of the substrate 401 as standard.

Also, the hub structure 402 is fitted to the rotating shaft 403 of the magnetic recording device without looseness by determining the tolerance to be -20 to -40 µm. Further, by utilizing the structure of thickened wall, the hub structure can be fitted to the rotating shaft 403 with a higher accuracy in dimension, without inclination. Accordingly, the revolution center of the hub structure 402, i.e., the revolution center of the substrate 401 can be in agreement with the axial center of the rotating shaft 403 at the side of magnetic recording device.

Since the servo pattern is recorded previously in the substrate 401 by taking the revolution center of the hub structure 402 as standard, the position of the servo pattern in the disk is coaxial with the axial center of the rotating shaft 403 without eccentricity in a state that the hub structure 402 is attached to the rotating shaft 403 of the magnetic recording device.

Namely, with the hub structure 402 having a specified structure, the disk can precisely be aligned with the shaft, and the standard for recording the servo pattern can be the same as the standard for reading it. Accordingly, the head can correctly read the servo pattern in an eccentricity-free state without using special correcting means.

In a case that the previously recorded servo pattern is only the standard pattern, a tracking pattern free from eccentricity can correctly be written in on the basis of such standard pattern. As a result, cost for treating the servo signals can be reduced. In particular, such measures are effective for high density recording. Further, since a quantity of tracking by the head is further reduced, power consumption rate required to reading and/or writing information can further be reduced.

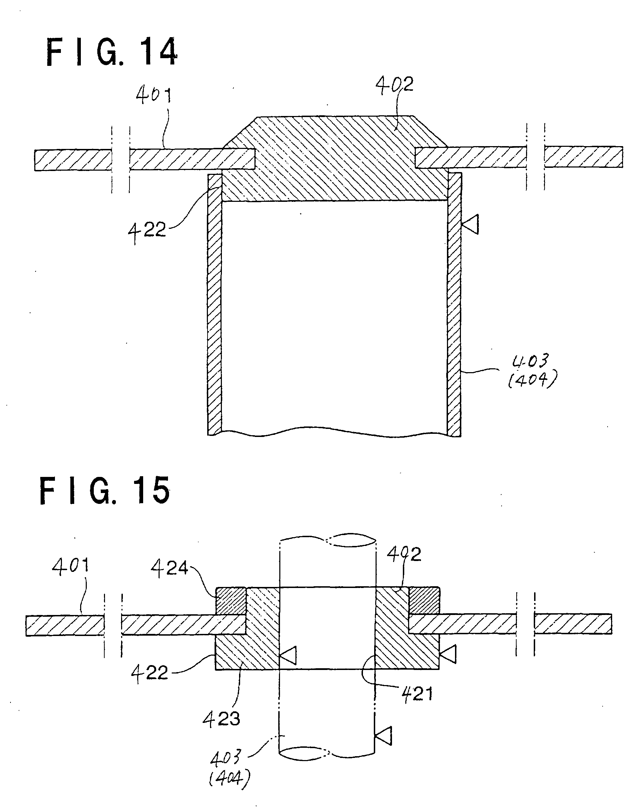

Further, the reference point of the hub structure to the disk may be determined at such positions as shown in Figures 13 and 14. Namely, the hub structure 402 has an outer circumferential surface 422 which is coaxial with its revolution center, and the servo pattern is recorded by taking the outer circumferential surface 422 of the hub structure 402 as standard.

Specifically, the hub structure 402 has a generally round column-like shape wherein an upper end side of which is in a frustum of cone. The hub structure 402 can be fitted to the rotating shaft 403 of the magnetic recording device or the shaft 404 of the pattern forming device without looseness. Further, the shape in cross-section of the round column-like portion of the hub structure 402, which is taken perpendicular to the axial centerline of the portion, is a true circle. Accordingly, the servo pattern can be recorded by taking the outer circumferential surface 422 of the round column-like portion of the hub structure 402 as standard (the triangle mark indicates the reference point).

As described above, since the outer circumferential surface 422 of the hub structure 402 is formed to have a true circle, the center of which is coaxial with the revolution center of the hub structure, the servo pattern can be recorded in the substrate 401 coaxially by taking the revolution center of the hub structure 402 as standard even in the case that the outer circumferential surface 422 is determined to be the standard. The embodiment shown in Figure 13 is effective when the rotating shaft 403 of the magnetic recording device or the shaft 404 of the pattern forming device is not exposed outside or has a small diameter so that it is difficult to use it as standard.

The sub structure 402 shown in Figure 14 has substantially the same structure as that shown in Figure 13. The hub structure 402 is adapted to be attached, without looseness, to the rotating shaft 403 of the magnetic recording device or the shaft 404 of the pattern forming device wherein the rotating shaft 403 or the shaft 404 is formed to have a cylindrical shape of larger diameter. Namely, the round column portion of the hub structure 402 can be attached to the rotating shaft 403 or the shaft 404 by fitting it to an end opening of the rotating shaft 403 or the shaft 404. The cylindrical rotating shaft 403 or the shaft 404 having a larger diameter corresponds to a case-like rotating body attached to the actual rotating shaft extending from a motor.

In this case also, if the shape in a cross-sectional view of the outer circumferential surface 422 of the hub structure 402 and the rotating shaft 403 or the shaft 404 is a true circle, and the axial center of these members is coaxial with each other in the same manner as the case of Figure 13, the servo pattern can be recorded concentrically with respect to the substrate 401 by taking the revolution center of the hub structure 402 as standard, on the basis of the outer circumferential surface of the rotating shaft 403 or the shaft 404 being taken as standard.

Further, in the disk of the present invention shown in Figures 13 and 14 too, precise alignment of the disk to the shaft owing to the thickened wall structure and the fitting structure free from looseness of the hub structure 402 can be obtained, and the standard used for the recording the servo pattern can be the same as the standard for reading the servo pattern, in the same manner as the disk shown in Figures 11 and 12. Accordingly, the servo pattern can correctly be read by the head without using special correcting means. Further, when the servo pattern previously recorded is only the standard pattern, a tracking pattern can correctly be written on the basis of the standard pattern. The rotating shaft 403 or the shaft 404 may be a shaft formed as an inner race of a bearing. Such shaft is preferable because its outer circumferential surface assures high concentricity to the revolution center.

The hub structure may be changed as far as the servo pattern can previously be recorded by taking the revolution center of the structure as standard. For example, the hub structure 402 shown in Figure 15 comprises a round column-like hub main body 423 having a step portion: an outer circumferential portion having a larger diameter and an outer circumferential portion having a smaller diameter, and a fixing ring 424 attached to the outer circumferential portion of smaller diameter.

At the center of the hub main body 423, a cylindrical central opening 421 is formed, into which the rotating shaft 403 of the magnetic recording device or the shaft 404 of the pattern forming device can be fitted without looseness. The inner diameter of the smaller diameter portion of the hub main body 423 is formed so as to fit the central opening of the substrate 401 with the before-mentioned tolerance without looseness. The hub structure 402 is attached to the substrate 401 by press-fitting the fixing ring 424 to the outer circumferential portion of smaller diameter of the hub main body 423 which has been inserted in the central opening of the substrate 401.

In the disk provided with such hub structure 402, the servo pattern is recorded by taking an inner circumferential surface of the central opening 421 of the hub main body 423 as standard in the same manner as in Figure 11. Or, the servo pattern is recorded by taking an outer circumferential surface of the shaft 404 of the pattern forming device fitted to the central opening 421 as standard substantially, in the same manner as in Figure 12. Further, the servo pattern can be recorded by taking the outer circumferential surface 422 of the hub main body 423 as standard substantially, in the same manner as in Figure 13 as far as the outer circumferential surface 422 of the hub main body 423 is formed to have a true circle having its center which is coaxial with the revolution center of the hub structure 402 (triangle marks indicate each reference point in Figure 15).

In the disk shown in Figure 15 also, the servo pattern free from eccentricity can be recorded in the substrate 401 by taking the revolution center of the hub structure 402 as standard in the same manner as the above-mentioned embodiments. Further, when it is assembled in the magnetic recording device, precise alignment can be achieved owing to the unique structure of the hub structure 402. Further, since the standard used for recording the servo pattern can be the same as the standard for reading, the servo pattern can correctly be read without using special correcting means, and a tracking pattern can correctly be written based on the standard pattern.

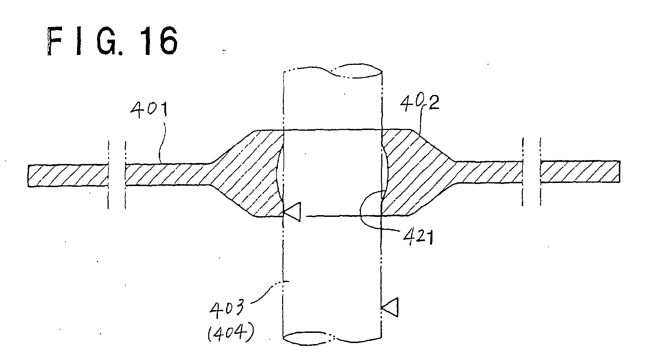

Further, in the disk as shown in Figure 16, the hub structure 402 can be formed integrally with the substrate 401. Namely, the hub structure 402 has substantially the same structure as in Figure 11 wherein it is provided with the central opening 421 of cylindrical shape to which the rotating shaft 403 of the magnetic recording device or the shaft 404 of the pattern forming device is fitted without looseness. Then, the servo pattern is recorded by taking the inner circumferential surface of the central opening 421 as standard actually, on the basis of the revolution center of the hub structure 402 with respect to the substrate 401 taken as standard. Or, the servo pattern is recorded by taking the outer circumferential surface of the shaft 404 of the pattern forming device in the same manner as the embodiment in Figure 12 (the triangle mark indicates the reference point in Figure 12).

In the disk shown in Figure 16, the servo pattern free from eccentricity can be recorded in the substrate 401 by taking the revolution center of the hub structure 402 as standard in the same manner as the above-mentioned embodiments. Further, when the disk is assembled in the magnetic recording device, precise alignment to the shaft can be achieved owing to the unique structure of the hub structure 402. Further, the standard used for recording the servo pattern can be the same as the standard for reading. Accordingly, the servo pattern free from eccentricity can correctly be read without using special correcting means. Further, a tracking pattern free from eccentricity can be correctly be written on the basis of the standard pattern. In the disk shown in Figure 16, since the hub structure 402 can be formed integrally with the substrate 401 when they are produced by the above-mentioned synthetic resin, manufacturing cost can further be reduced.

Further, as shown in Figure 16, when the inner circumferential surface of the central opening 421 or the outer circumferential surface of the rotating shaft 404 fitted to the central opening is taken as standard at the time of recording the servo pattern, the central opening 421 of the hub structure 402 may be an opening wherein the diameter of a central portion along the longitudinal axis of the opening is made slightly larger. Namely, the central opening 421 of the hub structure 402 is so adapted that when the rotating shaft 403 of the magnetic recording device or the shaft 404 of the pattern forming device is inserted in the central opening 421, both edge portions of the central opening contact the rotating shaft 403 or the shaft 404 so that the revolution center of the hub structure 402 is made agreement with the axial center of the rotating shaft 403 or the shaft 404.

The shape of the above-mentioned central opening 421 can be formed by utilizing "shrinkage cavity" resulted in injection molding of resin to form the hub structure 402. Namely, in the hub structure 402, a large shrinkage cavity is caused in its central portion having a large wall thickness after the injection molding so that the diameter of the central portion is larger than that of the both edge portions.

In the hub structure 402 made of resin, the central opening 421 is generally so formed, from the viewpoint of molding accuracy, that the rotating shaft 403 or the shaft 404 is forcibly inserted in the opening. However, when the rotating shaft 403 or the shaft 404 is fitted to the central opening 421 having a straight tube-like form, the substrate 402 may incline due to a small defect of molding in the inner circumferential surface of the central opening 421. In the above-mentioned hub structure 402 having small diameter portions at both edge portions of the central opening 421, however, since the rotating shaft 403 or the shaft 404 forcibly inserted into the central opening 421 is supported by two supporting points at the both edge portions of the central opening 421, the inclination of the substrate 402 attached to the shaft can certainly be prevented.

Description will be made as to the magnetic recording device in which the disk of the present invention is assembled.

The magnetic head is attached to the top end of a load beam (a suspension arm) as a head supporting arm having a rigid structure, and the load beam is attached to the top end of a swivel head arm with an actuator in a state that the load beam is urged to a side of the disk. The head comprises a slider of block-like shape which provides an air bearing to the disk, and a magnetic head located at a bottom surface of the slider. The magnetic head is provided with at least two head gaps for tracking, which serve as servo signal detecting means, located in a direction perpendicular to the moving direction of the head.

Control means for controlling the tracking function to analyze the servo pattern read by the head gaps to control the moving position of the head. Specifically, the head gaps are arranged at positions shifted by, for example, 0.5 times, 1.5 times, ... of the pitch of information recording tracks in a case that the magnetic head is correctly on a track. The control means performs tracking control for the magnetic head based on a change of the intensity of reproduced servo signals. When the magnetic head deviates from the center of the track, the output of signals from the head gaps is increased or decreased. Accordingly, the control means measure signal outputs to obtain an error on the center of the magnetic head with respect to the center of the track, whereby the magnetic head is controlled so as to be correctly positioned on the track.

The mechanism for rotating the disk comprises mainly a spindle motor having the above-mentioned rotating shaft 403 on which a single or a plurality of the above-mentioned disks are fixed as shown in drawings. Further, since such disk or disks having the hub structure 402 is fitted to the rotating shaft 403 of the disk rotating mechanism without looseness, the servo pattern in the substrate 401 is positioned concentrically without eccentricity with respect to the axial center of the rotating shaft 403.

Accordingly, in the magnetic recording device, when the servo pattern is read by the head by taking the revolution center of the hub structure 402 as standard wherein the outer circumferential surface of the rotating shaft 403 is utilized as standard, for example, the standard for reading the servo pattern can be the same as the standard for writing the servo pattern. Accordingly, the servo pattern free from eccentricity can correctly be read. Further, when the servo pattern previously written is only the standard pattern, a tracking pattern can correctly be written in based on the standard pattern without using special correcting means. As a result, cost for treating servo signals can be reduced. This technique is effective in a case of increasing the density of information to be recorded. Further, power consumption rate for reading and/or writing information can also be further reduced because the quantity of tracing by the head is smaller.

Now, the present invention will be described in further detail with reference to Examples. However, it should be understood that the present invention is by no means restricted to such specific Examples.

### EXAMPLE 1-1

An aluminosilicate type glass substrate having an diameter of 2.5 inch was washed and dried, and 60 nm of NiAl, 10 nm of Cr₉₄Mo₆, 22 nm of Co₇₂Cr₁₈Pt₁₀ as a recording layer and 5 nm of carbon (diamond-like carbon) as a protective layer were formed thereon under such conditions that the ultimate vacuum degree: 1×10⁻⁷ Torr, the substrate temperature: 350°C, the bias voltage: -200V, the sputtering gas: Ar, and the gas pressure: 3×10⁻³ Torr.

The surface roughness Ra was 0.5 nm, and the surface undulation Wa was 0.8 nm. As a lubricant layer, a fluorine-type lubricant was coated thereon in a thickness of 1.5 nm and baked for 100°C for 40 minutes to obtain a longitudinally recording magnetic disk having a saturated magnetization of 310 emu/cc and a coercive force of 3,000 Oe at room temperature. The Curie temperature of the recording layer was 250°C.

The disk surface was uniformly magnetized by applying a magnetic field with an intensity of about 10k Gauss (10 kOe)to this disk so that the magnetic field direction of the electromagnet would be the same as the rotational direction of the disk.

Here, the magnetic intensity B (Gauss) and the magnetic field H (Oe) have the relation of B=µH (µ represents the magnetic permeability) wherein u is 1 in air. Accordingly, when the value of the magnetic intensity measured is 10k Gauss, it is equal to the application of a magnetic field of 10 kOe.

Then, while rotating the disk at a rotational speed of 1,000 rpm, an argon laser having a wavelength of 514.5 nm was pulsed and irradiated under such conditions that the duty: 20%, the power (energy density): 110 mW, and the beam diameter: 15 µm (the diameter corresponding to 1/e² of the peak energy was taken as the beam diameter), whereby the irradiated portion was heated to a level close to the Curie temperature to erase magnetism.

The presence or absence of formation of the magnetic pattern of this disk was ascertained by developing the magnetic pattern with a magnetic developer and observing it by an optical microscope. As a result, a magnetic pattern which agrees to the pattern of the pulsed laser, was obtained on the disk surface.

Further, evaluation of clearness of the magnetic pattern was carried out by developing the magnetic pattern by a magnetic developer and observing it by an optical microscope. The results are shown in Table 1. Symbol Δ indicates that the pattern is formed, symbol ○ indicates that the pattern is formed satisfactory, and symbol ⓞ indicates that the pattern is clearly formed.

Further, clearness of the magnetic pattern was confirmed also by reproducing the magnetically patterned signal by means of a MR head having a reproducing element width of 0.9 µm. The 50% magnetization pulse width (i.e. the half value width) of the maximum magnetization in the reproduced signal waveform, was 1.3 µm (which corresponds to the magnetic transition width).

**Table 1**

| | 1-1 | 1-2 | 1-3 | 1-4 | 1-5 | 1-6 | 1-7 | 1-8 | 1-9 |
|---|---|---|---|---|---|---|---|---|---|
| Pattern confirmed by magnetic development | Δ | Δ | Δ | Δ | ○ | ⓞ | ⓞ | ⓞ | ⓞ |
| Magnetic transition width (µm) | 1.3 | 1.2 | 1.1 | 1.3 | 1.1 | 0.25 | 0.28 | 0.26 | 0.32 |

### EXAMPLE 1-2

A magnetic disk prepared in the same manner as in Example 1-1 was uniformly magnetized in the same manner as in Example 1-1.

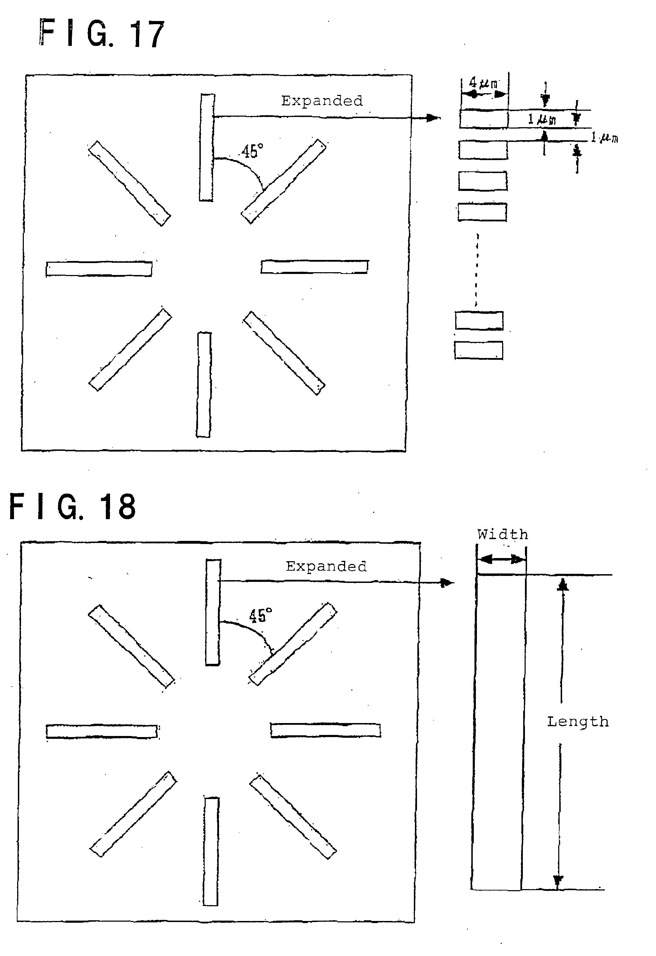

Then, a Cr mask was prepared which had transmitting portions and non-transmitting portions formed by recesses and projections (height: about 20 nm) of Cr on glass. As shown in Figure 17, a transmission pattern repeated every 1 µm in the radial direction between a position at a radius of 15 mm to a position at a radius of 30 mm, is repeated every 45° in the circumferential direction. The projections are non-transmitting portions, and the recesses are transmitting portions, and the projections are closer to the disk.

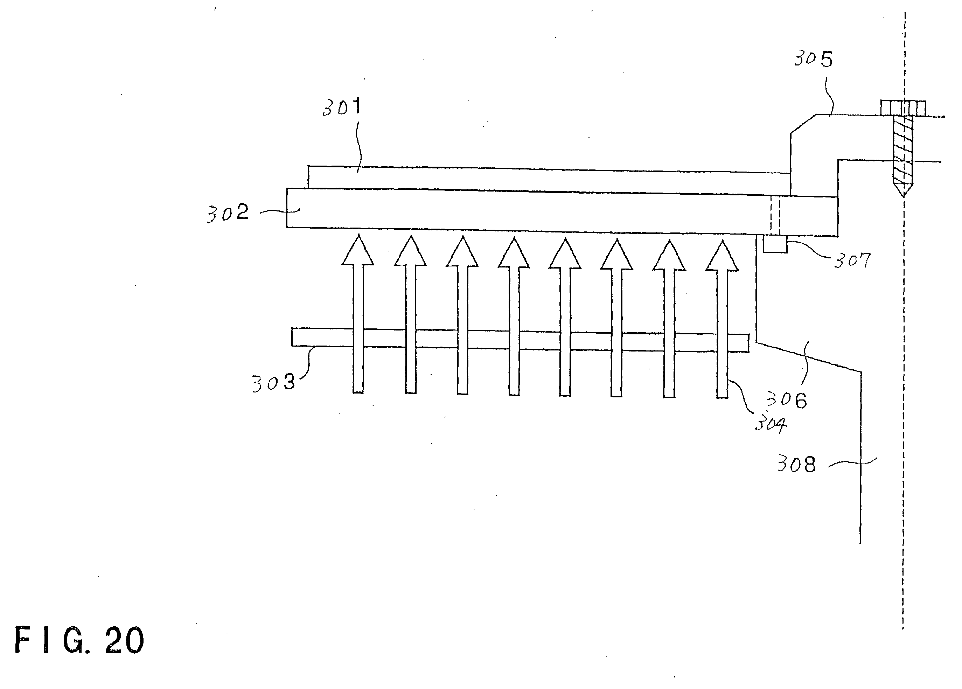

Figure 20 is a diagram illustrating an embodiment of a magnetic pattern forming device used in this Example. On a turntable 306 fixed to a rotatable spindle 308, a mask 302 having a desired pattern formed and a magnetic disk 301 are mounted and then fixed at a fixing portion 305 of the mask and the disk by e.g. a screw and thereafter vacuum-fixed by a groove 307. A laser 304 emitted from a laser source not shown and passed through an objective lens via various optical systems, is passed through a shading plate 303 and projected on the magnetic disk 301. The beam shape of the laser 304 becomes a sectorial shape after passing through the shading plate, and it enters into the mask 302 and will be irradiated to the disk 301 in correspondence with the pattern shape. Although not shown, fine recesses and projections corresponding to the pattern to be formed, are formed on the mask 302.

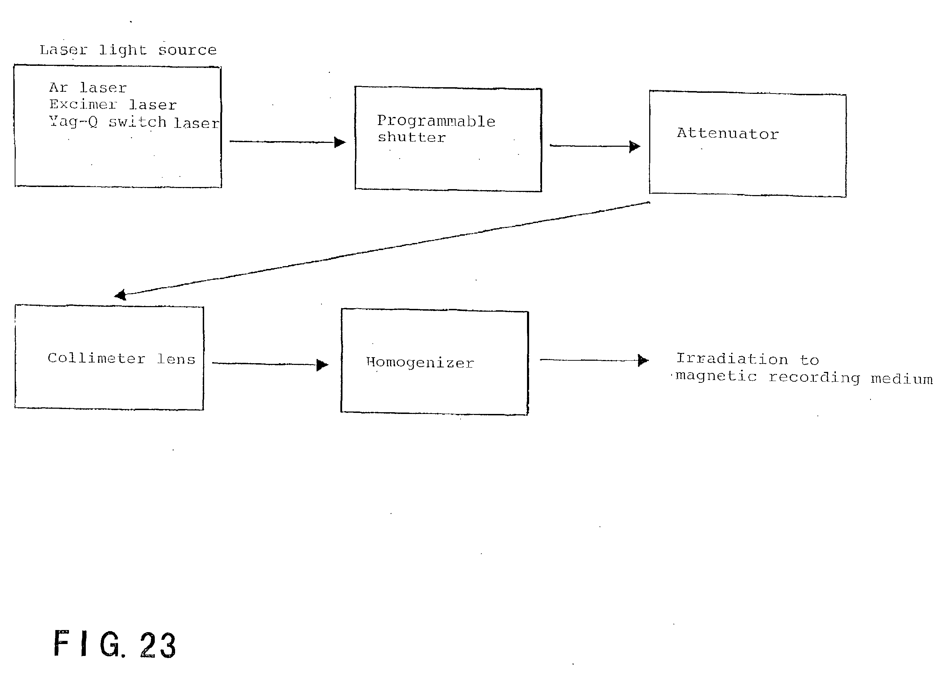

Figure 23 is a diagram illustrating an embodiment of the optical system for laser irradiation. The laser emitted from the laser source is passed through a programmable shutter and then via an attenuator, a collimeter lens to enlarge the beam diameter and to make a parallel light and a homogenizer to make the beam intensity uniform, irradiated to the magnetic recording medium (the magnetic disk).

The mask and the magnetic disk were mounted on the device shown in Figure 20, and the mask was brought in close contact with the magnetic disk. While rotating the magnetic disk at a rotational speed of 1,000 rpm, an argon laser having a wavelength of 514.5 nm was continuously irradiated with a power of 110 mW and a beam diameter of 15 µm to heat the irradiated portion to a level close to the Curie temperature to erase magnetism. The laser irradiation optical system shown in Figure 23 was employed. The energy density in this case was about 104 mJ/cm², which corresponds to a pulsed laser having a pulse width of 4.8 µsec at the outermost portion, when irradiation to the transmitting portion of the mask is pulsed. As described above, the laser was irradiated to form a magnetic pattern on the disk.

Evaluation of the prepared disk was carried out in the same manner as in Example 1-1. The results are shown in Table 1. The half value width of the reproduced signal waveform, was 1.2 µm.

Further, the laser was irradiated via the mask along a full circle of the disk, whereby the repetitive patterns of the transmitting portions and non-transmitting portions of the mask were obtained over the entire area irradiated by the laser.

Then, by the Raman spectroscopy, peaks of graphite and diamond were measured to confirm damages to the protective layer by the laser irradiation. If the protective layer is damaged, the peak intensity of diamond after irradiation with the laser beam should decrease and the peak intensity of graphite should increase. However, in this Example, the peak ratio did not change before and after the irradiation. Further, the number average molecular weight and the weight average molecular weight of the lubricant were measured to confirm the presence or absence of damages such as decomposition or polymerization. However, again, no difference was observed before and after the laser irradiation.

If the method of this Example is applied for the formation of a servo pattern of a magnetic disk, it is possible to obtain a magnetic disk having a servo pattern of high precision simply and in a short period of time. Further, with a magnetic disk device employing such a magnetic disk, it is possible to carry out tracking with a high precision without necessity to record a servo pattern anew, and to carry out recording at a high density.

### EXAMPLE 1-3

An aluminosilicate type glass substrate having a diameter of 2.5 inch was washed and dried, and 300 nm of Ni₅₀Fe₅₀, 30 nm of Tb₂₀Fe₆₈Co₁₂ as a recording layer, 2 nm of Cr as a first protective layer and 5 nm of carbon (diamond-like carbon) as a second protective layer, were formed thereon under such conditions that the ultimate vacuum degree: 1.2×10⁻⁶ Torr, the substrate temperature: room temperature, the sputtering gas: Ar, the gas pressure: 3×10⁻³ Torr, and the bias voltage: 0V.

The surface roughness Ra was 0.8 nm, and the surface undulation Wa was 1.0 nm. As a lubricant layer, a fluorine type lubricant was coated thereon in a thickness of 1.5 nm and baked at 100°C for 40 minutes to obtain a perpendicularly recording magnetic disk having a saturated magnetization of 70 emu/cc and a perpendicular coercive force of 3,500 Oe. The Curie temperature of the recording layer was 230°C.

The disk surface was uniformly magnetized by applying a magnetic field with an intensity of about 10k Gauss to the disk so that the magnetic field direction of the electromagnet would be perpendicular to the disk surface. Then, the laser irradiated portions were heated to a level close to the Curie temperature to erase magnetism in the same manner as in Example 1-1 except that the power was changed to 130 mW.

Evaluation of the prepared disk was carried out in the same manner as in Example 1-1. The results are shown in Table 1.

### EXAMPLE 1-4

A magnetic disk was prepared in the same manner as in Example 1-1. While rotating this disk at a rotational speed of 1,000 rpm, an argon laser having a wavelength of 514.5 nm was pulsed and irradiated at a duty of 20%, with a power of 70 mW and with a beam diameter of 15 µm. At the same time, to the recording layer, a magnetic field was applied for magnetization in a rotational direction of the disk by a magnetic head at a recording current of 15 mA. Evaluation of the prepared disk was carried out in the same manner as in Example 1-1. The results are shown in Table 1.

### EXAMPLE 1-5

A magnetic disk prepared in the same manner as in Example 1-1 was uniformly magnetized in the same manner as in Example 1-1. Then, while rotating the disk at a rotational speed of 1,000 rpm, an argon laser having a wavelength of 514.5 nm was pulsed and irradiated at a duty of 20%, with a power of 100 mW and with a beam diameter of 15 µm. At the same time, to the recording layer, a magnetic field was applied for magnetization in a direction opposite to the rotational direction of the disk by a magnetic head having a recording current of 15 mA. Evaluation of the prepared disk was carried out in the same manner as in Example 1-1. The results are shown in Table 1.

### EXAMPLE 1-6

A magnetic disk prepared in the same manner as in Example 1-1 was uniformly magnetized in the same manner as in Example 1-1. Then, a Cr mask was prepared which had transmitting portions and non-transmitting portions formed by recesses and projections (height: about 20 nm) of Cr on glass. As shown in Figure 18, a transmission pattern having a length of 15 mm in the radial direction (radius: 15 mm to 30 mm) and a width of 2 µm in a circumferential direction is repeated every 45° in the circumferential direction. The magnetic disk was placed thereon.

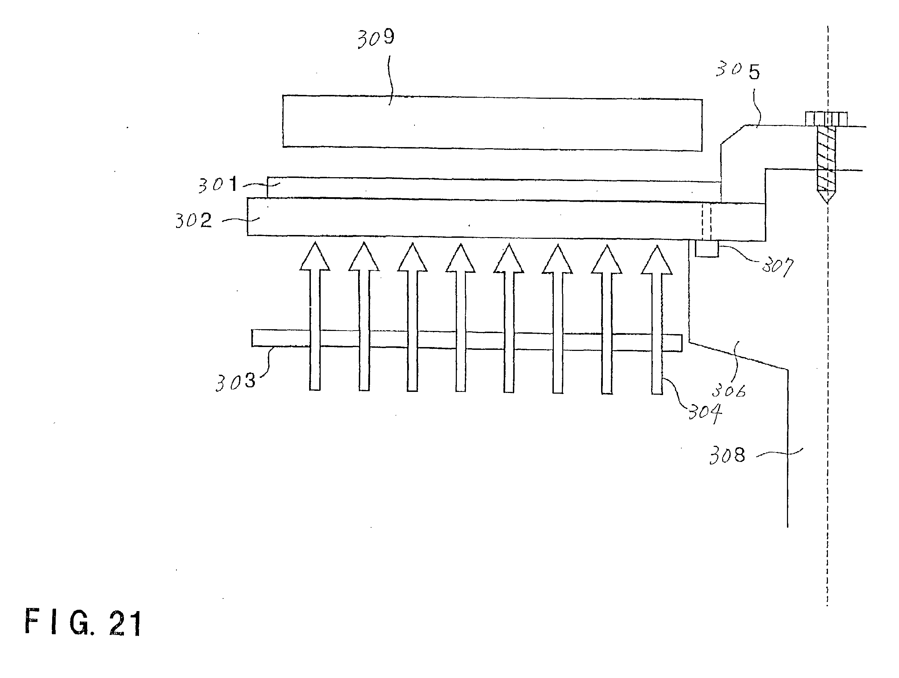

Figure 21 is a diagram illustrating another embodiment of a magnetic pattern forming device. In addition to the device shown in Figure 20, a magnet 309 is disposed as an external magnetic field applying means, so that the external magnetic field can be applied at the same time as the heating by the laser irradiation.

The mask and the magnetic disk were mounted on the device of Figure 21, and an excimer laser was irradiated from the mask side. While the angle is adjusted so that the transmission pattern would be at the center of the laser spot, an excimer laser having a wavelength of 248 nm and a pulse width of 25 nsec, was irradiated at a frequency of 10 Hz, with a power of 80 mJ/cm² and with a beam shape of 10 mm × 30 mm to heat the irradiated portion to a level close to the Curie temperature. The laser irradiation optical system shown in Figure 23 was employed. At the same time, by means of a permanent magnet, a magnetic field of about 1.5k Gauss was applied to the energy beam-irradiated portions in a direction opposite to the initial uniform magnetization. A magnetic pattern was thus formed.

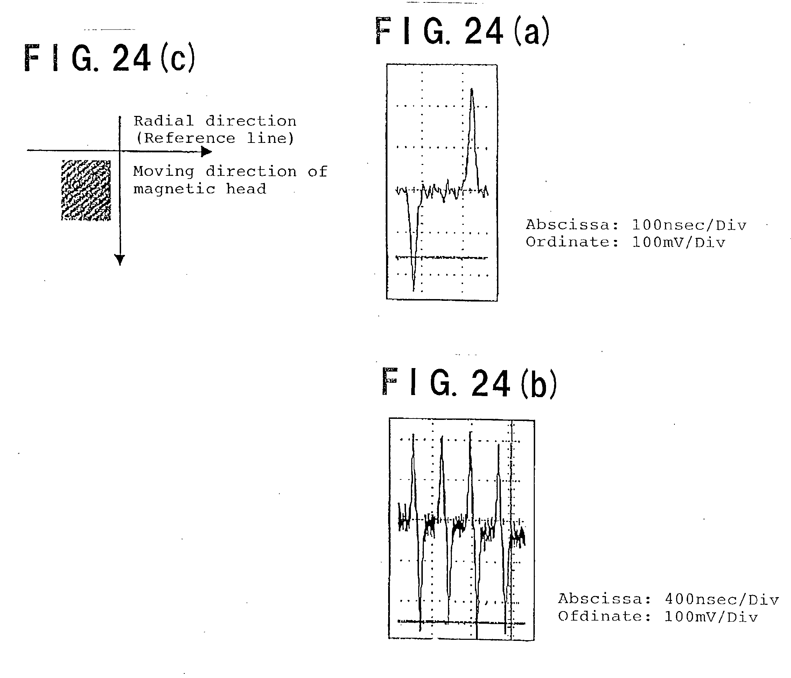

Evaluation of the prepared disk was carried out in the same manner as in Example 1-1. The results are shown in Table 1. Further, the obtained reproduced signal waveform is shown in Figure 24(a). The half value width of the reproduced signal waveform was 0.25 µm.

The damages to the protective layer and the lubricant layer were evaluated in the same manner as in Example 1-2, and no deterioration of the protective layer or the lubricant layer was observed.

### EXAMPLE 1-7

A NiP-plated Al substrate having a diameter of 3.5 inch was washed and dried, and 60 nm of NiAl, 10 nm of Cr₉₄Mo₆, 25 nm of Co₇₀Cr₁₃Ta₅Pt₁₂ as a recording layer and 5 nm of carbon (diamond-like carbon) as a protective layer, were formed thereon under such conditions that the ultimate vacuum degree: 1×10⁻⁷ Torr, the substrate temperature: 350°C, the bias voltage: -200V, the sputtering gas: Ar, and the gas pressure: 3×10⁻³ Torr.

The surface roughness Ra was 0.6 nm, and the surface undulation Wa was 0.9 nm. As a lubricant layer, a fluorine lubricant was coated thereon in a thickness of 1.5 nm and baked at 100°C for 40 minutes to obtain a magnetic disk having a saturated magnetization of 320 emu/cc and a coercive force of 3,400 Oe at room temperature. The Curie temperature of the recording layer was 350°C.

The disk was uniformly magnetized in the same manner as in Example 1-1, and then the magnetic disk was placed on the same mask as in Example 1-6 except that the length in the radial direction was 20 mm (radius: from 20 mm to 40 mm).

From the mask side, Q-switch laser of YAG was irradiated. While adjusting the angle so that the transmission pattern would be at the center of the laser spot, the Q-switch laser of YAG having a wavelength of 266 nm and a pulse width of 5 nsec was irradiated over the entire surface of the disk at a frequency of 10 Hz, with a power of 50 mJ/cm² and with a beam diameter of 20 mm, to heat the irradiated portion to a level close to the Curie temperature. During the heating, a magnetic field was applied in the same manner as in Example 1-6. Further, the construction of the optical system and the mechanical system of the device for forming the magnetic pattern was the same as in Example 1-6.

Evaluation of the prepared disk was carried out in the same manner as in Example 1-1. The results are shown in Table 1.

### EXAMPLE 1-8

A magnetic disk was prepared in the same manner as in Example 1-7.

A plurality of permanent magnets attached to a yoke were arranged so that magnets of the same polarity faced each other (with a spacing of 3 mm) with respect to a disk interposed therebetween, and on the same side, the different poles faced each other (with a spacing of 15 mm). As a result, magnetizing means having a magnetic field of about 7k Gauss at the disk surface in a direction tangent to the circumference, were obtained, and while rotating the disk, the disk was uniformly magnetized in the circumferential direction.

Thereafter, the same mask as in Example 1-7 except that the width in the circumferential direction was 0.5 µm, was prepared, and the magnetic disk was placed thereon in the same manner as in Example 1-7, and the disk was heated by laser irradiation, and an external magnetic field was applied in a direction opposite to the initial uniform magnetization during the heating.

Evaluation of the prepared disk was carried out in the same manner as in Example 1-1. The results are shown in Table 1.

### EXAMPLE 1-9

A magnetic disk was prepared in the same manner as in Example 1-8, and the disk was uniformly magnetized in the circumferential direction.

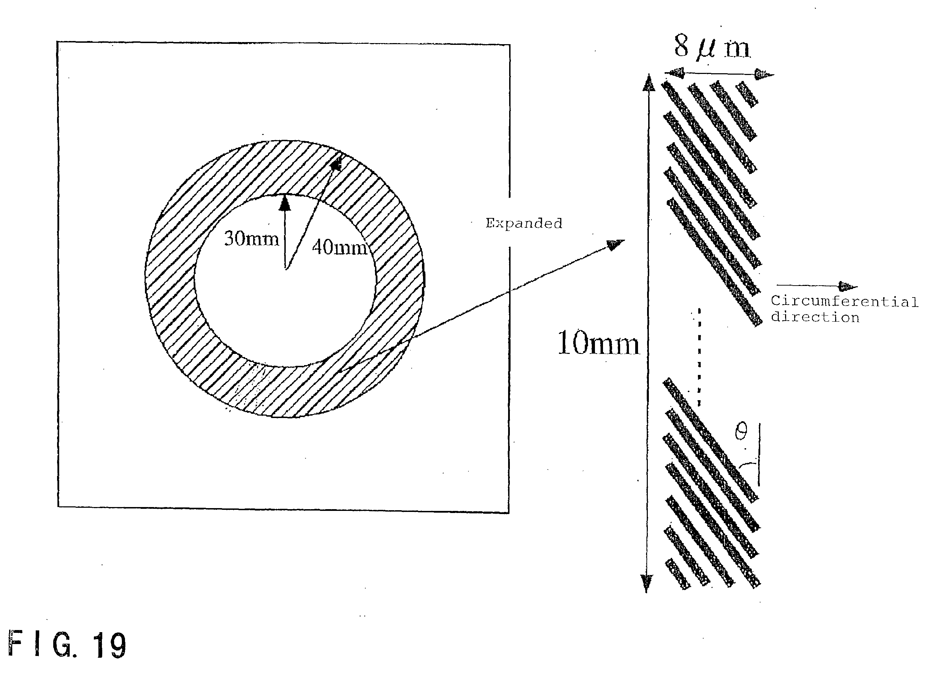

Then, a Cr mask having transmitting portions and non-transmitting portions formed by recesses and projections (height: about 20 nm) of Cr on glass, was prepared. As shown in Figure 19, the mask has transmission patterns having a width of 8 µm repeated in the radial direction for 10 mm (radius: 30 mm to 40 mm). Each pattern consists of pluralities of transmitting portions and non-transmitting portions extending obliquely at an angle θ =35° against the radial direction, and each width is 2 µm.

The magnetic disk was placed thereon in the same manner as in Example 1-7, and the laser was irradiated to heat the disk, and the external magnetic field was applied under the same conditions as in Example 1-7.

Evaluation of the prepared disk was carried out in the same manner as in Example 1-1. The results are shown in Table 1. Further, the obtained reproduced signal waveform is shown in Figure 24(b). The half value width of the reproduced signal waveform was 0.32 µm. A photograph of the obtained oblique magnetic patterns is shown in Figure 24(c).

Damages to the protective layer and the lubricant layer were evaluated in the same manner as in Example 1-2, but no deterioration of the protective layer or the lubricant layer was observed.

With respect to each of the disks of Examples 1-6 to 1-9, a laser was irradiated via a mask over a full circle of the disk, whereby patterns by repetition of the transmitting portions and the non-transmitting portions of the mask were obtained over the entire region irradiated with the laser.

Further, in each of Examples 1-6 to 1-9, the magnetic disk and the Cr mask were in contact with each other by the undulation of the mask or the magnetic disk, and the contact pressure was created by the own weight of the disk, which was about 0.2 g/cm². Namely, the mask and the disk were not brought in close contact with each other, but the disk was simply placed on the mask, whereby even sufficiently fine magnetic patterns could be formed. By such simple placing, it is possible to minimize the possibility of formation of damages and at the same time to form fine patterns.

By applying the method of these Examples, to the formation of a servo pattern of a magnetic disk, it is possible to obtain a magnetic disk having a servo pattern of high accuracy simply and in a short period of time. Further, with a magnetic disk device employing such a magnetic disk, it is possible to carry out tracking with high accuracy without necessity to record a servo pattern anew and to carry out recording at a high density.

### EXAMPLE 2-1

A magnetic disk was prepared in the same manner as in Example 1-1. The surface roughness Ra was 0.6 nm, and the surface undulation Wa was 0.9 nm.

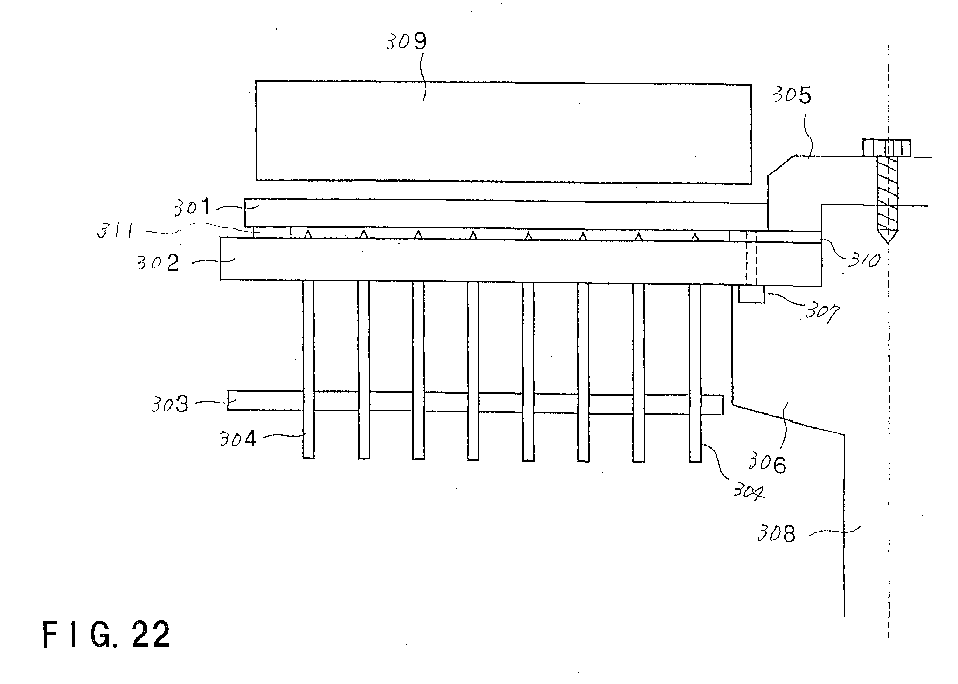

Figure 22 is a diagram illustrating another embodiment of the device for forming a magnetic pattern. The difference from the device shown in Figure 20 is that between the mask 302 and the magnetic disk 301, a spacing is formed by an inner peripheral spacer 310 and an outer peripheral spacer 311, and they are fixed at the fixing portion 305 of the mask and the disk by e.g. a screw, and vacuum-fixed by a groove 307.

The mask and the magnetic disk were mounted on the device of Figure 22 with a spacing of about 10 µm therebetween, and from the mask side, an excimer pulse laser was irradiated. The mask was a Cr mask using quartz glass as the substrate, and the minimum width of the transmitting portions was 1 µm.

An excimer pulse laser having a wavelength of 248 nm and a pulse width of 25 nsec was irradiated with a power of 80 mJ/cm² in a beam shape of 10 mm x 30 mm to heat the irradiated portion to a level close to the Curie temperature. A laser irradiation optical system as shown in Figure 23 was employed. At the same time, by a permanent magnet, a magnetic field of about 2.3k Gauss in the circumferential direction, was applied to the portion irradiated with the energy beam. A magnetic pattern was thereby formed.

Evaluation of the prepared disk was carried out in the same manner as in Example 1-1. The results are shown in Table 2. Further, damages to the protective layer and the lubricant layer were evaluated in the same manner as in Example 1-2, but no deterioration of the protective layer or the lubricant layer was observed.

If the method of this Example is applied to the formation of a servo pattern of a magnetic disk, it is possible to obtain a magnetic disk having a servo pattern with high accuracy simply and in a short period of time. Further, with a magnetic disk device employing such a magnetic disk, it is possible to carry out tracking with high accuracy without necessity to record a servo pattern anew and to carry out recording at a high density.

**Table 2**

| | 2-1 | 2-2 | 2-3 | 2-4 | 2-5 | 2-6 | 2-7 | 2-8 | 2-10 | 2-11 |
|---|---|---|---|---|---|---|---|---|---|---|
| Pattern confirmed by magnetic development | Δ | Δ | ○ | ○ | ⓞ | ⓞ | ⓞ | ○ | ⓞ | ○ |
| Pattern confirmed by oscilloscope | Yes | Yes | Yes | Yes | Yes | Yes | Yes | Yes | Yes | Yes |
| Magnetic transition width (µm) | 0.43 | 0.42 | 0.27 | 0.39 | 0.25 | 0.22 | 0.22 | 0.31 | 0.34 | 0.26 |

### EXAMPLE 2-2

A magnetic disk was prepared in the same manner as in Example 2-1 except that a NiP-plated Al substrate having a diameter of 3.5 inch was used. The surface roughness Ra was 0.6 nm, and the surface undulation Wa was 0.9 nm.

The disk was uniformly magnetized in the circumferential direction by an external magnetic field of 10k Gauss, and then, in the same manner as in Example 2-1, an excimer pulse laser was irradiated via a mask. At the same time of the irradiation of laser, a magnetic field of about 4k Gauss was applied in a direction perpendicular to the main surface of the magnetic recording medium. A magnetic pattern was thus formed. Evaluation was carried out in the same manner as in Example 2-1, and the results are shown in Table 2.

### EXAMPLE 2-3

A magnetic disk prepared in the same manner as in Example 2-1 except that a NiP-plated Al substrate having a diameter of 3.5 inch was used, was uniformly magnetized in the circumferential direction by an external magnetic field of 10k Gauss, and then, in the same manner as in Example 2-1, an excimer pulse laser was irradiated via a mask, and simultaneously, an external magnetic field was applied in a direction opposite to the initial uniform magnetization. Evaluation was carried out in the same manner as in Example 2-1, and the results are shown in Table 2.

Further, a magnetic pattern was formed on the magnetic recording medium under the same conditions, and the magnetic pattern was reproduced by means of a MR head with a reproduction element width of 0.9 µm, whereby the peak output (peak-to-peak) of solitary waves was measured. The results are shown in Table 3.

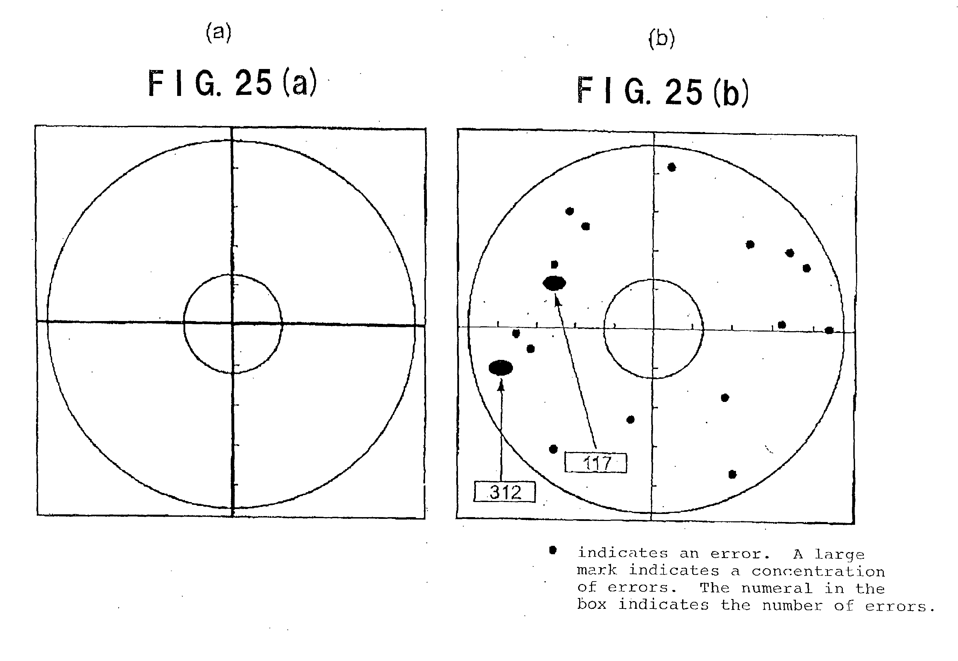

Further, the number of missing pulses on the magnetic pattern-formed surface was evaluated with a recording element width of 1.1 µm, a reproducing element width of 0.7 µm, a flying height of 1.3 µm, a recording frequency of 160 kFCI, a checking pitch of 1 µm and a slice level of 65%. Figure 25(a) shows the results of mapping the number of missing pulses on the medium. No large defects were observed.

When the magnetic pattern forming method of the present invention is applied to writing a servo pattern on a magnetic disk, a clear servo pattern can be formed, and it is also possible to suppress formation of defects. Accordingly, with a magnetic disk device employing such a magnetic disk, it is possible to carry out recording at a high density with high reliability.

**Table 3**

| | Example 2-7 | Example 2-3 | Example 2-8 |
|---|---|---|---|
| Pulse width | 15 nsec | 25 nsec | 50 nsec |
| Reproduction output (R-P) | 1,360 mV | 1,160 mV | 400 mV |

### EXAMPLE 2-4

A magnetic disk was prepared in the same manner as in Example 2-1. Ra was 0.5 nm, and Wa was 0.8 nm.

The disk was uniformly magnetized in the circumferential direction by an external magnetic field of 10k Gauss, and then, in the same manner as in Example 2-1, an excimer pulse laser was irradiated via a mask. At the same time of the irradiation of laser, a magnetic field of about 4k Gauss was applied in a direction perpendicular to the main surface of the magnetic recording medium. A magnetic pattern was thus formed. Evaluation was carried out in the same manner as in Example 2-1, and the results are shown in Table 2.

### EXAMPLE 2-5

A magnetic disk was prepared in the same manner as in Example 2-1. Ra was 0.5 nm, and Wa was 0.8 nm.

The disk was uniformly magnetized in the circumferential direction by an external magnetic field of 10k Gauss, and then, in the same manner as in Example 2-1, an excimer pulse laser was irradiated via a mask, and simultaneously, the external magnetic field was applied in a direction opposite to the initial uniform magnetization. Evaluation was carried out in the same manner as in Example 2-1, and the results are shown in Table 2.

### EXAMPLE 2-6

An aluminosilicate type glass substrate having a diameter of 2.5 inch was washed and dried, and 500 nm of Ni₅₀Fe₅₀, 30 nm of TbFeCo as a recording layer, and 5 nm of carbon (diamond-like carbon) as a protective layer, were formed thereon under such conditions that the ultimate vacuum degree: 1×10⁻⁷ Torr, the substrate temperature: 350°C, the bias voltage: -200V, the sputtering gas: Ar, and the gas pressure: 3×10⁻³ Torr. Ra was 0.8 nm, and Wa was 1.0 nm. As a lubricant layer, a fluorine type lubricant was coated thereon in a thickness of 1.5 nm and baked at 100°C for 40 minutes. The obtained perpendicularly recording magnetic disk had a saturated magnetization of 70 emu/cc, a coercive force of 4,000 Oe at room temperature and a Curie temperature of 230°C.

The obtained disk was uniformly magnetized in a direction perpendicular to the main surface of the magnetic recording medium by an external magnetic field of 10k Gauss.

Then, in the same manner as in Example 2-1, an excimer pulse laser was irradiated via a mask. Simultaneously, as the external magnetic field, a magnetic field of about 4k Gauss was applied in a direction perpendicular to the main surface and opposite to the direction of the initial uniform magnetization of the magnetic recording medium. A magnetic pattern was thus formed. Evaluation was carried out in the same manner as in Example 2-1, and the results are shown in Table 2.

### EXAMPLE 2-7

A magnetic disk was prepared in the same manner as in Example 2-1 except that a NiP-plated Al substrate having a diameter of 3.5 inch was used. The surface roughness Ra was 0.6 nm, and the surface undulation Wa was 0.9 nm.

The mask was uniformly magnetized in the circumferential direction by an external magnetic field of 10k Gauss, and then an excimer pulse laser was irradiated via a mask in the same manner as in Example 2-1 except that the pulse width was changed to 5 nsec, and simultaneously, the external magnetic field was applied in a direction opposite to the initial uniform magnetization. A magnetic pattern was thus formed. Evaluation was carried out in the same manner as in Example 2-3, and the results are shown in Tables 2 and 3.

### EXAMPLE 2-8

A magnetic disk was prepared in the same manner as in Example 2-1 except that a NiP-plated Al substrate having a diameter of 3.5 inch was used. The surface roughness Ra was 0.6 nm, and the surface undulation Wa was 0.9 nm.

The disk was uniformly magnetized in the circumferential direction by an external magnetic field of 10k Gauss, and then, an excimer pulse laser was irradiated via a mask in the same manner as in Example 2-1 except that the pulse width was changed to 50 nsec, and simultaneously, the external magnetic field was applied in a direction opposite to the initial uniform magnetization. A magnetic pattern was thus formed. Evaluation was carried out in the same manner as in Example 2-3, and the results are shown in Tables 2 and 3.

### EXAMPLE 2-9

A magnetic disk was prepared in the same manner as in Example 2-3 and uniformly magnetized in the circumferential direction by an external magnetic field. Then, a Cr mask using quartz glass as the substrate and having a minimum width of transmitting portions of 1 µm was placed on the disk with a spacing of about 10 µm, and a Q-switch laser of YAG having a wavelength of 266 nm was irradiated with a pulse width of 5 nsec and with the beam diameter and the power changed as shown in Table 4, and at the same time, a magnetic field of about 2.3k Gauss was applied by a permanent magnet in a direction opposite to the direction of the initial uniform magnetization, in an attempt to form a magnetic pattern.

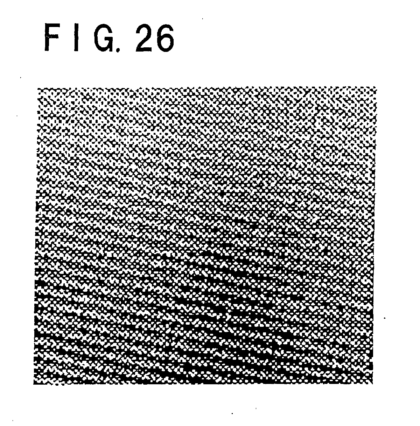

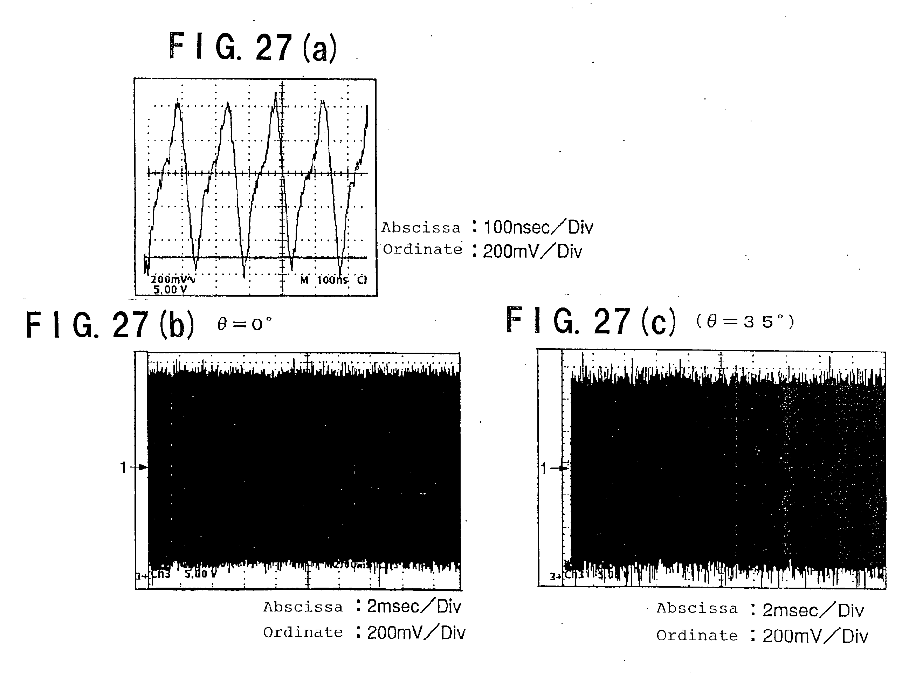

Evaluation was carried out in the same manner as in Example 2-3, and the results are shown in Table 4. A clear magnetic pattern was formed with a power within a range of from about 30 to 65 mJ/cm². Yet, it was clearer than the magnetic pattern formed in Example 2-3. This is considered to be attributable to the fact that the pulse width was shortened to 5 nsec. Figure 26 shows a microscopic photograph (magnification: 329 times) in a case where the power was 49.8 mJ/cm². Further, the output waveform is shown in Figure 27(a).

**Table 4**

| Energy density (mJ/cm²) | Spot diameter (mmφ) | Evaluation of magnetic pattern |
|---|---|---|
| 20.4 | 25 | ○ |
| 21.2 | 23 | ○ |
| 31.8 | 20 | ⓞ |
| 39.3 | 18 | ⓞ |
| 49.8 | 16 | ⓞ |
| 64.0 | 14 | ⓞ |
| 75.4 | 13 | ⓞ |

### EXAMPLE 2-10

In the same manner as in Example 2-3, a magnetic disk was prepared and uniformly magnetized in the circumferential direction with an external magnetic field.

Then, a Cr mask having transmitting portions and non-transmitting portions formed by recesses and projections (height: about 20 nm) of Cr on glass, was prepared. As shown in Figure 19, the mask had transmitting patterns having a width of 8 µm repeated in a radial direction for 10 mm (radius: 30 mm to 40 mm). Each pattern consists of pluralities of transmitting portions and non-transmitting portions extending obliquely at an angle θ=35° based on the radial direction, and each width is 2 µm.

Using this mask, an excimer pulse laser was irradiated to the magnetic disk in the same manner as in Example 2-1, and simultaneously, the external magnetic field was applied in a direction opposite to the initial uniform magnetization. Evaluation was carried out in the same manner as in Example 2-1, and the results are shown in Table 2.

Further, Figure 27(c) shows an envelope of the reproduction output waveform of the obtained magnetic pattern. For the purpose of comparison, Figure 27(b) shows the reproduced signal waveform when a magnetic pattern was formed in the same manner in a case where in the mask of Figure 19, the transmitting portions were formed at an angle θ=0° instead of θ=35° based on the radial direction, i.e. with no inclination. As mentioned above, heretofore, with an inclined pattern, the output tended to decrease. Whereas, according to this Example, even with an inclined pattern, no substantial change in the output was observed.

### EXAMPLE 2-11

A magnetic disk was prepared in the same manner as in Example 2-1 except that a NiP-plated Al substrate having a diameter of 3.5 inch was used. The surface roughness Ra was 0.6 nm, and the surface undulation Wa was 0.9 nm.

The mask was uniformly magnetized in the circumferential direction by an external magnetic field of 10k Gauss.

Then, the mask was placed on the disk, and the pressure between the disk and the mask was reduced to bring them in close contact with each other, and an excimer pulse laser was irradiated via the mask in the same manner as in Example 2-1 except that the pulse width was changed to 50 nsec, and simultaneously, the external magnetic field was applied in a direction opposite to the initial uniform magnetization. A magnetic pattern was thus formed. Evaluation was carried out in the same manner as in Example 2-3, and the results are shown in Tables 2 and 3.

Further, the number of missing pulses on the magnetic pattern-formed surface was evaluated in the same manner as in Example 2-3. The results are shown in Figure 25(b). Large defects corresponding to 312 missing pulses and 117 missing pulses were observed at two locations.

### EXAMPLE 3-1

A magnetic disk was prepared in the same manner as in Example 1-1. The surface roughness Ra was 0.5 nm, and the surface undulation Wa was 0.8 nm.

Then, inspection of defects by a magnetic head was carried out over the entire surface of this magnetic disk, and then a magnetic pattern was formed as follows.

The magnetic disk was mounted on the magnetic pattern forming device as shown in Figure 3 and uniformly magnetized in the circumferential direction of the disk by applying an external magnetic field of 10k Gauss. Then, the external magnetic field-applying means were changed to the construction of the device as shown in Figure 4, and using substantially the same optical system as in Figure 5, an excimer pulse laser was irradiated to form a magnetic pattern.

After fixing the magnetic disk on a spindle, a mask having transmitting portions with a width of 1 µm and a length of 15 mm (radius: 15 mm to 30 mm) formed radially every 45°, as shown in Figure 18, was placed on the magnetic disk with a spacing of about 10 µm, and the two were rotated at 2 rpm. The mask was one using quartz glass as the base material and having non-transmitting portions formed by a Cr layer having a thickness of 20 nm.

An excimer pulse laser having a wavelength of 248 nm was generated with a pulse width of 25 nsec, with a power of 44 mJ/cm² in a beam shape of 10 mm x 30 mm. The energy density (power) distribution of the beam was measured by a beam profiler manufactured by COHERENT Co., whereby the energy density distribution was about 30% in the short axis direction and 10% in the long axis direction. A tripartition prism array having a focal distance of 100 mm was placed at a laser irradiation opening, and the laser was divided into three portions in the short axis direction and then put together to obtain a beam with a power density of 80 mJ/cm² and a beam shape of 5 mm x 30 mm. The energy density distribution was suppressed to a level of about 10% in each of the short axis direction and the long axis direction.

Thereafter, the laser was irradiated repeatedly at a frequency of 1 Hz for 60 pulses through a shading plate having transmitting portions of a sectorial shape with an angle of 6°, and at the same time, a magnetic field of about 2.3k Gauss was applied in a direction opposite to the initial uniform magnetization, in an attempt to print the magnetic pattern.

The presence or absence of formation of a magnetic pattern was confirmed by developing the magnetic pattern by a magnetic developer and observing it by an optical microscope. As a result, it was found that patterns corresponding to the transmitting portions and the non-transmitting portions of the mask were printed on the magnetic disk.

Further, the magnetic pattern was reproduced by a MR head for hard disk having a reproducing element width of 0.9 µm, and the waveform was confirmed by an oscilloscope. Output of the waveform observed was equal to the output of the magnetic pattern written by means of a usual magnetic head.

Then, the change in the output was measured over a full circle at a position of 31.5 mm in the radial direction from the center of the disk and was found to be within a range of ±5% of the average value of the output, which was equal to a case where writing was carried out by a magnetic head.

### EXAMPLE 3-2

A magnetic disk was prepared in the same manner as in Example 3-1. Then, inspection of defects was carried out by a magnetic head over the entire surface of this magnetic disk, and then printing of the magnetic pattern was attempted in the same manner as in Example 3-1 except for the optical system.

A Q-switch 4th harmonic wave pulse laser of YAG having a wavelength of 266 nm was generated with a pulse width of 5 nsec, a power of 318 mJ/cm² and a beam shape of 8 mm in diameter. The energy density distribution was a doughnut shape, and there was a high density portion along the outer side, and the distribution was 30%.

The laser was enlarged by a beam expander and then passed through a 21 partition prism array to divide the beam, and the divided beams were then put together. Further, by means of an image lens, the length was stretched three times only in a monoaxial direction to obtain a beam with a power of 73 mJ/cm² and a beam shape of 12 mm x 36 mm. The energy density distribution was suppressed to about 10% in each of the short axis direction and the long axis direction.

Thereafter, the laser was irradiated repeatedly at a frequency of 1 Hz for 30 pulses by placing a shading plate having transmitting portions of a sectorial shape with an angle of 12°, and at the same time, a magnetic field of about 2.3k Gauss was applied in a direction opposite to the initial uniform magnetization, in an attempt to print the magnetic pattern.

The presence or absence of formation of the magnetic pattern was confirmed, whereby it was found that patterns corresponding to the transmitting portions and non-transmitting portions of the mask were printed on the magnetic disk.

Further, the magnetic pattern was reproduced by a MR head for hard disk with a reproducing element width of 0.9 µm, and the waveform was confirmed by an oscilloscope. The output of the waveform observed, was equal to the output of the magnetic pattern written by means of a usual magnetic head.

Then, the change in the output was measured over a full circle at a position of 31.5 mm in a radial direction from the center of the disk, whereby the change was found to be within a range of ±5% of the average value of the output, which was equal to a case where writing was carried out by a magnetic head.

### EXAMPLE 3-3

A magnetic disk was prepared in the same manner as in Example 3-1. Then, inspection of defects by a magnetic head was carried out over the entire surface of this magnetic disk, and then printing of the magnetic pattern was attempted. The same conditions as in Example 3-1 were employed except that without using a tripartition prism array for the optical system, the laser was irradiated repeatedly at a frequency of 1 Hz for 30 pulses through a shading plate having transmitting portions of a sectorial shape with an angle of 12°. Namely, the pulse width was 25 nsec, the power was 44 mJ/cm², the beam shape was 10 mm x 30 mm, and the energy density distribution was about 30% in the short axis direction and 10% in the long axis direction.

The presence or absence of formation of the magnetic pattern was confirmed, whereby it was found that patterns corresponding to the transmitting portions and the non-transmitting portions of the mask were printed on the magnetic disk.

Further, the magnetic pattern was reproduced by a MR head for hard disk having a reproducing element width of 0.9 µm, and the waveform was confirmed by an oscilloscope. The output of the waveform observed was equal to the output of the magnetic pattern written by means of a usual magnetic head.

Then, the change in the output was measured over a full circle at a position of 31.5 mm in a radial direction from the center of the disk, whereby the change was within ±15% of the average value of the output, which was inferior to a case where writing was carried out by a magnetic head.

### EXAMPLE 4-1

A magnetic disk was prepared in the same manner as in Example 1-1. The surface roughness Ra was 0.5 nm, and the surface undulation Wa was 0.8 nm.

On the obtained disk, a magnetic pattern was formed as follows.

The magnetic disk was mounted on the magnetic pattern forming device as shown in Figure 3 and uniformly magnetized in the circumferential direction of the disk by applying an external magnetic field of 10k Gauss. Then, the external magnetic field-applying means was changed to the construction of the device as shown in Figure 7, and using an optical system shown in Figure 8, an excimer pulse laser was irradiated to form a magnetic pattern.

In the optical system for pulse laser irradiation, an excimer pulse laser source with a wavelength of 248 nm was employed as the energy beam source, and a pulse laser having a pulse width of 25 nsec and a beam diameter of 10 mm x 30 mm was emitted. One pulse was taken out therefrom by a programmable shutter, and the intensity was adjusted by an attenuator so that the power on the magnetic disk would be about 80 mJ/cm².

Then, the beam was condensed so that the intensity distribution within the beam becomes uniform at the mask surface by a condensing lens composed of a combination of a plano convex lens and an aspheric lens having a diameter of 50 mm, to obtain a patterning energy beam via the mask.

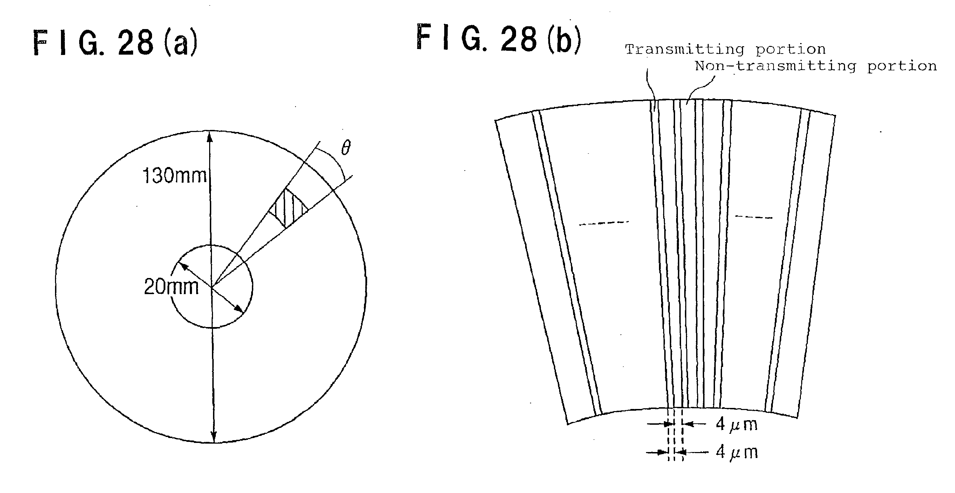

Figure 28 shows a schematic view of the mask employed. Figure 28(a) shows the entire mask, and Figure 28(b) is an enlarged view of a mask region. The mask is made of quartz glass as the base material, and recesses and projections are formed by the presence or absence of a Cr layer having a thickness of about 20 nm (the projections correspond to the non-transmitting portions, and the recesses correspond to transmitting portions). The mask has an inner diameter of 20 mm (radius: 10 mm) and an outer diameter of 130 mm (radius: 65 mm) and transmitting portions are patterned within a range of from 40 mm to 50 mm in the radial direction with an angle θ within a range of 5°.

Figure 28(b) shows an enlarged view. 300 Transmitting portions made of long linear lines of 10 mm extending in the radial direction, are formed. The minimum width in the peripheral direction of the transmitting portions and the non-transmitting portions is 4 µm.

The patterning energy beam was reduced and projected to form a reduced image on the medium surface by an imaging lens having a diameter of 20 mm placed so that the focal point of the above-mentioned condensing lens would be located at the center. The reduction ratio was 1/4. Namely, a pattern on the mask was reduced to 1/4 in both length and width and projected to from such a reduced image on the disk. At the same time, a magnetic field of about 1.5k Gauss was applied by a permanent magnet in a direction opposite to the initial magnetization in the circumferential direction.

Evaluation of the magnetic pattern formed was carried out by developing the magnetic pattern by a magnetic developer and observing it by an optical microscope. As a result, it was found that 300 magnetic patterns with a width of 1 µm were formed.

### EXAMPLE 4-2

A magnetic disk was prepared in the same manner as in Example 4-1, and then, a magnetic pattern was formed as follows.

The magnetic disk was mounted on the magnetic pattern forming device as shown in Figure 3 and uniformly magnetized in the circumferential direction of the disk by applying an external magnetic field of 10k Gauss. Then, the external magnetic field-applying means was changed to the construction of the device as shown in Figure 7, and an excimer pulse laser was irradiated by means of an optical system shown in Figure 9 to form a magnetic pattern.

In the optical system for pulse laser irradiation, a 4th harmonic wave Q-switch laser source of YAG having a wavelength of 266 nm was used as the energy beam source, and the beam was emitted with a pulse width of 5 nsec and a beam diameter of 8 mm. One pulse was taken out therefrom by a programmable shutter, and the intensity was adjusted by an attenuator so that the power on the magnetic disk would be about 50 mJ/cm². Then, the beam was enlarged to have a beam diameter of 24 mm by a threefold beam expander.

Then, the beam was condensed so that the intensity distribution in the beam would be uniform on the mask surface by a condensing lens composed of a combination of a planoconvex lens and an aspheric lens having a diameter of 50 mm, to obtain a patterning energy beam via the mask.

The mask employed was substantially the same as shown in Figure 28, but transmitting portions were patterned within a range covering a radius of from 40 mm to 48 mm and an angle θ=15°. Namely, 800 transmitting portions made of long linear lines of 8 mm were formed in the radial direction. The minimum width in the circumferential direction of the transmitting portions and the non-transmitting portions was 4 µm.

The patterning energy beam was reduced and projected to form a reduced image on the medium surface by an imaging lens having a diameter of 20 mm, which was placed so that the focal point of the above-mentioned condensing lens would be located at the center. The reduction ratio was 1/4. Namely, a pattern on the mask was reduced to 1/4 in both length and width and projected to form a reduced image on the disk. At the same time, a magnetic field of about 1.5k Gauss was applied by a permanent magnet in a direction opposite to the initial magnetization in the circumferential direction.

Evaluation of the magnetic pattern formed, was carried out by developing the magnetic pattern by a magnetic developer and observing it by an optical microscope. As a result, it was found that 800 magnetic patterns with a width of 1 µm were formed.

Further, with respect to the disks of Example 4-1 and 4-2, the presence or absence of damages to the protective layer by the laser irradiation was confirmed by measuring the peaks of graphite and diamond by a Raman spectroscopy. If the protective layer is damaged by the laser, the peak intensity of diamond decreases and the peak intensity of graphite increases after the laser irradiation. However, in this Example, the peak ratios did not change as between before and after the irradiation.

Also with respect to damages (decomposition, polymerization) of the lubricant, the presence or absence of damages was confirmed by measuring the number average molecular weight and the weight average molecular weight before and after the laser irradiation, whereby again, no difference was observed as between before and after the irradiation.

If the method of Examples 4-1 and 4-2 is applied to the formation of a servo pattern of a magnetic disk, it is possible to obtain a magnetic disk having a servo pattern with high accuracy simply and in a short period of time. Further, with a magnetic disk device employing such a magnetic disk, it is possible to carry out tracking with high precision without necessity to record a servo pattern anew and to carry out recording at a high density.

### EXAMPLE 5-1

A magnetic disk was prepared in the same manner as in Example 1 except for the preparation of the lubricant layer. The surface roughness Ra was 0.5 nm, and the surface undulation Wa was 0.5 nm.

A fluorine type lubricant layer was formed thereon by a dipping and withdrawing method. A solution prepared by diluting Fomblin-Z-DOL4000 manufactured by Ausimont Co. with a flon type solvent PF5060, was filled in a tank, and a disk was dipped therein. Then, the solution was withdrawn at a rate of 10 liter/min to form a lubricant layer. This was baked at 100°C for 40 minutes, whereupon the thickness of the lubricant layer was measured by means of FT-IR and found to be 1.5 nm.

Thus, a longitudinally recording magnetic disk having a saturated magnetization of 310 emu/cc and a coercive force of 3,000 Oe at room temperature, was obtained. The Curie temperature of the recording layer was 250°C.

Then, inspection of defects was carried out by a magnetic head over the entire surface of this magnetic disk.

Then, to form a magnetic pattern, the magnetic disk was fixed on a spindle, and then a mask having transmitting portions with a width of 1 µm and a length of 15 mm (a radius of from 15 mm to 30 mm) formed radially every 45° as shown in Figure 18, was placed on the magnetic disk with a spacing of about 10 µm, and the two were rotated at 2 rpm. The mask was made of quartz glass as the base material and had non-transmitting portions formed by a Cr layer having a thickness of 20 nm.

To this disk, an excimer pulse laser having a wavelength of 248 nm was irradiated via the mask. An excimer pulse laser with a pulse width of 25 nsec, a power of 80 mJ/cm² and a beam diameter of 10 mm x 30 mm was irradiated repeatedly at a frequency of 1 Hz for 30 pulses by installing, at the laser irradiation port, a shading plate of a sectorial shape with an angle of 12°, and at the same time, a magnetic field of about 2.3k Gauss was applied by a permanent magnet in a circumferential direction of the magnetic disk in an attempt to print the magnetic pattern.

The presence or absence of the formation of the magnetic pattern was confirmed by developing the magnetic pattern by a magnetic developer and observing it by an optical microscope. As a result, it was found that patterns corresponding to the transmitting portions and the non-transmitting portions of the mask were printed on the magnetic disk.

Using FT-IR, the layer thickness of the lubricant was examined and found to have decreased to 1.0 nm. The same fluorine type lubricant as for the first time, was coated by a spin coater while rotating the medium at 80 rpm, and then dried at a rotational speed of 4,000 rpm, to recoat the lubricant. After the coating, the lubricant layer thickness was measured by means of FT-IR and found to be 1.7 nm. This magnetic disk was subjected to CSS test, whereby no head crush took place until 200,000 times.

Further, a magnetic pattern was formed on a magnetic disk under the same conditions, and the magnetic pattern was reproduced by a MR head for hard disk having a reproducing element width of 0.9 µm, and its waveform was confirmed by an oscilloscope. The output of the waveform observed was equal to the output of the magnetic pattern written by means of a usual magnetic head.

### EXAMPLE 5-2

A magnetic disk was prepared in the same manner as in Example 5-1. Then, inspection of defects was carried out by a magnetic head over the entire surface of this magnetic disk.

Then, by means of an ultrasonic cleaning apparatus, cleaning and removal of the lubricant was carried out with a solvent which was used for diluting the lubricant. The film thickness of the lubricant was measured by means of FT-IR, whereby no lubricant was found to be present.

To this magnetic disk, printing of a magnetic pattern in the same manner as in Example 5-1 was attempted.

The presence or absence of the formation of the magnetic pattern was confirmed, whereby it was found that the patterns corresponding to transmitting portions and non-transmitting portions of the mask were printed on the magnetic disk.

Then, the same fluorine type lubricant as for the first time, was coated by means of a spin coater, while rotating the medium at 80 rpm, and rotated at 4,000 rpm for drying, whereby the lubricant was re-coated. After the coating, the lubricant layer thickness was measured by means of FT-IR and found to be 1.5 nm.

Further, under the same conditions, a magnetic pattern was formed on a magnetic disk, and reproduction was carried out in the same manner as in Example 5-1, whereby the output of the waveform observed was equal to the output of the magnetic pattern written by means of a usual magnetic head.

### EXAMPLE 5-3

A magnetic disk was prepared in the same manner as in Example 5-1 except that as a lubricant layer, a fluorine type lubricant was coated in a thickness of 0.7 nm by a dipping and withdrawing method. A solution having Fomblin-Z-DOL4000 manufactured by Ausimont Co. diluted with a flon type solvent PF5060, was filled in a tank, and the disk was immersed. Then, the solution was withdrawn at a rate of 5 liter/min to form a lubricant layer, which was baked at 100°C for 40 minutes. Using FT-IR, the lubricant layer was measured and found to be 0.7 nm.

Then, inspection of defects was carried out by a magnetic head over the entire surface of this magnetic disk. 10,000 Pieces of such a magnetic disk were prepared.

To these magnetic disks, formation of a magnetic pattern was continuously carried out in the same manner as in Example 5-1. The same mask was used without changing it, but no stain of the mask was observed. With respect to the first piece, the 1,000th piece, the 3,000th piece, the 5,000th piece and the 10,000th piece of disks, the following evaluation was carried out.

The presence or absence of the formation of a magnetic pattern was confirmed, whereby it was found that with all the disks, patterns corresponding to transmitting portions and non-transmitting portions of the mask were printed on the magnetic disks.

Then, the same fluorine type lubricant as for the first time, was coated by means of a spin coater while rotating the medium at 80 rpm, and then rotated at 3,000 rpm for drying, whereby the lubricant was re-coated. After the coating, the lubricant layer thickness was measured by means of FT-IR and found to be 1.7 nm.

The formed magnetic pattern was reproduced by means of a MR head for hard disk having a reproducing element width of 0.9 µm, and the waveform was observed, whereby the output of the waveform was equal to the output of the magnetic pattern written by means of a usual magnetic head. Further, CSS test was carried out, whereby no head crush took place until 200,000 times.

### EXAMPLE 5-4

A magnetic disk was prepared in the same manner as in Example 5-1 except that no lubricant layer was formed. Then, inspection of defects was carried out by an optical surface inspection apparatus of a non-contact type over the entire surface of this magnetic disk.

10,000 Pieces of such a magnetic disk were prepared.

To these magnetic disks, formation of a magnetic pattern was continuously carried out in the same manner as in Example 5-1. The same mask was used without changing it, whereby no stain of the mask was observed. With respect to the first piece, the 1,000th piece, the 3,000th piece, the 5,000th piece and the 10,000th piece of disks, the following evaluation was carried out.

The presence or absence of the formation of a magnetic pattern was confirmed, whereby it was found that with the all disks, patterns corresponding to the transmitting portions and non-transmitting portions of the masks were printed on the magnetic disks.

Then, a fluorine type lubricant was coated by a dipping and withdrawing method and baked at 100°C for 40 minutes. The lubricant layer thickness was measured by means of FT-IR and found to be 1.5 nm.

The formed magnetic pattern was reproduced by means of a MR head for hard disk having a reproducing element width of 0.9 µm, and the waveform was confirmed by an oscilloscope. The output of the waveform observed was equal to the output of the magnetic pattern written by means of a usual magnetic head. Further, CSS test was carried out, whereby no head crush took place up to 200,000 times.

### EXAMPLE 5-5

A magnetic disk was prepared in the same manner as in Example 5-1. Then, inspection of defects was carried out by a magnetic head over the entire surface of this magnetic disk. To this magnetic disk, printing of a magnetic pattern in the same manner as in Example 5-1, was attempted.

The presence or absence of formation of a magnetic pattern was confirmed, whereby it was found that patterns corresponding to the transmitting portions and the non-transmitting portions of the mask were printed to the magnetic disk.

However, when the thickness of the lubricant layer was examined by means of FT-IR, it was found to have decreased to 1.0 nm. This magnetic disk was subjected to CSS test, whereby head crush took place after 20,000 times. It is considered that as the free portion of the lubricant layer disappeared, the durability became inadequate.

Further, a magnetic pattern was formed on a magnetic disk under the same conditions, and the magnetic pattern was reproduced by means of a MR head for hard disk having a reproducing element width of 0.9 µm, and the waveform was confirmed by an oscilloscope. The output of the waveform observed was equal to the output of the magnetic pattern written by means of a usual magnetic head.

### EXAMPLE 5-6

A magnetic disk was prepared in the same manner as in Example 5-1. The thickness of the lubricant layer was 1.5 nm. Then, inspection of defects was carried out by means of a magnetic head over the entire surface of this magnetic disk. 10,000 Pieces of such a magnetic disk were prepared.

To these magnetic disks, formation of a magnetic pattern was continuously carried out in the same manner as in Example 5-1. The same mask was used without changing it, whereby a deposition started to be observed after about 3,000 pieces.

After completion of 10,000 pieces, the thickness of the deposition on the mask was examined by means of FT-IR and found to be 0.20 nm. The deposition on the mask used for this printing was subjected to elemental analysis by a secondary ion mass meter, whereby peaks of carbon and fluorine were detected, and the deposition was found to be the lubricant.

With respect to the first piece, the 1,000th piece, the 3,000th piece, the 5,000th piece and the 10,000th piece of disks, the following evaluation was carried out.

The presence or absence of formation of a magnetic pattern was ascertained, whereby it was found that with all the disks, patterns corresponding to the transmitting portions and the non-transmitting portions of the mask, were printed on the magnetic disks.

However, when the lubricant layer thickness was measured by means of FT-IR, the thickness was found to have decreased to 1.0 nm. These magnetic disks were subjected to CSS test, whereby head crush took place after 20,000 times. It is considered that as the free portion of the lubricant layer disappeared, the durability became inadequate.

The formed magnetic pattern was reproduced by means of a MR head for hard disk having a reproducing element width of 0.9 µm, and the waveform was confirmed by an oscilloscope. The output of the waveform observed, gradually decreased as compared with the output of the magnetic pattern written by means of a magnetic head, and it became 90% at the 3,000th piece, 85% at the 5,000th piece and 80% at the 10,000th piece. The signal intensity was also found to have decreased accordingly.

According to the present invention, it is possible to present a method for producing a magnetic recording medium having high impact resistance and high durability, whereby patterns can be formed efficiently with high precision. Further, it is possible to present a magnetic recording medium and a magnetic recording device having high durability and being capable of high density recording, in a short period of time and at low costs.

## Claims

1. A method for forming a magnetic pattern in a magnetic recording medium having a magnetic layer, a protective layer and a lubricant layer formed on a substrate in this order, the method being characterized by comprising a step of heating locally the magnetic layer and a step of applying an external magnetic field to the magnetic layer.

2. The method for forming a magnetic pattern according to Claim 1, wherein the thickness of the lubricant layer is 10 nm or less.

3. The method for forming a magnetic pattern according to Claim 1 or 2, wherein the thickness of the protective layer is 50 nm or less.

4. The method for forming a magnetic pattern according to Claim 3, wherein the protective layer is composed of a carbon material.

5. The method for forming a magnetic pattern according to Claim 4, wherein the protective layer is composed of diamond-like carbon.

6. The method for forming a magnetic pattern according to any one of Claims 1 to 5, wherein the surface roughness Ra of the magnetic recording medium after the formation of the magnetic pattern is 3 nm or less.

7. The method for forming a magnetic pattern according to any one of Claims 1 to 6, wherein the magnetic pattern is a control pattern having information for controlling a recording/reproducing magnetic head.

8. The method for forming a magnetic pattern according to Claim 7, wherein the control pattern includes a servo pattern for controlling the position of the recording/reproducing magnetic head or a standard pattern for recording the servo pattern.

9. The method for forming a magnetic pattern according to any one of Claims 1 to 8, wherein the magnetic pattern includes a pattern extending in an oblique direction with respect to the running direction of the magnetic head.

10. The method for forming a magnetic pattern according to any one of Claims 1 to 9, wherein the minimum width of the magnetic pattern is 2 µm or less.

11. The method for forming a magnetic pattern according to any one of Claims 1 to 10, wherein after the external magnetic field has been applied to magnetize the magnetic layer in a predetermined direction, the magnetic layer is locally heated and at the same time, an external magnetic field is applied whereby the heated area is magnetized in the direction opposite to the predetermined direction.

12. The method for forming a magnetic pattern according to any one of Claims 1 to 11, wherein the magnetic layer is locally heated by energy beams.

13. The method for forming a magnetic pattern according to Claim 12, wherein the energy beams are pulsed energy beams.

14. The method for forming a magnetic pattern according to Claim 13, wherein the power per 1 pulse of the pulsed energy beams is 1,000 mJ/cm² or less.

15. The method for forming a magnetic pattern according to any one of Claims 12 to 14, wherein the time width of heating by the energy beams at the same position is 1 µsec or less.

16. The method for forming a magnetic pattern according to any one of Claims 12 to 15, wherein the density distribution of energy of the energy beams is 15% or less.

17. The method for forming a magnetic pattern according to any one of Claims 12 to 16, wherein the energy beams are previously subjected to an intensity distribution equalizing treatment.

18. The method for forming a magnetic pattern according to Claim 17, wherein the intensity distribution equalizing treatment is conducted by dividing the energy beams into a plurality of portions and overlapping the divided portions.

19. The method for forming a magnetic pattern according to any one of Claims 12 to 18, wherein the energy beams are irradiated to the magnetic recording medium through a mask.

20. The method for forming a magnetic pattern according to Claim 19, wherein the mask has a transmitting portion which allows a part of the energy beams to pass therethrough.

21. The method for forming a magnetic pattern according to Claim 19 or 20, wherein the mask and the medium are arranged with a space therebetween in at least an area where the magnetic pattern is formed in the magnetic recording medium.

22. The method for forming a magnetic pattern according to Claim 21, wherein the space between the mask and the magnetic recording medium is 1 µm or more.

23. The method for forming a magnetic pattern according to any one of Claims 19 to 22, wherein a shading plate capable of selectively shielding the energy beams is located in a desired area between the energy beam source for the energy beams and the mask or between the mask and the magnetic recording medium.

24. The method for forming a magnetic pattern according to any one of Claims 12 to 23, wherein an image is formed in the medium surface by reducing the size of the energy beams for patterning having an intensity distribution corresponding to the magnetic pattern to be formed.

25. The method for forming a magnetic pattern according to Claim 24, wherein the image is formed by changing the intensity distribution of the energy beams so as to correspond to the magnetic pattern to be formed to obtain the energy beams for patterning, and reducing the size of the energy beams.

26. The method for forming a magnetic pattern according to Claim 25, wherein the intensity distribution of the energy beams is changed by passing the beams through a mask having a transmitting portion which allows a part of the energy beams to pass selectively.

27. The method for forming a magnetic pattern according to any one of Claims 24 to 26, wherein the magnetic recording medium is a magnetic disk having a diameter of 65 mm or less.

28. The method for forming a magnetic pattern according to any one of Claims 1 to 27, wherein a second lubricant layer is formed after the formation of the magnetic pattern.

29. The method for forming a magnetic pattern according to any one of Claims 1 to 28, wherein the magnetic recording medium has a hub structure in a central portion of the substrate and the magnetic pattern is formed by taking the revolution center of the hub structure as standard.

30. A magnetic recording medium characterized in that a magnetic pattern is formed by the magnetic pattern forming method described in any one of Claims 1 to 29.

31. A magnetic recording device characterized by comprising a magnetic recording medium in which a magnetic pattern is formed by the magnetic pattern forming method described in any one of Claims 1 to 29, driving means for driving the magnetic recording medium in a recording direction, a magnetic head having a recording portion and a reproducing portion, means for moving relatively the magnetic head with respect to the magnetic recording medium, and recording/reproducing signal processing means which supplies a recording signal to the magnetic head and receives a reproducing signal from the magnetic head.

32. The magnetic recording device according to Claim 31, wherein after the magnetic recording medium has been assembled in the magnetic recording device, the magnetic head reproduces the magnetic pattern to produce signals, and servo burst signals produced based on the signals are recorded by means of the magnetic head.

33. A magnetic pattern forming device wherein a magnetic pattern is formed in a magnetic recording medium having a magnetic layer on a substrate by using a step of irradiating energy beams to the magnetic recording medium to locally heat the magnetic layer, and a step of applying an external magnetic field to the magnetic layer, said magnetic pattern forming device being characterized by comprising:
medium holding means for holding the magnetic recording medium,
external magnetic field applying means for applying the external magnetic field to the magnetic recording medium,
an energy beam source for emitting energy beams,
projection means for projecting and irradiating the energy beams from the energy beam source to the magnetic recording medium,
intensity distribution equalizing means for equalizing the intensity distribution of the energy beams emitted from the energy beam source is disposed between the energy beam source and the projection means, and
a mask which is located between the intensity distribution equalizing means and the magnetic recording medium to change the intensity distribution of the energy beams in response to a magnetic pattern to be formed.

34. The magnetic pattern forming device according to Claim 33, wherein the mask has a transmitting portion for allowing a part of the energy beams to pass selectively.

35. The magnetic pattern forming device according to Claim 33 or 34, wherein the energy beam source is a pulsed laser beam source.

36. The magnetic pattern forming device according to any one of Claims 33 to 35, wherein the intensity distribution equalizing means is adapted to divide the energy beams into a plurality of portions and overlap the divided portions.

37. The magnetic pattern forming device according to any one of Claims 33 to 36, wherein the projection means is imaging means located between the mask and the magnetic recording medium to reduce the size of the energy beams for patterning having an intensity distribution to thereby form a reduced image in the medium surface.

38. The magnetic pattern forming device according to Claim 37, wherein a condenser lens is disposed between the energy beam source and the mask.

39. A method for producing a magnetic recording medium having a magnetic layer, a protective layer and a lubricant layer formed on a substrate in this order wherein a magnetic pattern is formed in the magnetic layer, the method being characterized by comprising a step of forming the magnetic layer and the protective layer on the substrate, a step of forming the lubricant layer on the protective layer, and a step of forming the magnetic pattern by heating locally the magnetic layer together with the application of an external magnetic field.

40. The method for producing a magnetic recording medium according to Claim 39, wherein the lubricant layer is formed after the formation of the magnetic pattern.

41. The method for producing a magnetic recording medium according to Claim 40, wherein a first lubricant layer is previously formed prior to the formation of the magnetic pattern and a second lubricant layer is formed after the formation of the magnetic pattern.

42. The method for producing a magnetic recording medium according to Claim 41, wherein after the first lubricant layer has been formed, inspection to the magnetic recording medium is carried out with a magnetic head, then, the magnetic pattern is formed, and then, the second lubricant layer is formed.

43. A method for forming a magnetic pattern according to any one of Claims 39 to 42, wherein the magnetic recording medium has a hub structure in a central portion of the substrate and the magnetic pattern is formed by taking the revolution center of the hub structure as standard.

44. A magnetic recording medium produced by the method described in any one of Claims 39 to 43.

45. A magnetic recording device characterized by comprising a magnetic recording medium produced by the method described in any one of Claims 39 to 43, driving means for driving the magnetic recording medium in a recording direction, a magnetic head having a recording portion and a reproducing portion, means for moving relatively the magnetic head with respect to the magnetic recording medium, and recording/reproducing signal processing means which supplies a recording signal to the magnetic head and receives a reproducing signal from the magnetic head.

46. The magnetic recording device according to Claim 45, wherein after the magnetic recording medium has been assembled in the magnetic recording device, the magnetic head reproduces the magnetic pattern to produce signals, and servo burst signals produced based on the signals are recorded by means of the magnetic head.
